(19) 
Europäisches
Patentamt
European
Patent Office
Office européen
des brevets

(11) **EP 1 786 139 A1**

(12) **EUROPEAN PATENT APPLICATION**
published in accordance with Art. 158(3) EPC

(43) Date of publication:
**16.05.2007 Bulletin 2007/20**

(21) Application number: **05770461.1**

(22) Date of filing: **11.08.2005**

(51) Int Cl.:
***H04L 9/32*** *(2006.01)*

(86) International application number:
**PCT/JP2005/014783**

(87) International publication number:
**WO 2006/027933 (16.03.2006 Gazette 2006/11)**

(84) Designated Contracting States:
**BE DE NL**

(30) Priority: **03.09.2004 JP 2004257660**

(71) Applicant: **NEC Corporation**
**Minato-ku**
**Tokyo 108-8001 (JP)**

(72) Inventors:
- **YONEZAWA, Shoko**
  **Tokyo 1088001 (JP)**
- **SAKO, Kazue**
  **Tokyo 1088001 (JP)**

(74) Representative: **Vossius & Partner**
**Siebertstrasse 4**
**81675 München (DE)**

(54) **GROUP SIGNATURE SYSTEM, MEMBER STATE JUDGMENT DEVICE, GROUP SIGNATURE METHOD, AND MEMBER STATE JUDGMENT PROGRAM**

(57) For group signature data capable of keeping anonymity, it is possible to efficiently determine whether the user having created the group signature data is a valid member of the group. When a message and group signature data are received, the verification unit 3 authenticates the data and inquires, of the member status response unit 4, whether the user of the signature unit 2 having created the group signature data is a valid member of the group. In response to the inquiry, the response unit 4 determines the member status of the user having created the group signature data, according to a member revocation list notified from the group management unit 1. The response unit 4 then transmits a judge result of the member status to the verification unit 3.

FIG. 1

MEMBER REGISTRATION CERTIFICATE

GROUP MANAGEMENT UNIT ~1

SIGNATURE UNIT ~2

MEMBER REVOCATION LIST

MESSAGE / GROUP SIGNATURE DATA

MEMBER STATUS RESPONSE UNIT ~4

MEMBER STATUS INQUIRY

MEMBER STATUS RESPONSE

VERIFICATION UNIT ~3

**Description**

TECHNICAL FIELD

The present invention relates to a group signature system, a member status judging device, a group signature method, and a member status judging program capable of confirming member validity. In particular, the present invention relates to a group signature system, a member status judging device, a group signature method, and a member status judging program that inquire a member status and judge whether a user having generated the group signature data is a valid member or an invalid member when group signature data is verified.

RELATED ART

Non-patent article 1 and Non-patent article 2 describe a group signature system which is a signature system and in which a user in a group can generate a signature (group signature data), which indicates that the user belongs to the group, while anonymity is preserved. Also, the group signature system includes, if necessary, a function to identify an actual signer by use of anonymous group signature data.

As shown in non-patent document 1 and non-patent document 2, the group signature system generally includes public information opening means to store and to open various public information, member registration means to register a user to a group, group signature generating or creating means to generate group signature data, group signature verification means to verify integrity of the group signature data, and signer tracing means to identify an actual signer using the group signature data.

In the group signature systems described in non-patent document 1 and non-patent document 2, a terminal (group signature generating means) of a user, a group member, attaches signature data to the message at transmission of a message or the like. In this case, the generating means does not generate signature data indicating that the message has been generated by a particular user, but generates group signature data indicating that the message has been generated by one of the members of the group. Also, an authentication terminal (group signature authentication means) having received the message authenticates the message according to the group signature data attached thereto. In this case, the group signature authentication means does not authenticate that the message has been generated by a particular user, but authenticates that the message has been generated by one of the members of the group.

In the group signature system, it is desired to prevent a user having withdrawn from the group from generating the signature even after the withdrawal by use of information acquired before the withdrawal. However, when the group signature data generated in the group signature system is used, information regarding the user having generated the group signature data cannot be known by use of the group signature data. Therefore, in the group signature system, it is not possible to employ a member revocation method using a Certificate Revocation List (CRL), which is adopted in the digital signature system. In this situation, in the group signature system, to prevent the user having withdrawn from the system from generating the signature, it is considered to use, as the group signature data, data certifying that a value representing the signer is contained in the member list.

For example, non-patent article 3 describes a member revocation method of a group signature system. In the member revocation method described in non-patent article 3, group signature generating means outputs, for a member list including values corresponding valid members, data as group signature data certifying that a value representing the signer is contained in the member list.

References

Non-patent article 1: J. Camenisch and M. Stadler, Efficient Group Signature Schemes for Large Groups, "In Advances in Cryptology CRYPTO '97", LNCS 1294, p. 410-424, Springer-Verlag, 1997.
Non-patent article 2: G. Ateniese, J. Camenisch, M. Joye and G. Tsudik, A Practical and Provable Secure Coalition-Resistant Group Signature Scheme, "In Advances in Cryptology - CRYPTO 2000", LNCS 1880, p.255-270, Springer-Verlag, 2000.
Non-patent article 3: J. Camenisch and A. Lysyanskaya, Dynamic Accumulators and Application to Efficient Revocation of Anonymous Credentials, "In Advances in Cryptology - CRYPTO 2002", LNCS 2442, p.61-76, Springer-Verlag, 2002.

DISCLOSURE OF THE INVENTION

PROBLEMS TO BE SOLVED BY THE INVENTION

In the conventional group signature systems described in non-patent articles 1 and 2, each time a member withdraws from the group, it is required to update all parameters including a public key and a private key. Furthermore, in the conventional group signature system described in non-patent article 3, each member of the group is required to update a private key each time a member of the group withdraws therefrom and a group member qualification is revoked. For example, each member of the group must rewrite a private key stored in an Integrated Circuit (IC) card or the like every time someone's membership is revoked or becomes invalid. Therefore, in the conventional group signature systems, the processing for member revocation is burdensome.

Also, in the conventional group signature system described in non-patent article 3, data indicating that the user is a member of the group can be generated by use of a member list when the user generates the group signature data. However, in the system described in non-patent article 3, it is not possible to confirm validity of the group member at the time of verification of the signature, but only at the time of generation of the signature. Therefore, it is likely to accept a message generated by a user whose membership was valid when he/she signed the message but whose membership has been revoked before the verification of the signature.

It is therefore an objective of the present invention to provide a group signature system, a member status judging device, a group signature method, and a member status judging program capable of efficiently executing processing for member revocation. In addition, another objective of the present invention is to provide a group signature system, a member status judging device, a group signature method, and a member status judging program capable of confirming validity of a group member at the time of verifying group signature data.

MEANS FOR SOLVING THE PROBLEMS

The group signature system in accordance with the present invention is a group signature system for creating signature data for a message and for authenticating whether the signature data has been created by a device of one of members of a group, comprising a member status judging apparatus (implemented by, for example, a member status response unit 4) for judging, in response to a request, a member status indicating whether a user of the device having created the signature data is qualified as a valid member of the group at a present point of time.

Moreover, the group signature system may comprise a group management unit for managing the group by executing member registration processing to register a new member to the group and member revocation processing to revoke qualification as a member of the group member, a signature unit for creating, for the message, group signature data, the group signature data as signature data indicating that the message has been created by a device of either one of the members of the group, and an authentication unit (implemented, for example, by a verification unit 3) for receiving the message and the group signature data from the signature unit and for authenticating the group signature data thus received.

Furthermore, the authentication unit may transmit, if the authentication unit determines that the group signature data has been created by a signature unit of either one of the members of the group, a judge request of a member status to a member status judge unit and the member status judge unit judges, at reception of the judge request of a member status from the authentication unit, a member status of the user of the signature unit having created the group signature data and transmits a judge result of the member status to the authentication unit.

Additionally, the group management unit may issue, to the signature unit of the user who becomes a new member of the group, a member registration certificate indicating that the user is a member of the group, stores, as member information, the member registration certificate and ID information corresponding to the signature unit, and transmits, to the member status judge unit, ID information of a signature unit of an invalid member as a user whose qualification as a member of the group has been revoked; the signature unit creates, at subscription of a user to the group, a group signature key as a encryption key to create group signature data, and creates group signature data according to a message, a random number, the member registration certificate issued from the group management unit, and the group signature key; the authentication unit receives the message and the group signature data from the signature unit and transmits the message and the group signature data to the member status judge unit to thereby inquire, of the member status judge unit, whether the user of the signature unit having created the group signature data has been qualified as a valid member of the group at a present point of time; and the member status judge unit stores a list of ID information corresponding to the signature unit of the invalid member as a member revocation list which is a list of invalid members, receives the message and the group signature data from the authentication unit, authenticates the group signature data, identifies, by use of opening information as an encryption key to open the group signature data, the ID information of the signature unit having created the group signature data, judges, according to the member revocation list and the ID information thus identified, the member status of the user of the signature unit having created the group signature data, and transmits the judge result of the member status to the authentication unit.

In addition, the group management unit may transmit the member registration certificate corresponding to the signature unit of the invalid member to the member status judge unit; and the member status judge unit stores a list of member registration certificates corresponding to the signature units of the invalid members as a member revocation list, receives the message and the group signature data from the authentication unit; authenticates the group signature data, creates signer identifying information as information capable of identifying which one of the users possesses the signature unit having created the group signature data, judges, according to the member revocation list and the signer identifying information thus created, the member status of the user of the signature unit having created the group signature data, and transmits the judge result of the member status to the authentication unit. In such configuration, the group management unit does not transmit the ID information of the signature unit of the invalid member to the member status judge unit. Therefore, even if the message and the group signature data are received, the member status judge unit cannot identify the ID information of the signature unit having created the group signature data. Therefore, the ID information of each signature unit may be kept secret from the member status judge unit.

Moreover, the signature unit may create group signature data by use of a hash value of the message; and the authentication unit conducts authentication of the group signature data using the hash value of the message, and transmits, if the authentication unit determines that the group signature data has been created by a device of one of the members of the group, the hash value of the message and the group signature data to the member status judge unit. In such configuration, the data to be sent to the member status judge unit can be replaced by the hash value of the message, not the message itself. Therefore, the authentication unit can keep the message secret from the member status judge unit.

Furthermore, the signature unit may create a group signature key at subscription of the new user to the group, and creates, according to the message, the random number, the member registration certificate issued from the group management unit, and the group signature key, group signature data including conversion data as data by use of which the group management unit or the member status judge unit can restore the member registration certificate through a predetermined conversion; the authentication unit receives the message and the group signature data from the signature unit and transmits the conversion data included in the group signature data to the member status judge unit to thereby inquire, of the member status judge unit, whether the user of the signature unit having created the group signature data has been qualified as a valid member of the group at a present point of time; and the member status judge unit stores a list of ID information corresponding to the signature unit of the invalid member as a member revocation list, restores, if the member status judge unit receives the conversion data from the authentication unit, the member registration certificate according to the conversion data, and then identifies the ID information of the signature unit, judges whether the member revocation list includes the ID information, determines, if the member status judge unit determines that the member revocation list includes the ID information, that the member status of the user of the signature unit having created the group signature data is invalid at a present point of time, determines, if the member status judge unit determines that the member revocation list does not include the ID information, that the member status of the user of the signature unit having created the group signature data is valid at a present point of time, and transmits the judge result of the member status to the authentication unit. In such configuration, the signature unit produces the group signature data including the conversion data of the member registration certificate. Also, the authentication unit having received the message and the group signature data transmits only the conversion data to the member status judge unit. Therefore, the authentication unit can keep the received message secret from the member status judge unit.

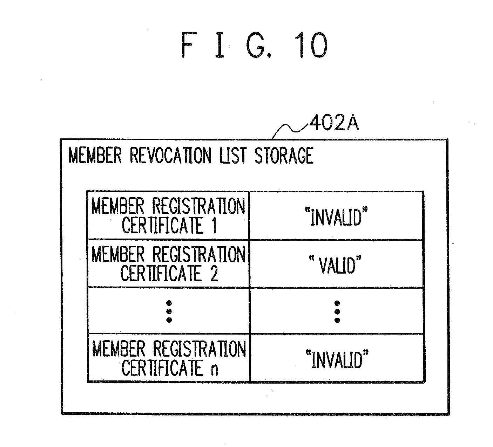

Furthermore, the group management unit may issue, to a signature unit of the user who becomes a new member of the group, a member registration certificate indicating that the user is a member of the group, stores, as member information, the member registration certificate and ID information corresponding to the signature unit, and transmits, to the member status judge unit, a member registration certificate corresponding to a signature unit of a valid member of the group and information indicating that the member status is a valid status, and transmits, to the member status judge unit, a member registration certificate corresponding to a signature unit of an invalid member as a user whose qualification as a member of the group has been revoked and information indicating that the member status is an invalid status; the signature unit creates, at subscription of the user to the group, a group signature key as a encryption key to create group signature data, and creates, according to the message, the random number, the member registration certificate issued from the group management unit, and the group signature key, group signature data including conversion data as data by use of which the group management unit or the member status judge unit can restore the member registration certificate through a predetermined conversion; the authentication unit receives the message and the group signature data from the signature unit and transmits the conversion data included in the group signature data to the member status judge unit to thereby inquire, of the member status judge unit, whether the user of the signature unit having created the group signature data has been qualified as a valid member of the group at a present point of time; and the member status judge unit stores a list of pairs each including a member registration certificate and status information (for example, the member status stored in the member revocation list storage section 402A shown in FIG. 10) indicating that the member status is a valid status or an invalid status with a correspondence established therebetween, as a member revocation list which is a list of invalid members, receives the conversion data from the authentication unit and then restores the member registration certificate according to the conversion data, judges, according to status information included in the member revocation list corresponding to the member registration certificate thus restored, the member status of the user of the signature unit having created the group signature data, and transmits the judge result of the member status to the authentication unit. In such configuration, the authentication unit sends only the conversion data to the member status judge unit. Therefore, the authentication unit can keep the received message from the member status judge unit. Additionally, the group management unit does not transmit the ID information of the signature unit of the invalid member to the member status judge unit. Consequently, the ID information of each signature unit can be kept secret from the member status judge unit.

Moreover, the signature unit may create a group signature key at subscription of the user to the group, and creates, according to the message, the random number, the member registration certificate issued from the group management unit, and the group signature key, group signature data including conversion data as data by use of which the group management unit or the member status judge unit can restore the member registration certificate through a predetermined conversion and proof data indicating that the conversion data has been created by the signature unit; the authentication unit receives the message and the group signature data from the signature unit and transmits the conversion data and the proof data included in the group signature data to the member status judge unit to thereby inquire, of the member status judge unit, whether the user of the signature unit having created the group signature data has been qualified as a valid member of the group at a present point of time; and the member status judge unit receives the conversion data and the proof data from the authentication unit, authenticates the proof data and then restores the member registration certificate according to the conversion data, identifies ID information corresponding to the member registration certificate thus restored, judges the member status of the user of the signature unit having created the group signature data according to the member revocation list and the ID information thus identified, and transmits the judge result of the member status to the authentication unit. In such configuration, the authentication unit sends only the conversion data and the proof data to the member status judge unit. Therefore, the authentication unit can keep the received message secret from the member status judge unit. In addition, the member status judge unit can confirm, by confirming the proof data, whether the data sent from the authentication unit is part of the group signature data.

Furthermore, the member status judge unit may receive the conversion data and the proof data from the authentication unit, authenticates the proof data and then restores the member registration certificate according to the conversion data, judges the member status of the user of the signature unit having created the group signature data according to the member revocation list and the member registration certificate thus restored, and transmits the judge result of the member status to the authentication unit. In such configuration, since the member status can be determined without using the ID information of the signature unit of the invalid member, the ID information of each signature unit can be kept secret from the member status judge unit.

Additionally, the signature unit may create a group signature key at subscription of the user to the group, and creates, according to the message, the random number, the member registration certificate issued from the group management unit, and the group signature key, group signature data including first conversion data as data by use of which the group management unit can restore the member registration certificate through a predetermined conversion, second conversion data as data by use of which the member status judge unit can restore the member registration certificate through a predetermined conversion, first proof data indicating that the second conversion data has been created by the signature unit, and second proof data indicating that the first conversion data and the second conversion data have been created by converting one and the same member registration certificate; the authentication unit receives the message and the group signature data from the signature unit and transmits the second conversion data and the first proof data included in the group signature data to the member status judge unit to thereby inquire, of the member status judge unit, whether the user of the signature unit having created the group signature data has been qualified as a valid member of the group at a present point of time; and the member status judge unit receives the second conversion data and the first proof data from the authentication unit, authenticates the first proof data and then restores the member registration certificate according to the second conversion data, identifies an ID information corresponding to the member registration certificate thus restored, judges the member status of the user of the signature unit having created the group signature data according to the member revocation list and the ID information thus identified, and transmits the judge result of the member status to the authentication unit. In such configuration, the signature unit produces the group signature data including the first conversion data capable of restoring the member registration certificate by use of the opening information of the group management unit and the second conversion data capable of restoring the member registration certificate by use of the opening information of the member status judge unit. Therefore, the group management unit and the member status judge unit can possess mutually different opening information items.

In addition, the member status judge unit may receive the second conversion data and the first proof data from the authentication unit, authenticates the first proof data and then restores the member registration certificate according to the second conversion data, judges the member status of the user of the signature unit having created the group signature data according to the member revocation list and the member registration certificate thus restored, and transmits the judge result of the member status to the authentication unit. In such configuration, since the member status can be determined without using the ID information of the signature unit of the invalid member, the ID information of each signature unit can be kept secret from the member status judge unit.

Furthermore, the group management unit may issue, to a signature unit of the user who becomes a new member of the group, a member registration certificate indicating that the user is a member of the group and signer identifying information (for example, the member trace information) as information capable of confirming that the group signature data has been created by the signature unit of the user, stores, as member information, the member registration certificate, the signer confirming information, and ID information corresponding to the signature unit, and transmits, to the member status judge unit, the signer confirming information corresponding to a signature unit of an invalid member as a user whose qualification as a member of the group has been revoked; and the signature unit creates, at subscription of the user to the group, a group signature key as a encryption key to create group signature data, and creates, according to the message, the random number, the member registration certificate and the signer confirming information issued from the group management unit, and the group signature key, group signature data including conversion data as data capable of restoring the signer confirming information through a predetermined conversion; the authentication unit receives the message and the group signature data from the signature unit and transmits the message and the group signature data to the member status judge unit to thereby inquire, of the member status judge unit, whether the user of the signature unit having created the group signature data has been qualified as a valid member of the group at a present point of time; and the member status judge unit stores a list of the signer confirming information corresponding to the signature unit of the invalid member, as a member revocation list which is a list of invalid members, receives the message and the group signature data from the authentication unit, authenticates the group signature data, judges, according to the member revocation list, the member status of the user of the signature unit having created the group signature data, and transmits the judge result of the member status to the authentication unit. In such configuration, the signature unit produces the conversion data of the signer confirming information as part of the group signature data. And the member status judge unit determines the member status by use of the conversion data. Therefore, the member status judge unit can determine the member status without using the opening information.

Moreover, the group management unit may issue a member registration certificate and signer confirming information to a signature unit of the user who becomes a new member of the group, stores, as member information, the member registration certificate, the signer confirming information, and ID information corresponding to the signature unit, and transmits, to the member status judge unit, the signer confirming information corresponding to the signature unit of the valid member of the group and information indicating that the member status is a valid status, and transmits, to the member status judge unit, the signer confirming information corresponding to the signature unit of the invalid member as a user whose qualification as a member of the group has been revoked and information indicating that the member status is an invalid status; the authentication unit receives the message and the group signature data from the signature unit and transmits the conversion data included in the group signature data to the member status judge unit to thereby inquire, of the member status judge unit, whether the user of the signature unit having created the group signature data has been qualified as a valid member of the group at a present point of time; and the member status judge unit stores a list of signer confirming information corresponding to the invalid member as a member revocation list, receives the conversion data from the authentication unit, judges the member status of the user of the signature unit having created the group signature data according to the member revocation list, and transmits the judge result of the member status to the authentication unit.

Additionally, the group management unit may comprise signature unit identifying means (implemented by, for example, the signer identifying means 108) for identifying the signature unit having created the group signature data.

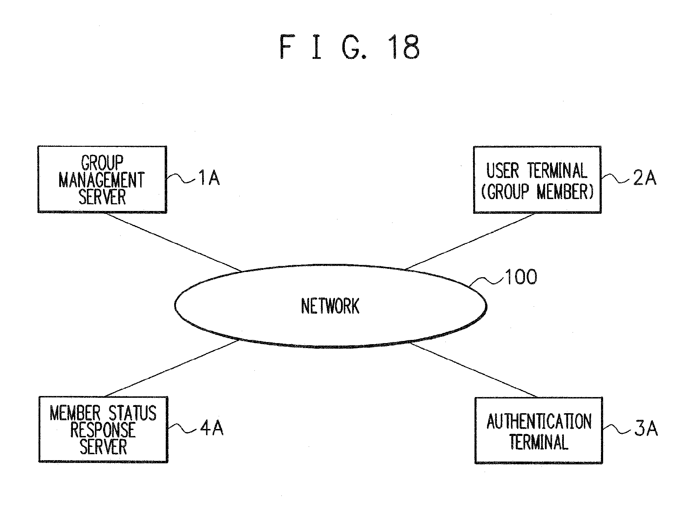

Furthermore, a group signature system for creating signature data for a message and for authenticating whether the signature data has been created by a device of one of members of a group, may comprise a signature terminal for creating (for example, the user terminal 2A shown in FIG. 18) for the message, group signature data as signature data indicating that the message has been created by a terminal of one of the members of the group; an authentication terminal for receiving the group signature data via a communication network from the signature terminal and authenticating the group signature data thus received, and a member status judging server (for example, the member status response server 4A shown in FIG. 18) for judging a member status indicating whether a user of the signature terminal having created the group signature data is qualified as a valid member of the group at a present point of time, wherein the authentication terminal transmits, if the authentication terminal determines that the group signature data has been created by a signature terminal of one of the members of the group, a judge request of the member status via the communication network to the member status judging server; and the member status judging server judges, if the judge request of a member status is received from the authentication terminal, the member status of the user of the signature terminal having created the group signature data.

The member status judge unit in accordance with the present invention is a member status judge unit for judging a member status indicating whether a user of a device having created group signature data as signature data indicating that a message has been created by a device of either one of members of a group has a qualification as a valid member of the group at a present point of time, comprising revocation list storage means (implemented by, for example, the member evocation list storage 402) for storing a member revocation list as a list of invalid members each of which is a user whose qualification as a member of the group has been revoked; judge request receiving means (implemented by, for example, the signature opening means 404) for receiving the judge request of the member status via a communication network from an authentication unit which authenticates the group signature data; status judging means (implemented by, for example, the member status judging means 407) for judging, at reception of the judge request by the judge request receiving means, the member status of the user of the device having created the group signature data according to the member revocation list stored in the revocation list storage means; and judge result transmitting means (implemented by, for example, the member status judging means 407) for transmitting a judge result of the member status judged by the status judging means via a communication network to the authentication unit.

Additionally, the revocation list storage means may store as a member revocation list a list of ID information corresponding to a device of an invalid member; the judge request receiving means receives, as the judge request of the member status, the message and the group signature data; and the status judging means identifies the ID information of the device having the group signature data by use of the message and the group signature data received by the judge request receiving means and opening information as an encryption key to open the group signature data and judges the member status of the user of the device having created the group signature data according to the member revocation list stored in the revocation list storage means and the ID information thus identified.

Furthermore, the revocation list storage means may store as a member revocation list a list wherein a member registration certificate which corresponds to the device of an invalid member and which indicates that the user is a member of the group and status information indicating that the member status is a valid status or an invalid status are stored with a correspondence established therebetween; the judge request receiving means receives from the authentication unit, as the judge request of the member status, conversion data as data capable of restoring the member registration certificate through a predetermined conversion; and the status judging means creates a member registration certificate according to the conversion data received by the judge request receiving means, and judges the member status of the user of the device having created the group signature data according to status information corresponding to the member registration certificate thus created, the status information being selected from the status information included in the member revocation list stored in the revocation list storage means. In such configuration, the authentication unit transmits only the conversion data to the member status judge unit. Therefore, the authentication unit can keep the received message secret from the member status judge unit. Therefore, the ID information of each signature unit may be kept secret from the member status judge unit.

Additionally, the revocation list storage means may store as a member revocation list a list of signer confirming information which corresponds to the device of an invalid member and which is information capable of confirming that the group signature data has been created by the device of a particular user; the judge request receiving means receives, from the authentication unit, the message and the group signature data as the judge request of the member status; and the status judging means judges the member status of the user of the device having created the group signature data according to the message and the group signature data received by the judge request receiving means and the signer confirming information included in the revocation member list stored in the revocation list storage means. In such configuration, the conversion data of the signer confirming information is outputted as part of the group signature data. Moreover, the member status judge unit determines the member status by use of the conversion data. Therefore, the member status judge unit can determine the member status without using the opening information.

The group signature method in accordance with the present invention is a group signature method of creating signature data for a message and authenticating whether the signature data has been created by a device of one of members of a group, comprising creating, by a signature unit for creating signature data, group signature data as signature data indicating that the message has been created by a device of one of the members of the group; transmitting, by the signature unit, the group signature data thus created via a communication network to an authentication unit which authenticates the signature data; authenticating, by the authentication unit, the group signature data received from the signature unit; transmitting by the authentication unit, if the authentication unit determines that the group signature data has been created by a signature unit of one of the members of the group, a judge request of the member status via a communication network to a member status judging server which judges a member status indicating whether the user of the signature unit having created the group signature data has a qualification as a valid member of the group at a present point of time; and judging by member status judging server, if the member status judging server receives the judge request of the member status from the authentication unit, the member status of the user of the signature unit having created the group signature data.

Additionally, the group signature method may further comprise storing, by a member status judge unit, a list of ID information corresponding to a device of an invalid member as a member revocation list which is a list of invalid members as a user whose qualification as a member of the group has been revoked; transmitting, by the signature unit, the message and the group signature data via a communication network to the authentication unit; transmitting, by the authentication unit, if the authentication unit determines that the group signature data has been created by a signature unit of one of members of the group, the message and the group signature data as the judge request of the member status via a communication network to the member status judge unit; identifying, by the member status judge unit, ID information of the signature unit having created the group signature data, by use of the message and the group signature data received from the authentication unit and opening information as an encryption key to open the group signature data; and judging by the member status judge unit the member status of the user of the signature unit having created the group signature data, according to the member revocation list thus stored and the ID information thus identified.

Additionally, the group signature method may further comprise storing, by the member status judge unit, a list of a member registration certificate which corresponds to a device of an invalid member and which indicates that the user is a member of the group and status information indicating that the member status is a valid status or an invalid status with a correspondence established therebetween, the list being a member revocation list which is a list of invalid members as users whose qualification as a member of the group has been revoked; transmitting, by the authentication unit, if the authentication unit determines that the group signature data has been created by a signature unit of one of members of the group, conversion data as data capable of restoring the member registration certificate through a predetermined conversion via a communication network to the member status judge unit, as the judge request of the member status; creating, by the member status judge unit, a member registration certificate according to the conversion data received from the authentication unit; and judging, by the member status judge unit, the member status of the user of the signature unit having created the group signature data according to status information corresponding to the member registration certificate thus created, the status information being selected from the status information included in the member revocation list thus stored. In such configuration, the authentication unit having transmits only the conversion data to the member status judge unit. Therefore, the authentication unit can keep the received message secret from the member status judge unit. In addition, the ID information of each signature unit can be kept secret from the member status judge unit.

Also, the group signature method may further comprise storing, by the member status judge unit, as a member revocation list a list of signer confirming information which corresponds to the device of an invalid member and which is information capable of confirming that the group signature data has been created by the device of a particular user, the member revocation list being a list of invalid members as users whose qualification as a member of the group has been revoked; transmitting, by the signature unit, the message and the group signature data via a communication network to the authentication unit; transmitting, by the authentication unit, if the authentication unit determines that the group signature data has been created by a signature unit of one of members of the group, the message and the group signature data as the judge request of the member status via a communication network to the member status judge unit; and judging, by the member status judge unit, the member status of the user of the signature unit having created the group signature data according to the message and the group signature data received from the authentication unit and the signer confirming information included in the invalid member list thus stored. In such configuration, the conversion data of the signer confirming information is outputted as part of the group signature data. And the member status judge unit determines the member status by use of the conversion data. Therefore, the member status judge unit can determine the member status without using the opening information.

The computer program product in accordance with the present invention is a member status judging program for judging a member status indicating whether a user of a device having created group signature data as signature data indicating that a message has been created by a device of one of members of a group has a qualification as a valid member of the group at a present point of time, the program causing a computer, characterized by comprising revocation list storage means for storing a member revocation list as a list of invalid members each of which is a user whose qualification as a member of the group has been revoked, to execute; receiving a judge request of the member status via a communication network from an authentication unit which authenticates the group signature data; judging, if the judge request is received from the authentication unit, the member status of the user of the device having created the group signature data according to the member revocation list stored in the revocation list storage means; and transmitting the judge result of the member status thus judged via a communication network to the authentication unit.

Also, the computer program may cause a computer, comprising revocation list storage means for storing as a member revocation list a list of ID information corresponding to devices of invalid members, to execute: receiving from the authentication unit, the message and the group signature data as a judge request of the member status; identifying the ID information of the device having created the group signature data by use of the message and the group signature data received from the authentication unit and opening information as an encryption key to open the group signature data; and judging the member status of the user of the device having created the group signature data according to the member revocation list stored in the revocation list storage means and the ID information thus identified.

Moreover, the computer program may cause a computer, comprising revocation list storage means for storing as a member revocation list a list wherein a member registration certificate which corresponds to the device of an invalid member and which indicates that the user is a member of the group and status information indicating that the member status is a valid status or an invalid status are stored with a correspondence established therebetween, to execute: receiving from the authentication unit, as the judge request of the member status, conversion data which is data capable of restoring the member registration certificate through a predetermined conversion; creating a member registration certificate according to the conversion data received from the authentication unit; and judging the member status of the user of the device having created the group signature data according to status information corresponding to the member registration certificate thus created, the status information being selected from the status information included in the member revocation list stored in the revocation list storage means. In such configuration, the authentication unit sends only the conversion data to the member status judge unit. Therefore, the authentication unit can keep the received message secret from the member status judge unit. In addition, the ID information of each signature unit can be kept secret from the member status judge unit.

Furthermore, the computer program may cause a computer, comprising the revocation list storage means for storing as a member revocation list a list of signer confirming information which corresponds to the device of an invalid member and which is information capable of confirming that the group signature data has been created by the device of a particular user, to execute: receiving, from the authentication unit, the message and the group signature data as the judge request of the member status; and judging the member status of the user of the device having created the group signature data according to the message and the group signature data received from the authentication unit and the signer confirming information included in the revocation member list stored in the revocation list storage means. In such configuration, the conversion data of the signer confirming information is outputted as part of the group signature data. And the member status judge unit determines the member status by use of the conversion data. Therefore, the member status judge unit can determine the member status without using the opening information.

ADVANTAGES OF THE INVENTION

According to the embodiments, a member status judging device to judge a member status is newly introduced. Also, at authentication of the group signature data, an inquiry about whether the membership of the user of the device or unit having created the group signature data has been revoked is issued to the member status judging device. Since the judgment of the member status validity can be entrusted to the judging device, the necessity of updating parameters including a private key when some member withdraws can be removed. Therefore, the processing for member revocation can be efficiently executed.

BEST MODE FOR CARRYING OUT THE INVENTION

First embodiment

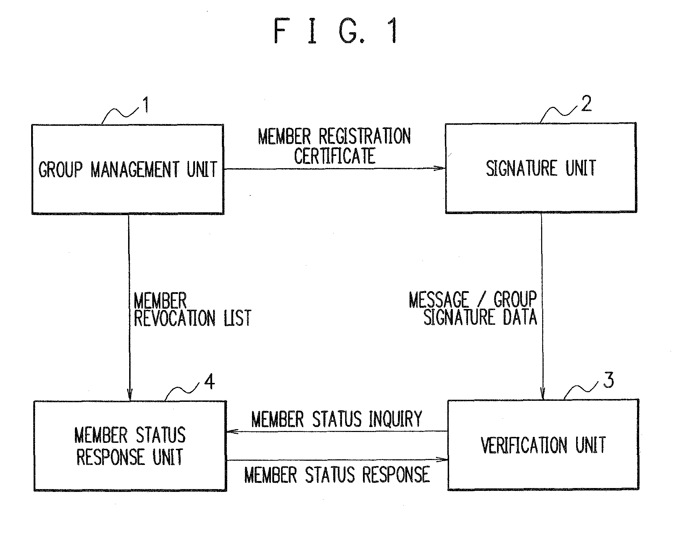

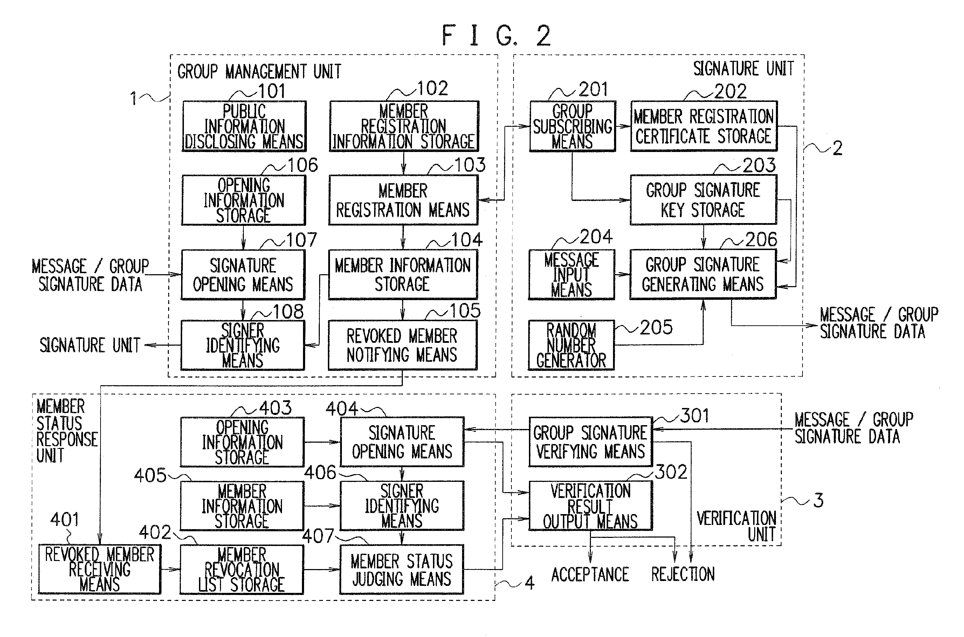

Next, description will be given of a first embodiment of the present invention by referring to drawings. FIG. 1 is a block diagram showing an example of a configuration of a group signature system in accordance with the present invention. As shown in FIG. 1, the group signature system includes a group management unit 1, a signature unit 2, a verification unit 3, and a member status response unit 4. FIG. 2 is a block diagram showing an example of a detailed configuration of the group signature system shown in FIG. 1.

The group management unit 1 is implemented, for example, by a server managing a group. In the embodiment, the unit 1 manages the group by executing member registration processing to register a new member to the group and member revocation processing to revoke qualification as a member of the group. As shown in FIG. 2, the unit 1 includes public information disclosing or opening means 101, a member registration information storage section 102, member registration means 103, a member information storage section 104, revoked or invalid member notifying means 105, an opening information storage section 106, signature opening means 107, and signer identifying means 108.

The public information opening means 101 is implemented using, for example, a CPU, a storage device, and a network interface section of a server. The means 101 includes a function to store various public information to be used in the system so that all devices that can access the information via a network such as the Internet freely refer to the information. In the embodiment, when a message is to be created at a terminal of a member of the group, there is created signature data (to be referred to as group signature data) indicating that the message is created by the signature unit 2 of one of the members of the group. For example, the unit 10 stores, as public information, a group public key to authenticate the group signature data and opens the group public key to all terminals that can access the information via the Internet.

The member registration information storage section 102 is implemented by, for example, the storage of the server. The storage section 102 stores member registration information to be employed by the member registration means 103 to execute processing for member registration. In this connection, "member registration information" is a cryptographic key (called a secret key in the embodiment) for the means 103 to generate a member registration certificate for the member registration.

The member registration means 103 is implemented using, for example, a CPU and a network interface section of a server. The means 103 includes a function to communicate with group subscribing means 201 of the signature unit 2 to issue a member registration certificate using member registration information. In the embodiment, the means 103 creates a certificate not by itself, but in cooperation with the group subscribing means 201 to thereby issue the member registration certificate to the signature unit 2. In the embodiment, the means 103 transmits to the subscribing means 201 data created according to a predetermined algorithm and processes data received from the means 201 according to a predetermined algorithm to thereby generate the member registration certificate.

Additionally, the member registration means 103 includes a function to store in the member information storage section 104 the generated member registration certificate together with ID information capable of identifying the signature unit 2. In this case, for example, the member registration means 103 requests the member information storage section 104 to store therein, as ID information, signature data attached to data from the group subscribing means 201 during the communication to generate the member registration certificate.

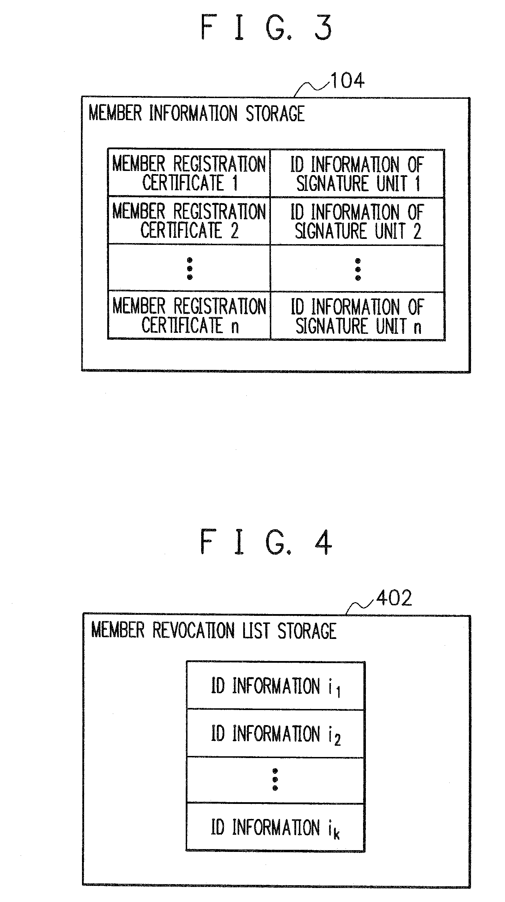

The member information storage section 104 is realized using, for example, the storage of the server. The storage section 104 stores the member registration certificate delivered and the ID information outputted from the member registration means 103 with a correspondence established therebetween. FIG. 3 is an explanatory diagram showing an example of information stored in the storage section 104. For example, the storage section 104 stores for each signature unit 2 a pair of the member registration certificate and the ID information as member information indicating the signature unit 2.

The revoked or invalid member notifying means 105 is realized using, for example, a CPU and a network interface section of a server. The means 105 includes a function that the means 105 reads from the member information storage section 104 ID information corresponding to a user who has lost the qualification as the group member and then notifies the member status response unit 4 of the ID information. For example, when the manager of the group signature system conducts a qualification revocation operation for a member and information of the revoked member is inputted, the means 105 extracts from the storage section104 the ID information corresponding to the signature unit 2 of the member whose qualification is revoked. Thereafter, the means 105 transmits the extracted ID information to the member status response unit 4.

The opening information storage section 106 is materialized using, for example, the storage of the server. The storage section 106 stores opening information to be used when the signature opening means 107 opens the signature data. In this regard, "opening information" is a cryptographic key (a secret key in the embodiment) to open the group signature data.

The signature opening means 107 is implemented using, for example, a CPU and a network interface section of a server. The means 107 includes a function to accept (receive) group signature data and a message to be accepted at a verification process. Also, the means 107 includes a function that creates, by use of the group signature data, a message, and opening information stored in the opening information storage section 106, signer identifying information to identify the signature unit 2 having generated the group signature data. Incidentally, in the embodiment, the signer identifying information is numeric information obtained according to a predetermined algorithm and is information capable of identifying one of the signature units 2 of users having created the group signature data. Also, the means 107 includes a function to deliver the created signer identifying information to the signer identifying means 108.

The signer identifying means 108 is materialized using, for example, a CPU of a server. The means 108 includes a function to identify the signature unit 2 having created the group signature data by use of the signer identifying information inputted from the signature opening means 107 and the member information stored in the member information storage section 104. In addition, the means 108 includes a function to produce ID information of the identified signature unit 2.

The signature unit 2 is a device that the user, a member of the group, uses, and is implemented using, for example, an information processing terminal such as a personal computer. As can be seen from FIG. 2, the unit 2 includes group subscribing means 201, a member registration certificate storage section 202, a group signature key storage section 203, message input means 204, a random number generator 205, an group signature generating or creating means 206.

The group subscribing means 201 is realized using, for example, a CPU and a network interface section of an information processing terminal. The means 201 includes a function to communicate with the member registration means 103 of the group management unit 1 to generate a member registration certificate and a group signature key as a cryptographic key (a private key in the embodiment) to create group signature data. Additionally, the means 201 includes a function to deliver the member registration certificate and the group signature key generated as above to the member registration certificate storage section 202 and the group signature key storage section 203, respectively.

In the embodiment, the group subscribing means 201 creates the member registration certificate not by itself but in cooperation with the member registration means 103 such that the group management unit 1 issues the member registration certificate. Thereafter, the means 201 feeds the generated certificate to the certificate storage section 202. Incidentally, the means 201 creates through the communication with the member registration means 103 a member registration certificate similar to that created by the member registration means 103. The member registration certificate is calculated using as inputs the group public key and the member registration information.

Moreover, for example, the group subscribing means 201 creates the group signature not by itself but in cooperation with the member registration means 103. In this case, the means 201 transmits to the registration means 103 data created according to a predetermined algorithm, or processes data from the registration means 103 according to a predetermined algorithm to thereby create the group signature key. The means 201 delivers the generated key to the group signature key storage section 203. In this connection, for example, the means 201 may create, without communicating with the member registration means 103, a group signature key by itself, and output the key to the storage section 203. However, in any situation, the group signature key is stored in secret not to be known to the member management unit 1. As a result, even the unit 1 cannot create the group signature data by use of which the signer identifying means 108 can identify that the group signature data has been created by the signature unit 2.

The member registration certificate storage section 202 and the group signature key storage section 203 are implemented by use of, for example, storage of an information processing terminal. The certificate storage section 202 stores the member registration certificate delivered from the group subscribing means 201. Moreover, the key storage section 203 stores the group signature key fed from the subscribing means 201.

The message input means 204 is materialized using, for example, a CPU and an input device such as a keyboard and a mouse of an information processing terminal. The means 204 includes a function to receive, according to operation of a user (a member of the group), a message (an input) to be attached to group signature data and feed the message to the group signature creating means 206. The random number generator 205 includes a function to generate a random number to be used by the group signature creating means 206 to create signature data.

The group signature creating means 206 is implemented using, for example, a CPU of an information processing terminal. The means 206 includes a function to create, according to a message, a random number, a member registration certificate, and a group signature key, group signature data indicating that the signature unit 2 is a device of the group member correctly registered to the group management unit 1 and to output the group signature data.

In this regard, the group signature creating means 206 outputs the group signature data (a signature indicating that the user belongs to the group while anonymity of the user is preserved) that does not show any information capable of identifying the signature unit 2. For example, a verification unit 3 having received a message conducts authentication according to the group signature data to resultantly recognize that the message is created by one of the members of the group. However, it is not possible for the verification unit 3 to cryptographically decode the member registration certificate and the group signature key based on the group signature data. Therefore, the verification unit 3 cannot identify which one of the members of the group has created the message, and this hence keeps the user's anonymity.

The verification unit 3 is a device to verify (authenticate) the group signature data received from the signature unit 2 and is realized by use of, for example, an information processing terminal such as a personal computer. The verification unit 3 includes a function to authenticate the group signature data to produce an authentication result to determine whether the message is to be accepted or rejected. As shown in FIG. 2, the verification unit 3 includes group signature verification means 301 and verification result output means 302.

The verification means 301 is implemented using, for example, a CPU and a network interface section of an information processing terminal. The means 301 includes a function that accepts (receives) a message and group signature data from the signature unit 2 to check validity of the data. In the embodiment, the verification means 301 authenticates the group signature data by use of public information opened by the group management unit 1 to the public. Also, the verification means 301 includes a function that if it is judged that the group signature data is not appropriate, the verification means 301 determines "rejection" to produce the verification result.

Additionally, the group signature verification means 301 includes a function that if it is judged that the group signature data is appropriate, the verification means 301 transmits the message and the data to the signature opening means 404 of the member status response unit 4 in order to confirm whether the signature unit 2 having created the data is a device of a valid group member. That is, the verification means 301 transmits the message and the data to inquire whether the user having created the message is a member who is currently valid or a member whose qualification has already been revoked.

The verification result output means 302 is realized by, for example, a CPU and a network interface section of an information processing terminal. The output means 302 includes a function to receive the result of a member status check from member status judging means 407 of the member status response unit 4. In addition, the output means 302 includes a function that if the received result is "valid", the output means 302 determines "acceptance" and if the received result is "invalid", the output means 302 determines "rejection" to produce the verification result of "acceptance" or "rejection".

The member status response unit 4 is implemented by, for example, a server to judge the member status of each group member. As shown in FIG. 2, the response unit 4 includes invalid member receiving means 401, a member revocation list storage 402, an opening information storage section 403, signature opening means 404, a member information storage section 405, signer identifying means 406, and member status judging means 407.

The invalid member receiving means 401 is configured using, for example, a CPU and a network interface of a server. The receiving means 401 includes a function to receive ID information of an invalid member sent from the invalid member notifying means 105 to store the ID information in the member revocation list storage section 402.

The list storage section 402 and the opening information storage section 403 are materialized by user of, for example, storage of a server. The list storage section 402 stores a member revocation list that is a list of members (invalid members) whose group member qualification has been revoked. FIG. 4 is an explanatory diagram showing an example of information stored in the list storage section 402. As shown in FIG. 4, the list storage section 402 stores as the member revocation list, for example, a set of ID information indicating the signature units 2 of the members whose qualification has been revoked. The opening information storage section 403 stores opening information similar to those stored in the opening information storage 106 of the group management unit 1.

The signature opening means 404 is constructed using, for example, a CPU and a network interface section of a server. The opening means 404 includes a function to receive a message and group signature data from the group signature verification means 301 of the verification unit 3. Additionally, the opening means 404 includes a function to generate signer identifying information to identify the signature unit 2 having created the group signature data, by use of the received message and the received group signature data, opening information stored in the storage section 403, and various public information disclosed by the public information disclosing means 101. Also, the signature opening means 404 includes a function to deliver the generated information to the signer identifying means 406.

The member information storage section 405 is implemented by, for example, storage of a server. The information storage section 405 stores member information similar to that stored in the member information storage 104 of the group management unit 1. The member status response unit 4 is notified of the member information stored in the storage section 405 from the unit 1 in a particular method. For example, the response unit 4 beforehand receives the member information from the management unit 1 and orders the information storage section 405 to store the received member information.

The signer identifying means 406 is materialized using, for example, a CPU of a server. The identifying means 406 includes a function to receive from the signature opening means 404 the signer identifying information to identify, by use of the signer identifying information and the member information stored in the member information storage section 405, ID information of the signature unit 2 having created the group signature data. In addition, the identifying means 406 includes a function to output the identified ID information to the member status judging means 407.

The judging means 407 is realized using, for example, a CPU and a network interface section of a server. The judging means 407 includes a function to receive ID information from the sign opening means 406 to determine whether the signature unit 2 corresponding to the ID information is a unit of a valid group member by use of the member revocation list.

In the embodiment, the member status judging means 407 compares the ID information identified by the identifying means 406 with the member revocation list stored in the member revocation list storage section 402 to determine whether information matching the identified ID information is contained in the member revocation list. If it is determined that the matching ID information is contained, the judging means 407 determines that the member status is "invalid". Or, if it is determined that the matching ID information is not contained, the judging means 407 determines that the member status is "valid".

Additionally, the judging means 407 includes a function to send response data containing the member status indicating "valid" or "invalid" to the verification result output means 302 of the verification unit 3.

Incidentally, in the embodiment, the storage section of the member status response unit 4 beforehand stores various programs to determine the member status. For example, the storage section of the unit 4 beforehand stores a member status judging program that executes: processing to receive a member status judge request via a communication network from an authentication device to authenticate the group signature data; processing to determine, according to the member revocation list stored in the revocation list storage means, the member status of the unit having created the group signature data; and processing to transmit the judge result of the judged member status via the communication network to the authentication device.

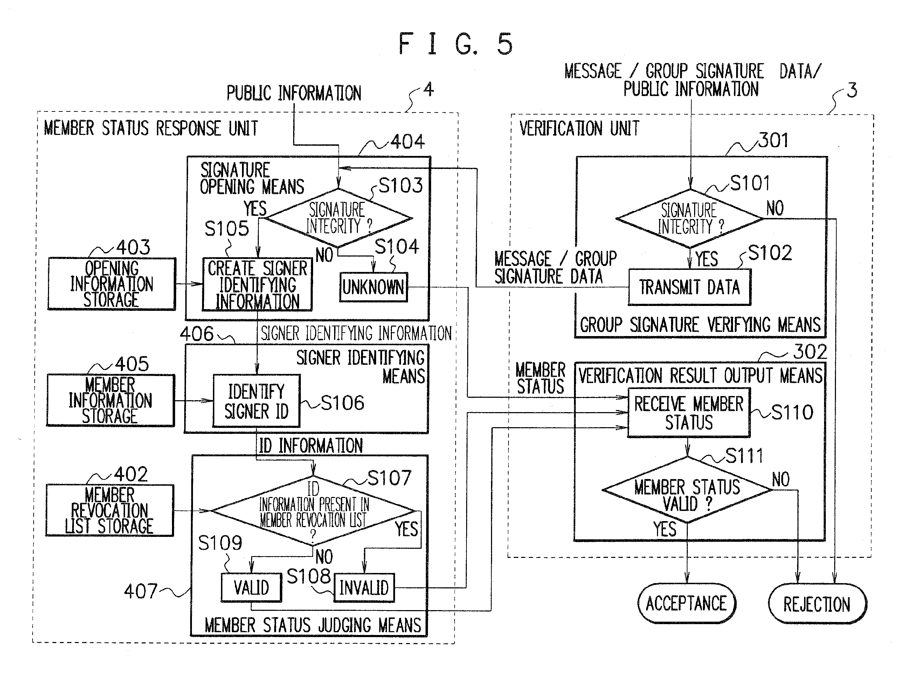

Next, description will be given of an operation. FIG. 5 is a flowchart showing an example of the processing in which the group signature system judges validity of the group signature attached to a message and determines whether the user is an invalid member. Next, referring to FIGS. 2 and 5, description will be given of an operation of the group signature system.

First, description will be given of an operation of group subscribing processing to register, when a new user subscribes to a group, the user as a member. For the group subscription, the signature unit 2 communicates with the group management unit 1 to execute registration processing. The group subscribing means 201 of the signature unit 2 communicates with the member registration means 103 of the management unit 1, and creates and outputs a member registration certificate and a group signature key. In addition, the subscribing means 201 orders the member registration certificate 202 to store the member registration certificate, and the group signature key storage section 203 to store the group signature key.

The member registration means 103 orders the member information storage section 104 to store a pair of the member registration certificate issued to the signature unit 2 and ID information capable of identifying the unit 2. In this connection, it is possible to adopt as the ID information, for example, the digital signature or the like attached to the message sent from the signature unit 2. Additionally, the member registration certificate and the ID information stored in the member information storage section 104 are employed in an operation in which the group management unit 1 and the member status response unit 4 identify the signature unit 2 having created the group signature data according to the group signature data.

Next, description will be given of an operation of invalid member notification processing in which the group management unit 1 notifies, when a member becomes invalid, the member status response unit 4 of the invalid member.

To delete a signature unit 2 of a user (a member of a group) from the group, the invalid member notification means 105 of the management unit 1 reads out from the member information storage section 104 ID information corresponding to the signature unit 2 to be deleted. Additionally, the notification means 105 sends the obtained ID information to the response unit 4. The invalid member receiving means 401 of the response unit 4 receives the ID information from the notification means 105 and orders the member revocation list storage section 402 to store the received ID information.

Subsequently, description will be given of an operation of group signature creation processing in which the signature unit 2 generates group signature data. The signature unit 2 of the user having subscribed to the group receives as an input a message according to a user operation to create group signature data for the message. The group signature creating means 206 creates group signature data according to the message received from the message input means 204, a random number generated by the random number generator 205, the member registration certificate stored in the certificate storage section 202, and the group signature key stored in the key storage section 203. In this situation, the creating means 206 creates the group signature data indicating that the signature unit 2 is a unit of a group member without revealing information capable of identifying the signature unit 2. Then, the creating means 206 delivers the message and the group signature data.

Next, description will be given of an operation of processing in which the verification unit 3 and the member status response unit 4 judge validity of the group signature and determine whether the user is an invalid member. The verification unit 3 receives the message and the group signature data from the signature unit 2 and verifies whether the data is an appropriate signature for the message (whether the signature data has been created by a signature unit 2 of a member of the group). As shown in FIG. 5, the group signature verification means 301 confirms whether the group signature data is appropriately produced by the group signature creating means 206 according to the message, the group signature data, and public information opened by the public information opening means 101 (step S101). If it is judged that the signature data is other than signature data appropriately produced by the creating means 206, the verification means 301 delivers "rejection" according to the group signature data and produces a verification result indicating that the message is to be "rejected".

If it is judged that the group signature data is appropriately produced, the verification means 301 confirms the member status of the signature unit 2 having created the data. That is, the verification means 301 confirms whether the signature unit 2 is a unit of a valid member of the group. The verification means 301 transmits the message and the group signature data to the member status response unit 4 (step S102) to request judgment of the member status of the signature unit 2.

The signature opening means 404 of the response unit 4 accepts (receives) the message and the group signature data from the verification unit 3. Also, the signature opening means 404 confirms validity of the group signature data according to the message, the data, and the public information disclosed by the public information disclosing means 101 (step S103). If it is determined that the data is not appropriate, the signature opening means 404 judges that the member status is "unknown" and then sends response data representing "unknown" to the verification unit 3 (step S104).

If it is determined that the data is appropriate, the signature opening means 404 produces, using the opening information stored in the opening information storage section 403, signer identifying information to identify the signature unit 2 having generated the group signature data and delivers the information to the signer identifying means 406 (step S105).

At reception of the signer identifying information, the identifying means 406 identifies, by use of the member information stored in the member information storage 405, the signature unit 2 indicated by the signer identifying information. Thereafter, the identifying means 406 feeds ID information associated with the identified signature unit 2 to the member status judging means 407 (step S106).

When the ID information is received, the means 407 makes a check, according to the member revocation list stored in the revocation list storage section 402, whether the ID information identified by the signer identifying means 406 exists in the member revocation list (step S107). If the ID information exists in the list, the member status judging means 407 judges that the member status is "invalid" (step S108). Moreover, if the ID information does not exist in the list, the judging means 407 judges that the member status is "valid" (step S109). The judging means 407 then transmits response data indicating "invalid" or "valid" to the verification unit 3.

The verification result output means 302 of the verification unit 3 receives and gets the response data from the member status response unit 4 (step S110). According to the response data, the output means 302 makes a check to determine whether the member status is "valid" (step S111). If it is determined that the member status is "valid" according to the response data, the output means 302 determines to "accept" the message according to the group signature data. Or, if it is determined that the member status is other than "valid" (i.e. "revoked" or "unknown"), the output means 302 determines to "reject" the message according to the group signature data. The output means 302 then produces a verification result "acceptance" or "rejection".

As above, through the execution of processing from step S101 to step S111, the verification unit 3 confirms that the message has been created by one of the members (the user who is or was the member) of the group. Moreover, by asking the member status response unit 4 to determine the member status, the verification unit 3 can confirm that the user having created the message is a group member who has a valid qualification also at present to thereby determine whether the message is to be accepted or not.

Next, description will be given of signature unit identification processing to identify the signature unit 2 having created the group signature. The group management unit 1 identifies according to necessity the signature unit 2 having created the group signature on the basis of the message and the group signature data. The signature opening means 107 gets (receives) the message and the group signature data. According to the opening information stored in the opening information storage section 106, the signature opening means 107 generates signer identifying information to identify the signature unit 2 having created the group signature data and then outputs the information to the signer identifying means 108.

According to the signer identifying information and the member information stored in the member information storage section 104, the signer identifying means 108 identifies a member registration certificate and ID information corresponding to the signature unit 2 having created the group signature data and outputs a result of the identification of the signature unit 2.

Incidentally, in the embodiment, the group signature creating means 206 may create the group signature data as the input that is a hash value obtained by converting the message using a predetermined hash function. In the verification processing executed by the group signature verification means 301, the verification means 301 first calculates the hash value of the message using the message. Thereafter, the verification means 301 authenticates the group signature data using the hash value of the message. As a result of the operation, the data to be sent to the member status response unit 2 can be replaced by the message hash value and the group signature data. Therefore, the verification unit 3 can keep the message secret from the member status response unit 4.

Furthermore, in the case described for the embodiment, although the group management unit 1 and the member status response unit 4 are implemented by use of different servers, it is also possible for the group management unit 1 and the member status response unit 4 to be implemented by one and the same server. The constituent components having common functions in the units 1 and 4 may be the same components. For example, the member information storage section 104 may be identical to the member information storage section 405, the signature opening means 107 may be identical to the signature opening means 404, and the signer identifying means 108 may be identical to the signer identifying means 406.

As above, according to the embodiment, the member status response apparatus 4 conducts the member status determination for a signer of a group signature. The member invalidating function can be realized by use the configuration that is same as that of a group signature system not having the member invalidating function, and hence the amount of calculations required for the member invalidation can be reduced. That is, according to the embodiment, a new member status response unit 4 is introduced such that the verification unit 3 sends to the member status response unit 4 inquires whether the member qualification of the member of the signature unit 2 having created the group signature data has been revoked. Since the determination of the validity of the member status can be entrusted to the unit 4, it is not required, at occurrence of a revoked member, to update parameters such as the private key. Therefore, the processing for the member revocation can be efficiently executed.

In addition, according to the embodiment, the member status is determined at verification of the group signature data. That is, according to the embodiment the verification unit 3 inquires the validity of a member of the member status response unit 4 each time the group signature data is verified. Thereafter, the unit 4 sends back a result to the verification unit 3 according to the member status at the point of inquiry. Consequently, the determination can be conducted according to the member status at the point of verification to output the verification result. Therefore, at verification of the group signature data, the validity of the group member can be confirmed.

Second embodiment

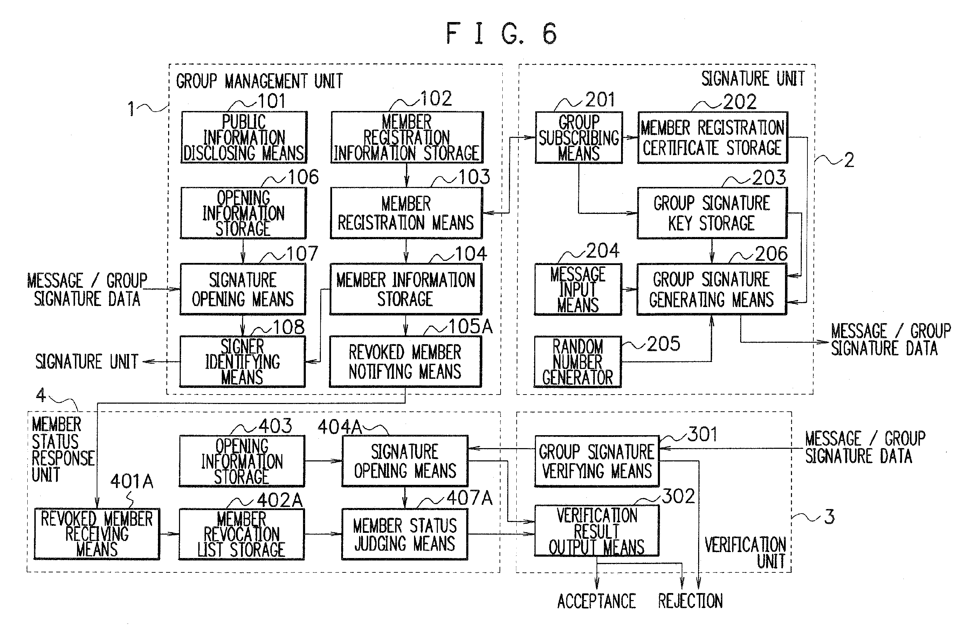

Next, description will be given of the second embodiment of the present invention by referring to drawings. FIG. 6 is a block diagram showing another example of the group signature system. As shown in FIG. 6, the group signature system includes a group management unit 1, a signature unit 2, a verification unit 3, and a member status response unit 4. In the embodiment, the configurations of the units 2 and 3 are similar to those in the first embodiment. In the present embodiment, a revoked member notifying means 105A of the management unit 1 has a function different from that of the revoked member notifying means 105 in the first embodiment. Also, this embodiment differs in that the member status response unit 4 includes neither the member information storage section 405 nor the signer identifying means 406.

The revoked member notifying means 105A includes a function to read from the member information storage section 104 a member registration certificate corresponding to the signature unit 2 whose qualification as the group member is revoked to notify the member status response unit 4 of the member registration certificate.

As shown in FIG. 6, the response unit 4 includes invalid member receiving means 401A, a member revocation list storage section 402A, an opening information storage section 403, signature opening means 404A, and member status judging means 407A.

The invalid member receiving means 401A includes a function to receive a member registration certificate of the invalid member transmitted from the revoked member notifying means 105A to make the member revocation list storage section 402A store the member registration certificate.

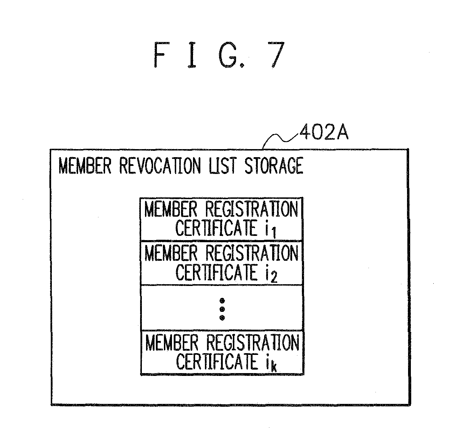

The list storage section 402A stores a member revocation list. FIG. 7 is an explanatory diagram showing an example of information stored in the member registration storage section 402. The storage section 402A stores a set of member registration certificates corresponding to signature units 2 of members whose qualification has been revoked. Incidentally, in the operation, it is not possible to identify the signature unit 2 using only the member registration certificate. The opening information storage section 403 stores opening information identical to those stored in the opening information storage section 106 of the management unit 1.

The signature opening means 404A includes a function to receive a message and group signature data from the group signature verification means 301 of the verification unit 3. Additionally, the signature opening means 404A includes a function in which the opening unit 404A creates, by use of the opening information stored in the opening information storage section 403 and various public information opened by the public information opening means 101, signer identifying information to identify the signature unit 2 having created the group signature data. Also, the opening means 404A includes a function to deliver the created information to the member status judging means 407A.

The judging means 407A includes a function in which the means 407A receives the signer identifying information from the signature opening means 404A and determines, by use of the member revocation list stored in the list storage section 402A, whether the signature unit 2 indicated by the information is a valid group member. Furthermore, the judging means 407A includes a function to send response data indicating "valid" or "invalid" to the verification result output means 302 of the verification unit 3.

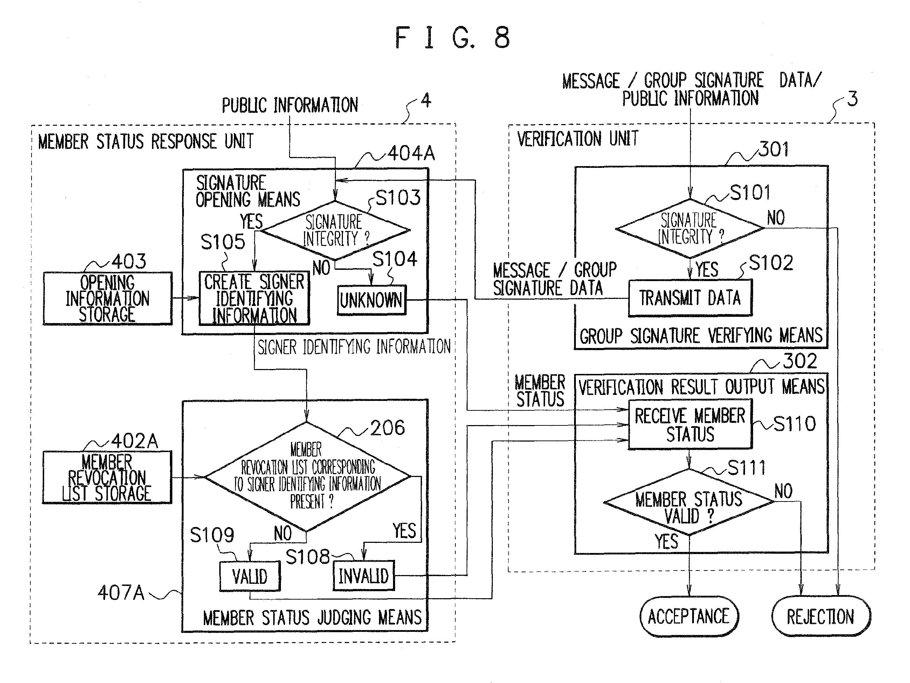

Next, an operation will be described. FIG. 8 is a flowchart showing another example of the processing in which the group signature system verifies a signature attached to the message to determine whether the associated signature unit is a revoked member. Referring next to FIGS. 6 and 8, description will be given of an operation of the group signature system. Incidentally, in the embodiment, the group subscribing processing, the group signature creating processing, and the signature unit identifying processing are similar to those of the first embodiment.

The group signature verifying means 301 of the verification unit 3 judges validity of the group signature data (step S101) and transmits a message and the group signature data to the group management unit 1 (step S102) in a way similar to that of the first embodiment.

At verification of group signature data, the signature opening means 404A gets (receives) the message and the group signature data from the verifying means 301 of the verification unit 3. Also, the opening means 404A confirms validity of the group signature data using the message, the group signature data, and the public information opened by the public information opening means 101 (step S103). If it is determined that the group signature data is not appropriate, the opening means 404A determines that the member status is "unknown" and sends response data indicating "unknown" to the verification unit 3 (step S104).

If it is determined that the group signature data is appropriate, the signature opening means 404A creates signer identifying information to identify the signature unit 2 having created the group signature data by use of the opening information stored in the opening information storage section 403 and outputs the information to the member status judging means 407A (step 105).

When the signer identifying information is received, the judging means 407A determines, according to the member revocation list stored in the list storage section 402A, whether the member registration certificate corresponding to the information exists in the list (step S206). If it is determined that the certificate exists in the list, the judging means 407A determines that the member status is "invalid" (step S108). Furthermore, if it is determined that the certificate does not exist in the list, the judging means 407A determines that the member status is "valid" (step S109). Thereafter, the judging means 407A transmits response data indicating "invalid" or "valid" to the verification unit 3. The verification result output means 302 of the verification unit 3 then receives the response data indicating the member status in a way similar to that of the first embodiment (step S110) to determine whether the member status is "valid" (step S111) and produces a verification result of "acceptance" or "rejection".

Incidentally, like in the first embodiment, the group signature creating means 206 may create the group signature data as the input which is a hash value obtained by converting the message using a predetermined hash function. In this situation, in the verification processing executed by the group signature verification means 301, the means 301 calculates the hash value of the message to authenticate the group signature data using the hash value of the message. As a result of the operation, the data to be sent to the member status response unit 2 can be replaced by the message hash value and the group signature data. Therefore, the verification unit 3 can keep the message secret from the member status response unit 4.

As above, according to the embodiment, the invalid member notifying means 105 of the group management unit 1 does not transmit the ID information of the signature unit 2 of the revoked member to the member status response unit 4. Consequently, even if the message and the group signature data are received, the response unit 4 cannot identify the ID information of the signature unit 2 having created the group signature data. Therefore, the ID information of each signature unit 2 can be kept secret from the member status response unit 4.

Third embodiment

Next, description will be given of the third embodiment of the present invention by referring to drawings. In the embodiment, the configuration of the group signature system is similar to that of FIG. 2 shown as the first embodiment. As shown in FIG. 2, the system includes a group management unit 1, a signature unit 2, a verification unit 3, and a member status response unit 4. The configurations of the group management unit 1 and the verification unit 3 are similar to those shown in the first embodiment.

The signature unit 2 includes, as in the first embodiment, group subscribing means 201, a member registration certificate storage section 202, a group signature key storage section 203, message input means 204, a random number generator 205, and group signature creating means 206.

The configurations of the group subscribing means 201, the member registration certificate storage section 202, the group signature key storage section 203, the message input means 204, and the random number generator 205 are similar to those of the first and second embodiments.

The group signature creating means 206 creates and outputs group signature data indicating that the signature unit 2 is a unit of a group member appropriately registered to the group management unit 1, according to a message, a random number, a member registration certificate, and a group signature key. In this situation, the creating means 206 produces group signature data while concealing information capable of identifying the signature unit 2.

Also, the group signature creating means 206 creates, by using the public information opened by the public information opening means 101, group signature data including conversion data to restore the member registration certificate by use of the opening information possessed by the group management unit 1 and the member status response unit 4.

Moreover, the configuration of the response unit 4 is similar to that of the response unit 4 in the first embodiment.

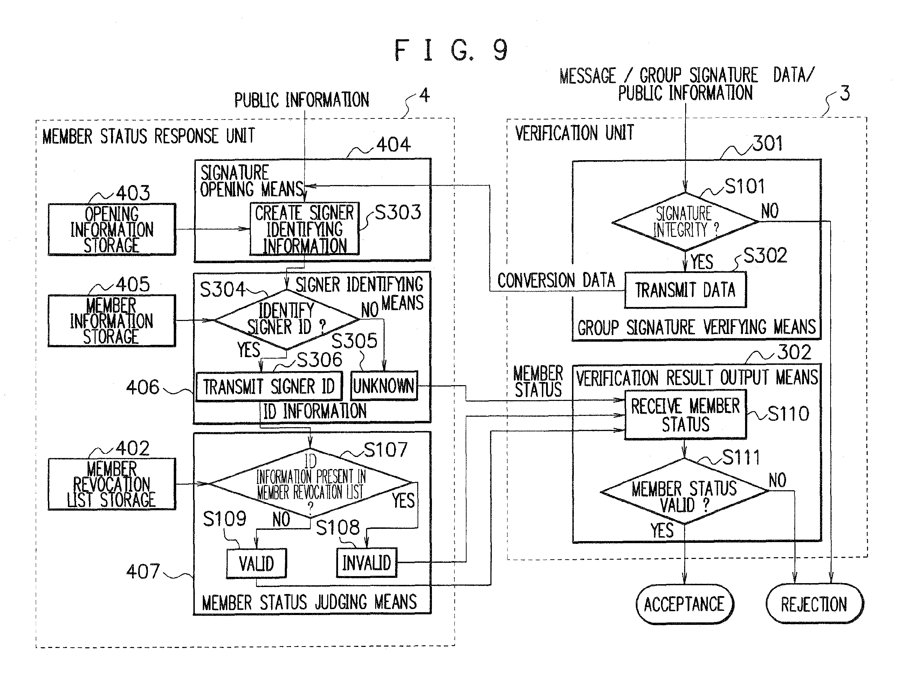

Next, an operation will be described. FIG. 9 is a flowchart showing still another example of the processing in which the group signature system judges validity of the signature attached to the message to determine whether the associated signature unit is a revoked member. Referring next to FIGS. 2 and 9, description will be given of an operation of the group signature system. Incidentally, the group subscribing processing, the invalid member notifying processing, and the signature unit identifying processing are similar to those of the first embodiment.

First, operation of the group signature creating processing will be described. When a message is inputted according to a user operation, the signature unit 2 of the user subscribed to the group creates group signature data for the message. The group signature creating means 206 creates group signature data that indicates that the signature unit 2 is a member of the group while concealing information capable of identifying that the signature unit 2 is a unit of a member of the group. In this situation, the creating means 206 generates conversion data to restore the member registration certificate. According to the conversion data, the group management unit 1 and the member status response unit 4 can create and restore the member registration certificate by conducting a predetermined conversion using the possessed opening information.

For example, the group signature creating means 206 produces the conversion data through conversion using a public key encryption system. In this situation, using a private key of the public key encryption system as opening information, the creating means 206 encrypts the data including the member registration certificate according to a public key corresponding to the opening information and a random number. The creating means 206 then outputs group signature data including the message and the conversion data.

Next, description will be given of operation of the processing in which the verification unit 3 and the member status response unit 4 judge validity of the group signature to determine whether the associated unit is a revoked member. The verification unit 3 having received the message and the conversion data verifies the group signature data to determine whether the signature is appropriate for the message in a way similar to that of the first embodiment. As shown in FIG. 9, according to the message, the group signature data, and the public information opened by the opening means 101, the group signature verifying means 301 confirms whether the group signature data is signature data appropriately created by the creating means 206 (step S101). If it is not determined that the group signature data is appropriately created signature data, the verifying means 301 determines "rejection" according to the group signature data and produces a judge result indicating rejection of the message.

If it is determined that the group signature data is appropriately created signature data, the verifying means 301 confirms the member status of the signature unit 2 having produced the group signature data. That is, the verifying means 301 confirms whether the signature unit 2 is a unit of a valid member of the group. The verifying means 301 sends the conversion data contained in the group signature data to the member status response unit 4 (step S302).

The signature opening means 404 of the response unit 4 gets (receives) the conversion data. Moreover, according to the conversion data and the opening information stored in the opening information storage section 403, the opening means 404 restores (generates) the member registration certificate to deliver the generated certificate as signer identifying information to the signer identifying means 406 (step S303).

When the member registration certificate as signer identifying information is received, the identifying means 406 identifies ID information of the signature unit 2 corresponding to the certificate by use of the member information stored in the member information storage section 405 (step S304). If it is determined that the member registration certificate corresponding to the signer identifying information is absent, the identifying means 406 determines that the member status is "unknown" to send response data indicating "unknown" to the verification unit 3 (step S305). Furthermore, if it is determined that the member registration certificate corresponding to the signer identifying information is present, the identifying means 406 delivers the identified ID information to the member status judging means 407 (step S306).

When the ID information is received, the judging means 407 determines, according to the member revocation list stored in the list storage section 402, whether the ID information identified by the identifying means 406 exists in the list (step S107). If it is determined that the ID information exists in the list, the judging means 407 determines that the member status is "revoked" (step S108). Moreover, if it is not determined that the ID information exists in the list, the judging means 407 determines that the member status is "valid" (step S109). The judging means 407 then transmits response data indicating "revoked" or "valid" to the verification unit 3.

The verification result output means 302 of the verification unit 3 receives the response data from the response unit 4 (step S110). According to the response data, the output means 302 determines whether the member status is "valid" (step S111). If it is determined according to the response data that the member status is "valid", the output means 302 determines according to the group signature data that the message is "accepted". Also, if it is determined according to the response data that the member status is other than "valid", the output means 302 determines according to the group signature data that the message is "rejected". The output means 302 then produces a verification result of "acceptance" or "rejection".

As above, according to this embodiment, the signature unit 2 produces the group signature data including the conversion data of the member registration certificate. Also, the verification unit 3 having received the message and the group signature data transmits only the conversion data to the member status response unit 4. Consequently, the verification unit 3 can keep the received message secret from the response unit 4.

Fourth embodiment

Next, the fourth embodiment will be described by referring to drawings. The configuration thereof is similar to that of FIG. 6 shown in conjunction with the second embodiment. As shown in FIG. 6, the group signature system includes a group management unit 1, a signature unit 2, a verification unit 3, and a member status response unit 4. The configurations of the group management unit 1 and the verification unit 3 are similar to those of the first embodiment. Additionally, in the present embodiment, the configuration of the signature unit 2 is similar to that of the signature unit 2 of the third embodiment. That is, the signature unit 2 generates group signature data including conversion data to restore the member registration certificate.

The member status response unit 4 includes, as in the second embodiment, invalid member receiving means 401A, a member revocation list storage section 402A, an opening information storage section 403, signature opening means 404A, and member status judging means 407A. The configurations of the receiving means 401A, the opening information storage section 403, the opening means 404A, and the judging means 407A are similar to those of the second embodiment.

The member revocation list storage section 402A stores member registration certificates and member statuses with a correspondence established therebetween. FIG. 10 is an explanatory diagram showing another example of information stored in the list storage section 402A. As shown in FIG. 10, for example, the list storage section 402A stores a member revocation list including pairs of the member registration certificates corresponding to all signature units 2 belonging to the group and the member statuses of the associated signature units 2. As shown in FIG. 10, the member revocation list storage section 402A stores, as the member status, information of "valid" or "invalid".

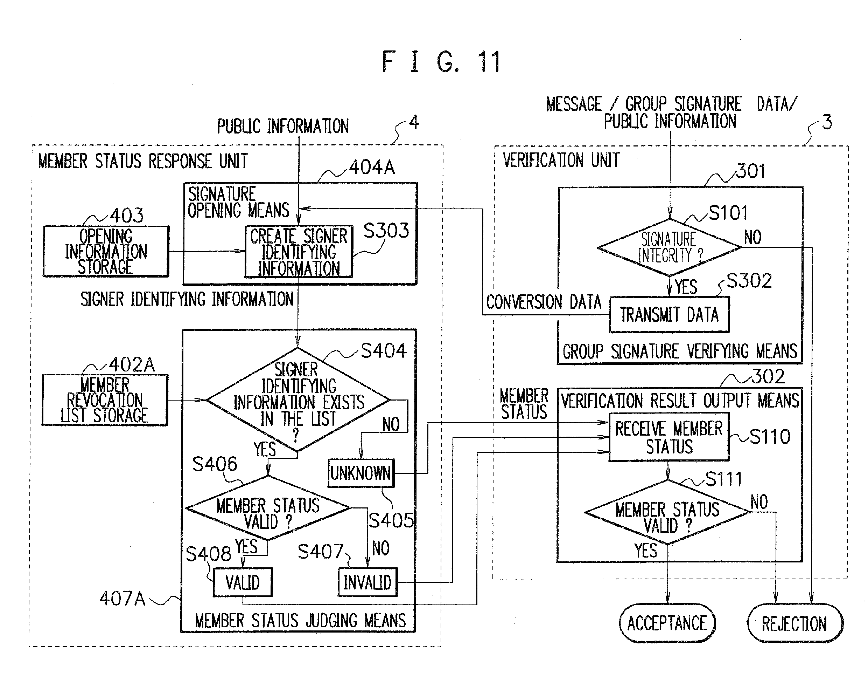

Next, an operation will be described. FIG. 11 is a flowchart showing still another example of the processing in which the group signature system judges validity of the signature attached to the message to determine whether the associated signature unit is an invalid member or a revoked member. Referring next to FIGS. 6 and 11, description will be given of an operation of the group signature system. Incidentally, the group subscribing processing, the revoked member notifying processing, and the signature unit identifying processing are similar to those of the first embodiment. In addition, the group signature creating processing is similar to that of the third embodiment.

The verification unit 3 having received the message and the group signature data verifies the group signature data to determine whether the data is an appropriate signature for the message. As shown in FIG. 11, the group signature verification means 301 confirms, according to the message, the group signature data, and public information opened by the public information opening means 101, whether the group signature data is signature data appropriately produced by the group signature creating means 206 (step S101). If it is judged that the signature data is other than the signature data appropriately produced, the verification means 301 determines "rejection" according to the group signature data and produces a verification result indicating that the message is to be rejected.

If it is judged that the group signature data is the signature data appropriately produced, the verification means 301 confirms the member status of the signature unit 2 having created the data. That is, the verification means 301 confirms whether the unit 2 is a unit of a valid member of the group. The means 301 transmits the conversion data contained in the group signature data to the member status response unit 4 (step S302).

When the conversion data is obtained (received) from the verification unit 3, the signature opening means 404A of the response unit 4 restores (generates) the member registration certificate according to the conversion data and the opening information stored in the opening information storage section 403 to deliver the generated certificate as signer identifying information to the member status judging means 407A (step S303).

When the signer identifying information is received, the judging means 407A makes a search through the member revocation list stored in the list storage section 402A to determine whether the member registration certificate matching with the signer identifying information exists therein (step S404). If it is determined that such certificate does not exist (the matching certificate is absent), the judging means 407A determines that the member status is "unknown" and then sends response data representing "unknown" to the verification unit 3 (step S405).

If it is determined that such certificate exists (the matching certificate is present), the judging means 407A determines that the member status is "valid" or "invalid" according to the status of the certificate stored in the list storage section 402A (step S406). For example, if it is determined according to the member revocation list stored in the list storage section 402A that the member status corresponding to the certificate is "invalid", the judging means 407A transmits response data indicating "invalid" to the verification unit 3 (step S407). Additionally, if it is determined that the member status corresponding to the certificate is "valid", the judging means 407A transmits response data indicating "valid" to the verification unit 3 (step S408).

The verification result output means 302 of the verification unit 3 receives the response data from the member status response unit 4 (step S110). According to the response data, the output means 302 makes a check to determine whether the member status is "valid" (step S111). If it is determined that the member status is "valid" according to the response data, the output means 302 determines to "accept" the message according to the group signature data. Or, if it is determined that the member status is other than "valid", the output means 302 determines to "reject" the message according to the group signature data. The output means 302 then produces a verification result "acceptance" or "rejection".

As above, according to this embodiment, the signature unit 2 produces the group signature data including the conversion data of the member registration certificate. Also, the verification unit 3 having received the message and the group signature data transmits only the conversion data to the member status response unit 4. Consequently, the verification unit 3 can keep the received message secret from the response unit 4. In addition, according to the embodiment, the invalid member notifying means 105A of the group management unit 1 does not transmit the ID information of the signature unit 2 of the revoked member to the member status response unit 4. Consequently, even if the message and the group signature data are received, the response unit 4 cannot identify the ID information of the signature unit 2 having created the group signature data. Therefore, the ID information of each signature unit 2 can be kept secret from the member status response unit 4.

Fifth embodiment

Next, the fifth embodiment of the present invention will be described by referring to drawings. The configuration of the group signature system is similar to that of FIG. 2 shown in conjunction with the first embodiment. As shown in FIG. 2, the system includes a group management unit 1, a signature unit 2, a verification unit 3, and a member status response unit 4. The configurations of the group management unit 1 and the verification unit 3 are similar to those of the first embodiment.

The signature unit 2 includes, as in the first embodiment, group subscribing means 201, a member registration certificate storage section 202, a group signature key storage section 203, message input means 204, a random number generator 205, and group signature creating means 206. The configurations of the group subscribing means 201, the member registration certificate storage 202, the group signature key storage 203, the message input means 204, and the random number generator 205 are similar to those of the first embodiment.

The group signature creating means 206 creates and outputs group signature data indicating that the signature unit 2 is a unit of a group member appropriately registered to the group management unit 1, according to a message, a random number, a member registration certificate, and a group signature key. In this situation, the means 206 produces group signature data while concealing information capable of identifying the signature unit 2.

Also, the means 206 creates, by use of the public information opened by the public information opening means 101, group signature data including conversion data to restore the member registration certificate using the opening information possessed by the group management unit 1 and the member status response unit 4 and proof data indicating that the conversion data is appropriately created.

Additionally, the configuration of the response unit 4 is similar to that of the response unit 4 of the first or second embodiment.

Next, an operation will be described. Incidentally, the group subscribing processing, the invalid member notifying processing, and the signature unit identifying processing are similar to the processing of the first embodiment.

First, an operation of the group signature creating processing will be described. When a message is inputted according to a user operation, the signature unit 2 of a user having subscribed to the group creates group signature data for a message. The group signature creating means 206 produces the group signature data while concealing information capable of identifying that the signature unit 2 is a unit of a member of the group. In this situation, the creating means 206 creates conversion data of the member registration certificate having a property similar to that shown in the third embodiment.

Also, when the conversion data is created, the group signature creating means 206 simultaneously generates proof data indicating that the conversion data is appropriately created. The creating means 206 then outputs group signature data including the message, the conversion data, and the proof data.

Next, description will be given of an operation in which the verification unit 3 and the member status response unit 4 judge validity of the group signature and determine whether the user is an invalid member. The verification unit 3 having received the message and the group signature data verifies the group signature data to determine whether the signature is appropriate for the message in a way similar to that of the first embodiment. According to the message, the group signature data, and the public information opened by the opening means 101, the group signature verifying means 301 confirms whether the group signature data is signature data appropriately created by the creating means 206. If it is not determined that the group signature data is appropriately created signature data, the verifying means 301 determines "rejection" according to the group signature data and produces a judge result indicating rejection of the message.

If it is determined that the group signature data is appropriately created signature data, the verifying means 301 confirms the member status of the signature unit 2 having produced the group signature data. That is, the verifying means 301 confirms whether the signature unit 2 is a unit of a valid member of the group. The group signature verifying means 301 sends the conversion data and the proof data contained in the group signature data to the member status response unit 4.

The signature opening means 404 of the response unit 4 gets (receives) the conversion data and the proof data. Moreover, the signature opening means 404 confirms validity of the proof data using the public information opened by the public information opening means 101. If it is not determined that the proof data is correct, the means 404 determines that the member status is "unknown" to send response data indicating "unknown" to the verification unit 3.

If it is determined that the proof data is correct, the means 404 restores (creates) the member registration certificate according to the opening information stored in the opening information storage section 403 and delivers the created certificate as signer identifying information to the signer identifying means 406 or the member status judging means 407. The response unit 4 then determines the member status in a way similar to that of the first or second embodiment. In addition, the verification unit 3 produces a verification result of "acceptance" or "rejection" according to the judge result of the response unit 4.

As above, in the embodiment, the signature unit 2 produces the group signature data including the conversion data of the member registration certificate and the proof data for the conversion data. Also, the verification unit 3 having received the message and the group signature data transmits only the conversion data and the proof data to the member status response unit 4. Consequently, the verification unit 3 can keep the received message secret from the response unit 4. Additionally, by confirming the proof data, the response unit 4 can confirm whether the data sent from the verification unit 3 is part of the group signature data.

Sixth embodiment

Next, the sixth embodiment of the present invention will be described by referring to drawings. In the embodiment, the configuration of the group signature system is similar to that of FIG. 2 shown in conjunction with the first embodiment. As shown in FIG. 2, the system includes a group management unit 1, a signature unit 2, a verification unit 3, and a member status response unit 4. The configurations of the group management unit 1 and the verification unit 3 are similar to those of the first embodiment.

The signature unit 2 includes, as in the first embodiment, group subscribing means 201, a member registration certificate storage section 202, a group signature key storage section 203, message input means 204, a random number generator 205, and group signature creating means 206. The configurations of the group subscribing means 201, the member registration certificate storage section 202, the group signature key storage section 203, the message input means 204, and the random number generator 205 are similar to those of the first embodiment.

The group signature creating means 206 creates and outputs group signature data indicating that the signature unit 2 is a group member appropriately registered to the group management unit 1, according to a message, a random number, a member registration certificate, and a group signature key. In this situation, the creating means 206 produces group signature data while concealing information capable of identifying the signature unit 2.

Also, the group signature creating means 206 creates, by use of the public information opened by the public information opening means 101, first conversion data to restore the member registration certificate using the opening information possessed by the group management unit 1. Furthermore, the creating means 206 creates, by use of the public information opened by the public information opening means 101, second conversion data to restore the member registration certificate using the opening information possessed by the member status response unit 4. Additionally, the creating means 206 creates first proof data indicating that the second conversion data has been appropriately created and second proof data indicating that the first conversion data and the second conversion data is obtained by converting one and the same member registration certificate. Thereafter, the group signature creating means 206 creates group signature data including the first conversion data, the second conversion data, the first proof data, and the second proof data.

The configuration of the response unit 4 includes, as in the first embodiment, invalid member receiving means 401, a member revocation list storage section 402, an opening information storage section 403, signature opening means 404, a member information storage section 405, signer identifying means 406, and member status judging means 407.

The configurations of the receiving means 401, the list storage section 402, the opening means 404, the information storage section 405, the identifying means 406, and the judging means 407 are similar to those of the first embodiment.

The opening information storage section 403 stores opening information of information contents different from those of the opening information stored in the opening information storage 106 of the group management unit 1.

Incidentally, the member status response unit 4 may include, as in the second embodiment, invalid member receiving means 401, a member revocation list storage section 402, an opening information storage section 403, signature opening means 404, and member status judging means 407. Also in this situation, the information storage section 403 stores opening information of information contents different from those of the opening information stored in the information storage section 106 of the group management unit 1.

Next, an operation will be described. Incidentally, the group subscribing processing, the invalid member notifying processing, and the signature unit identifying processing are similar to the processing of the first embodiment.

First, an operation of the group signature creating processing will be described. If a message is inputted according to a user operation, the signature unit 2 of a user having subscribed to the group creates group signature data for the message. The group signature creating means 206 produces the group signature data while concealing information capable of identifying that the signature unit 2 is a unit of a member of the group. In this situation, the creating means 206 creates first conversion data of the member registration certificate. The creating means 206 creates, as the first conversion data like the conversion data shown in the third embodiment, data capable of restoring the member registration certificate using the opening information possessed by the group management unit 1.

Also, the group signature creating means 206 creates second conversion data like the first conversion data, to restore the member registration certificate using the opening information possessed by the member status response unit 4. Furthermore, at creation the second conversion data, the creating means 206 simultaneously creates first proof data indicating that the second conversion data is appropriately created. Also, the creating means 206 creates second proof data indicating that the first conversion data and the second conversion data are produced by converting one and the same member registration certificate. The group signature creating means 206 then outputs a message and group signature data including the first conversion data, the second conversion data, the first proof data, and the second proof data.

Next, description will be given of operation in which the verification unit 3 and the member status response unit 4 judge validity of the group signature and determine whether the user is an invalid member. The verification unit 3 having received the message and the group signature data verifies the group signature data to determine whether the signature is appropriate for the message in a way similar to that of the first embodiment. According to the message, the group signature data, and the public information opened by the opening means 101, the group signature verifying means 301 confirms whether the group signature data is signature data appropriately created by the creating means 206. If it is not determined that the group signature data is appropriately created signature data, the verifying means 301 determines "rejection" according to the group signature data and produces a judge result indicating rejection of the message.

If it is determined that the group signature data is appropriately created signature data, the verifying means 301 confirms the member status of the signature unit 2 having produced the group signature data. That is, the verifying means 301 confirms whether the signature unit 2 is a unit of a valid member of the group. The verifying means 301 sends the second conversion data and the first proof data contained in the group signature data to the member status response unit 4.

The response unit 4 is configured in almost the same way as for the member status response unit 4 of the first embodiment and operates as below. The signature opening means 404 of the response unit 4 gets (receives) the second conversion data and the first proof data. Moreover, using the public information opened by the public information opening means 101, the signature opening means 404 confirms validity of the first proof data. If it is not determined that the first proof data is appropriate, the opening means 404 determines that the member status is "unknown" and sends response data indicating "unknown" to the verification unit 3.

If it is determined that the first proof data is appropriate, the opening means 404 restores (generates) the member registration certificate according to the opening information stored in the opening information storage 403 to deliver the generated certificate as signer identifying information to the signer identifying means 406. Thereafter, the member status response unit 4 determines the member status as in the first or second embodiment. Moreover, the verification unit 3 outputs a verification result of "acceptance" or "rejection" according to a judge result of the response unit 4.

As above, the signature unit 2 produces the group signature data including the first conversion data capable of restoring the member registration certificate by use of the opening information of the group management unit 1 and the second conversion data capable of restoring the member registration certificate by use of the opening information of the member status response unit 4. Therefore, the management unit 1 and the response unit 4 can possess mutually different opening information items.

Also, the signature unit 2 produces the group signature data including the first proof data indicating that the second conversion data is appropriately created. Furthermore, the signature unit 2 sends the second conversion data and the first proof data to the response unit 4. Thanks to the operation, the response unit 4 can confirm whether the data sent from the verification unit 3 is part of the group signature data.

Additionally, the signature unit 2 produces the group signature data including the second proof data indicating that the first conversion data and the second conversion data are data items obtained by converting one and the same member registration certificate. Through the operation, the verification unit 3 can confirm that the two conversion data items produced from the signature unit 2 are obtained by converting one and the same member registration certificate.

Seventh embodiment

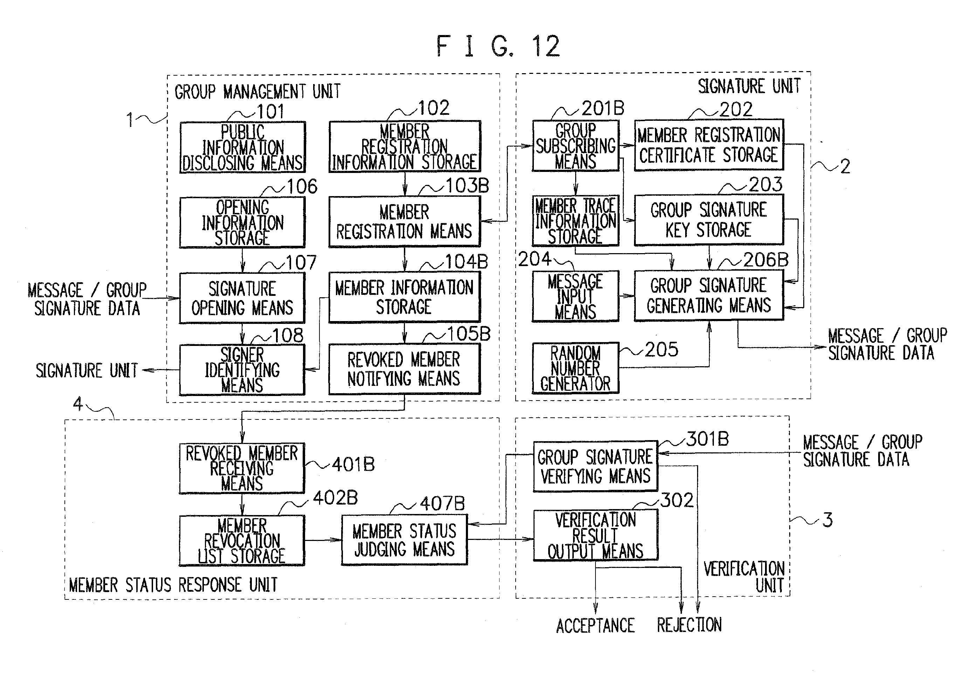

Next, the seventh embodiment will be described by referring to drawings. FIG. 12 is a block diagram showing still another configuration example of the group signature system. As shown in FIG. 12, the system includes a group management unit 1, a signature unit 2, a verification unit 3, and a member status response unit 4. The present embodiment differs from the first embodiment in that the signature unit 2 includes a member trace information storage section 207. Additionally, the present embodiment differs from the first embodiment in that the member status response unit 4 does not include the opening information storage 403, the signature opening means 404, the member information storage section 405, and the signature identifying means 406.

As shown in FIG. 12, the group management unit 1 includes, as in the first embodiment, public information disclosing or opening means 101, a member registration information storage section 102, member registration means 103B, a member information storage section 104B, revoked member notifying means 105B, an opening information storage section 106, signature opening means 107, and signer identifying means 108. The configurations of the public information disclosing means 101, the member registration information storage section 102, the opening information storage section 106, the signature opening means 107, and the signer identifying means 108 are similar to those of the first embodiment.

The member registration means 103B includes a function to communicate with group subscribing means 201 of the signature unit 2 to create a member registration certificate and member trace information using member registration information stored in the storage section 102. Incidentally, the member trace information is numeric information obtained according to a predetermined algorithm and is information capable of confirming that the group signature data is created by the signature unit 2 of a particular user. Also, the registration means 103B includes a function in which the member registration certificate and the member trace information thus created and ID information capable of identifying the signature unit 2 are stored in the member information storage section 104B.

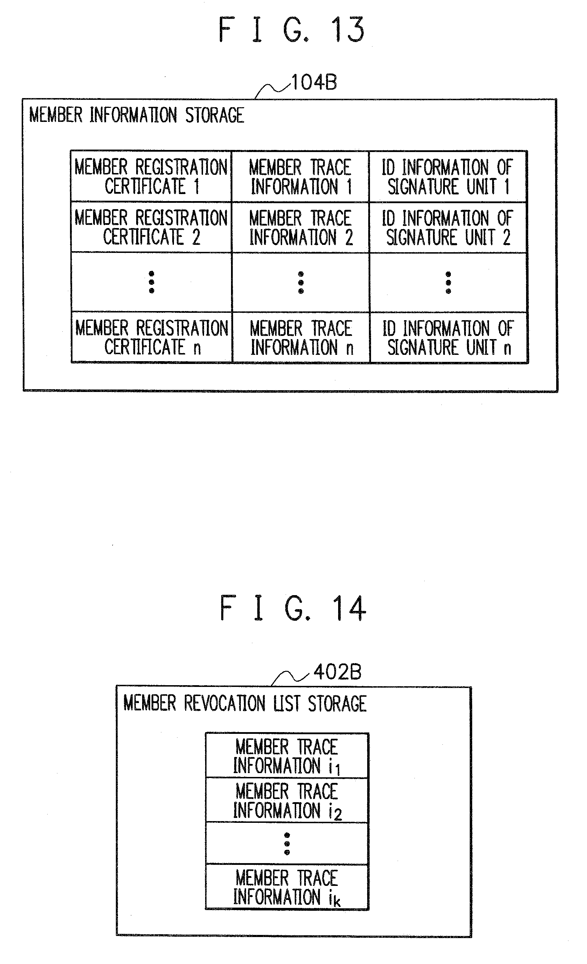

The storage section 104B stores the member registration certificate, the member trace information, and the ID information delivered from the member registration means 103 with a correspondence established therebetween. FIG. 13 is an explanatory diagram showing an example of information stored in the storage section 104B. As shown in FIG. 13, for example, the member information storage section 104B stores for each signature unit 2 the set of the member registration certificate, the member trace information, and the ID information as member information indicating the signature unit 2.

The revoked member notifying means 105B includes a function in which the notifying means 105B reads from the member information storage section 104 the member trace information corresponding to a user who has lost the qualification as the group member and then notifies the ID information to the member status response unit 4.

As shown in FIG. 12, the signature unit 2 includes group subscribing means 201B, a member registration certificate storage section 202, a group signature key storage section 203, message input means 204, a random number generator 205, group signature creating means 206B, and a member trace information storage section 207. The configurations of the member registration certificate storage section 202, the group signature key storage section 203, the message input means 204, and the random number generator 205 are similar to those of the first embodiment.

The group subscribing means 201B includes a function to communicate with the member registration means 103B of the group management unit 1 to generate a member registration certificate, a group signature key, and member trace information to deliver these items respectively to the member registration certificate storage section 202, the group signature key storage section 203, and the member trace information storage section 207.

The group signature creating means 206B includes a function to create, according to a message, a random number, a member registration certificate, a group signature key, and member trace information, group signature data indicating that the signature unit 2 is a device of a group member correctly registered to the group management unit 1 and to output the group signature data. In this regard, the means 206B outputs the group signature data indicating the above information without indicating information capable of identifying the signature unit 2. In this situation, the means 206B produces group signature data including conversion data of the member trace information. The member trace information storage section 207 stores the member trace information delivered from the member subscribing means 201.

As shown in FIG. 12, the verification unit 3 includes a group signature verifying means 301B and verification result output means 302.

The verifying means 301B includes a function that accepts (receives) a message and group signature data from the signature unit 2 to check validity of the data. In addition, the verification means 301B includes a function in which if it is judged that the group signature data is not appropriate, the means 301 determines "rejection" to produce the verification result. Additionally, the verification means 301 includes a function in which if it is judged that the group signature data is appropriate, the means 301 transmits, to confirm whether the signature unit 2 having created the data is a device of a valid group member, the message and the data to the member status judging means 407B of the member status response unit 4.

The verification result output means 302 includes a function to receive the judge result of the member status from member status judging means 407B of the member status response unit 4. In addition, the means 302 includes a function in which if the received result is "valid", the means 302 determines "acceptance" and if the received result is "invalid", the means 302 determines "rejection" to produce the verification result of "acceptance" or "rejection".

As shown in FIG. 12, the member status response unit 4 includes invalid member receiving means 401B, a member revocation list storage section 402B, and member status judging means 407B.

The receiving means 401B includes a function to receive the member trace information of an invalid member sent from the invalid member notifying means 105B to store the information in the member revocation list storage section 402B.

The list storage section 402B stores the member revocation list. FIG. 14 is an explanatory diagram showing an example of information stored in the storage section 402B. As shown in FIG. 14, the list storage section 402B stores as the member revocation list, for example, a set of member trace information of revoked signature units 2.

The member status judging means 407B includes a function in which the means 407B gets (receives) the message and the group signature data from the group signature verifying means 301B to make a check, by use of the member revocation list, to determine whether the signature unit 2 having created the data is a device of a valid group member. Furthermore, the judging means 407B includes a function to send response data including a member status indicating "valid" or "invalid" to the verification result output means 302 of the verification unit 3.

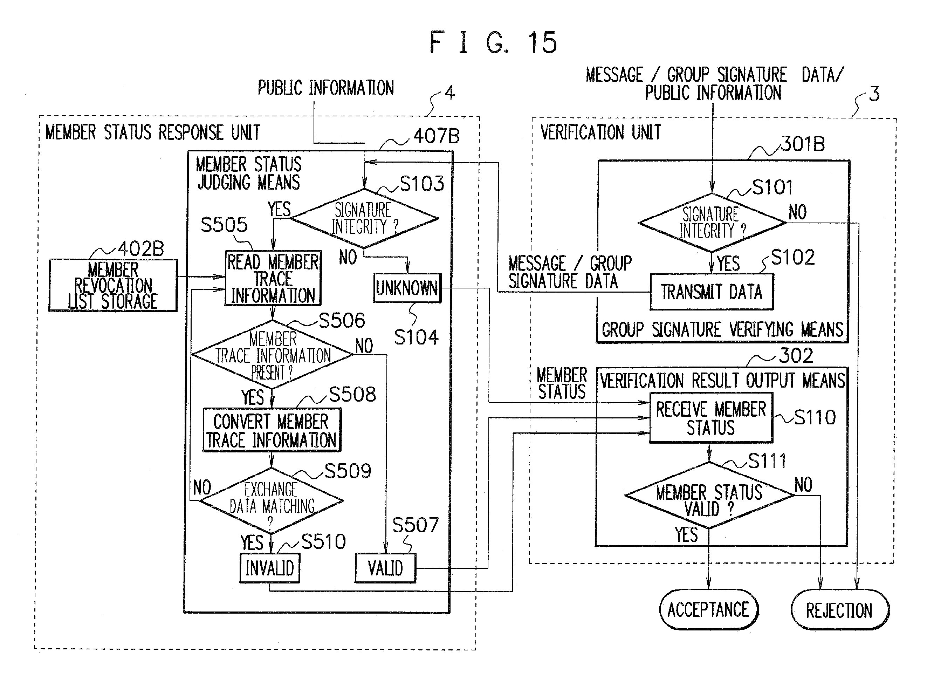

Next, operation will be described. FIG. 15 is a flowchart showing still another example of the processing in which the group signature system judges validity of the signature attached to the message to determine whether the associated signature unit is a revoked member. Referring next to FIGS. 12 and 15, description will be given of operation of the group signature system.

First, description will be given of an operation of group subscribing processing in which when the user desires to subscribe to the group as a new member, the user is registered as a member of the group. To subscribe to the group, the signature unit 2 communicates with the group management unit 1 to execute registration processing. The group subscribing means 201B of the signature unit 2 communicates with the member registering means 103B of the management unit 1 and creates and outputs a member registration certificate, a group signature key, and member trace information. Also, the signature unit 2 makes the member registration certificate 202 store the member registration certificate, the group signature key storage section 203 store the group signature key, and the member trace information storage section 207 store the member trace information.

As shown in FIG. 13, the member registering means 103B store in the member information storage section 104B the member registration certificate and the member trace information issued to the signature unit 2 and ID information capable of identifying the signature unit 2; the certificate, the information, and the ID information being in a set.

Next, description will be given of an operation of invalid member notification processing in which the group management unit 1 notifies, as an invalid member appears, the invalid member to the member status response unit 4. To delete a signature unit 2 of a user as a member of a group from the group, the invalid member notification means 105B of the management unit 1 reads from the member information storage section 104 member trace information corresponding to the signature unit 2 to be deleted. Additionally, the notifying means 105B sends the obtained information to the response unit 4. The invalid member receiving means 401B of the response unit 4 receives the member trace information from the notification means 105B and makes the member revocation list storage section 402 store the received information.

Next, description will be given of an operation of group signature creation processing in which the signature unit 2 generates group signature data. The signature unit 2 of the user having subscribed to the group receives as an input a message according to a user operation to create group signature data for the message. The group signature creating means 206B creates group signature data according to the message received from the message input means 204, a random number generated by the random number generator 205, the member registration certificate stored in the certificate storage section 202, the group signature key stored in the key storage section 203, and the member trace information stored in the member trace information 207. In this situation, the creating means 206B creates the group signature data indicating that the signature unit 2 is a unit of a group member without revealing information capable of identifying the signature unit 2.

Also, the group signature creating means 206B creates conversion data of the member trace information. In this situation, the creating means 206B creates conversion data having a property that the member trace information cannot be identified using the conversion data, but whether or not the conversion data is obtained by converting the member trace information can be determined if the member trace information is present. For example, the creating means 206B creates the conversion data by converting the member trace information using a one-directional function. Also, the group signature creating means 206 produces group signature data including the message and the conversion data.

Next, description will be given of an operation of the processing in which the verification unit 3 and the member status response unit 4 judge validity of the group signature to determine whether the associated unit is a revoked member. The verification unit 3 receives the message and the group signature data from the signature unit 2 and verifies the group signature data to determine whether the signature is a signature appropriate for the message. As shown in FIG. 15, according to the message, the group signature data, and the public information opened by the public information opening means 101, the group signature verifying means 301B confirms whether the group signature data is signature data appropriately created by the creating means 206B (step S101). If it is not determined that the group signature data is appropriately created signature data, the verifying means 301B determines "rejection" according to the group signature data and produces a judge result indicating rejection of the message.

If it is determined that the group signature data is appropriately created signature data, the verifying means 301B confirms the member status of the signature unit 2 having created the data. That is, the verifying means 301B confirms whether the signature unit 2 is a device of a valid member of the group. The verifying means 301B sends the message and the group signature data to the member status response unit 4 (step 102) to request the response unit 4 to determine the member status.

The judging means 407B of the response unit 4 gets (receives) the message and the group signature data from the verification unit 3. Also, the judging means 407B confirms validity of the group signature data by use of the message, the group signature data, and the public information opened by the public information opening means 101 (step S103). If it is determined that the data is not appropriate, the judging means 407B determines that the member status is "unknown" and then sends response data representing "unknown" to the verification unit 3 (step 104).

If it is determined that the data is appropriate, the member status judging means 407B executes processing as below according to the member trace information stored in the member revocation list storage section 402B and the conversion data contained in the group signature data.

First, the judging means 407B reads the member trace information from the list storage section 402B (step S505). The judging means 407B determines whether the member trace information exists in the storage section 402B (step S506). If the information does not exist in the storage section 402B, the judging means 407B determines that the member status is "valid" (step S507). Thereafter, the judging means 407B sends response data indicating "valid" to the verification unit 3 and terminates the processing.

If it is determine that the information is present, the judging means 407B conducts a conversion for the obtained member trace information to create second conversion data, the conversion being equal to that conducted by the group signature creating means 206B (step S508). Additionally, the judging means 407B determines whether the conversion data contained in the group signature data matches the second conversion data thus created (step S509). If it is determined that the conversion data items match each other, the judging means 407B determines that the member status is "invalid" (step S510) and then sends response data indicating "invalid" to the verification unit 3.

If the conversion data items do not match each other, the judging means 407B returns to step S505 to read the next member trace information stored in the list storage section 402B. The judging means 407B then repeatedly executes the processing from step S505 to step S510. By executing the above processing, if it is determined that any member trace information stored in the list storage section 402B does not match the conversion data, the judging means 407B regards the member status as "valid".

The verification result output means 302 of the verification unit 3 receives the response data from the member status response unit 4 (step S110). According to the response data, the output means 302 determines whether the member status is "valid" (step S111). If it is determined that the member status is "valid" according to the response data, the output means 302 determines to "accept" the message according to the group signature data. Or, if it is determined that the member status is other than "valid", the output means 302 determines to "reject" the message according to the group signature data. The output means 302 then produces a verification result "acceptance" or "rejection".

As above, according to this embodiment, the group management unit 1 issues mutually different member trace information items for the respective signature units 2. Moreover, the signature unit 2 outputs the conversion data of the member trace information as part of the group signature data. In addition, the member status response unit 4 determines the member status using the conversion data. Therefore, the response unit 4 can determine the member status without using the opening secret key (opening information).

Eighth embodiment

Next, the eighth embodiment will be described by referring to drawings. The configuration of the group signature system is similar to that of FIG. 12 shown in conjunction with the seventh embodiment. As shown in FIG. 12, the system includes a group management unit 1, a signature unit 2, a verification unit 3, and a member status response unit 4. Also, the configurations of the group management unit 1 and the signature unit 2 are similar to those of the seventh embodiment.

As shown in FIG. 12, the verification unit 3 includes a group signature verification means 301B and a verification result output means 302.

The verification means 301B includes a function that accepts (receives) a message and group signature data from the signature unit 2 to check validity of the data. Also, the verification means 301B includes a function in which if it is judged that the group signature data is not appropriate, the verification means 301B determines "rejection" to produce the verification result. Additionally, the verification means 301B includes a function in which if it is judged that the group signature data is appropriate, the verification means 301B transmits, to confirm whether the signature unit 2 having created the data is a device of a valid group member, the conversion data contained in the message to the member status judging means 407B of the member status response unit 4.

The verification result output means 302 includes a function to receive the judge result of the member status from member status judging means 407B of the member status response unit 4. In addition, the output means 302 includes a function in which if the received result is "valid", the output means 302 determines "acceptance" and if the received result is "invalid", the output means 302 determines "rejection" to produce the verification result of "acceptance" or "rejection".

As shown in FIG. 12, the member status response unit 4 includes, as in the seventh embodiment, invalid member receiving means 401B, a member revocation list storage section 402B, and member status judging means 407B.

The receiving means 401B includes a function to receive the member trace information of an invalid member sent from the invalid member notifying means 105B to store the information in the member revocation list storage section 402B.

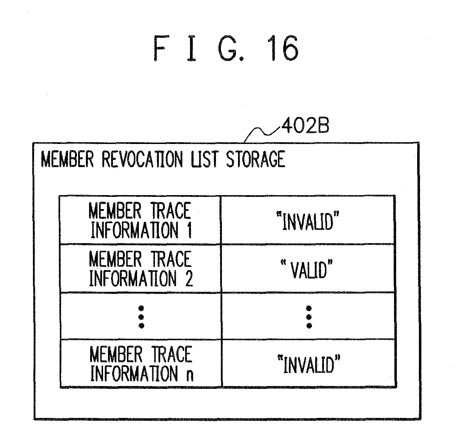

The storage section 402B stores the member revocation list. FIG. 16 is an explanatory diagram showing another example of information stored in the storage section 402B. As shown in FIG. 16, the storage section 402B stores as the member revocation list, for example, member trace information corresponding to the signature units 2 belonging to the group and member statuses of the corresponding signature units 2. Also, the list storage section 402B stores information of "valid" or "invalid" as the member status.

The judging means 407B includes a function in which the means 407B receives the message and the group signature data from the group signature verifying means 301B of the verification unit 3 to determine, by use of the member revocation list, whether the signature unit 2 having created the data is a device of a valid group member. Furthermore, the judging means 407B includes a function to send response data including a member status indicating "valid" or "invalid" to the verification result output means 302 of the verification unit 3.

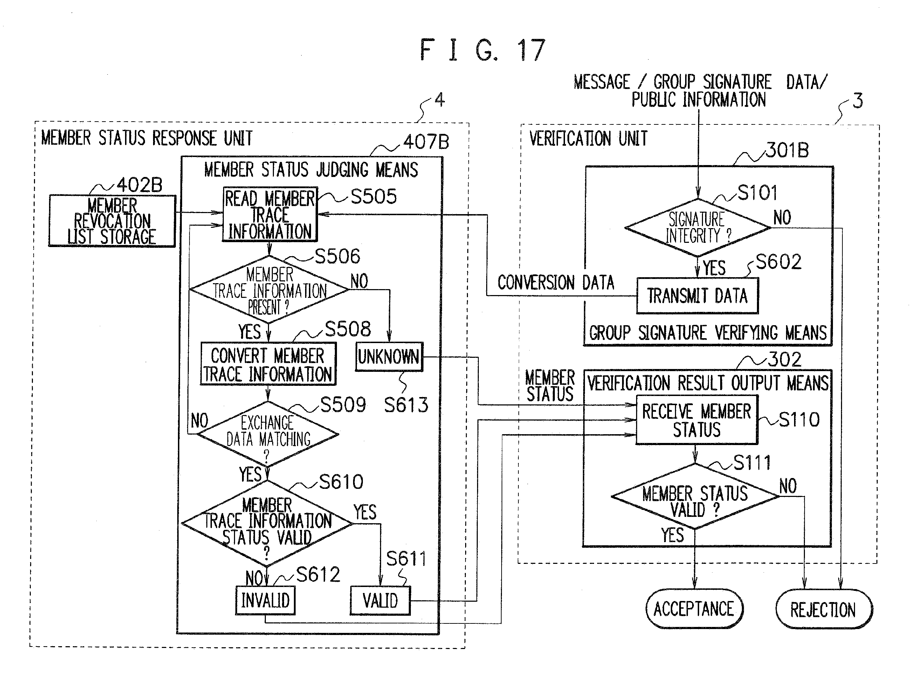

Next, operation will be described. FIG. 17 is a flowchart showing still another example of the processing in which the group signature system judges validity of the signature attached to the message to determine whether the associated signature unit is a revoked member. Referring next to FIGS. 12 and 17, description will be given of operation of the group signature system. In this connection, the member subscribing processing, the invalid member notifying processing, and the group signature creating processing are similar to the processing in the seventh embodiment.

The verification unit 3 receives the message and the group signature data from the signature unit 2 and verifies the group signature data to determine whether the group signature data is a signature appropriate for the message. As shown in FIG. 17, according to the message, the group signature data, and the public information opened by the public information opening means 101, the group signature verifying means 301B confirms whether the group signature data is signature data appropriately created by the creating means 206B (step S101). If it is not determined that the group signature data is appropriately created, the verifying means 301B determines "rejection" according to the group signature data and produces a judge result indicating rejection of the message.

If it is determined that the group signature data is appropriately created, the verifying means 301B confirms the member status of the signature unit 2 having created the data. That is, the verifying means 301B confirms whether the signature unit 2 is a device of a valid member of the group. The verifying means 301B sends the conversion data contained in the group signature data to the member status response unit 4 (step 602) to request determination of the member status of the signature unit 2.

When the conversion data is obtained (received) from the verification unit 3, the judging means 407B of the response unit 4 reads the member trace information from the list storage section 402B (step S505). The judging means 407B determines whether the member trace information exists in the list storage section 402B (step S506).

If it is determined that the information exists in the storage section 402B, the judging means 407B executes the processing as below. The judging means 407B conducts a conversion for the obtained member trace information to create second conversion data, the conversion being equal to that conducted by the group signature creating means 206B (step S508). In addition, the judging means 407B determines whether the conversion data contained in the group signature data matches the second conversion data thus created (step S509).

If it is determined that the conversion data items do not match each other, the judging means 407B returns to step S505 to read the new member trace information stored in the list storage section 402B. The judging means 407B then repeatedly executes the processing from step S505 to step S510.

If it is determined that the conversion data items match each other, the judging means 407B examines the member status stored in the member revocation list with a correspondence between the member trace information and the member status (step S610). Thereafter, the judging means 407B sends to the verification unit 3 response data indicating "valid" or "invalid" according to the member status. For example, if the member status corresponding to the member trace information is "valid", the judging means 407B sends response data indicating "valid" (step S611). Or, if the member status corresponding to the member trace information is "invalid", the judging means 407B sends response data indicating "invalid" (step S612).

If it is determined that any member trace information stored in the list storage section 402B does not match the conversion data and there does not exist member trace information to be read, the member status judging means 407B determines that the member status is "unknown" (step S613). The judging means 407B then sends response data indicating "unknown" to the verification unit 3.

The verification result output means 302 of the verification unit 3 receives the response data from the member status response unit 4 (step S110). According to the response data, the output means 302 determines whether the member status is "valid" (step S111). If it is determined that the member status is "valid" according to the response data, the output means 302 determines to "accept" the message according to the group signature data. Or, if it is determined that the member status is other than "valid", the output means 302 determines to "reject" the message according to the group signature data. The output means 302 then produces a verification result "acceptance" or "rejection".

First exemplary implementation

Next, description will be given of the first exemplary implementation. In this connection, the implementation corresponds to the first embodiment. The group management unit 1 determines constants commonly used in the system. First, the unit 1 determines the security parameters $\varepsilon$, k, and lp. Moreover, the unit 1 selects $\lambda 1$, $\lambda 2$, $\gamma 1$ and $\gamma 2$ to hold $\lambda 1 > \varepsilon(\lambda 2 + k)$, $\lambda 2 > 4lp$, $\lambda 1 > \varepsilon(\gamma 2 + k)$, and $\gamma 2 > \gamma 1 + 2$. Additionally, the unit 1 determines a collision difficulty hash function H. Thereafter, the unit 1 outputs the determined $\varepsilon$, k, lp, $\lambda 1$, $\lambda 2$, $\gamma 1$, $\gamma 2$, and H to the public information opening means 101.

Subsequently, the group management unit 1 generates member registering information. The unit 1 first selects prime numbers p' and q' having a size of lp bits. Next, the unit 1 calculates p = 2p' + 1 and q = 2q' + 1 to obtain n = pq. Also, the unit 1 randomly selects a, a0, g, and h from a group of quadratic residues of n. The unit 1 respectively outputs (p', q') to the member registering information storage 102 and (n, a, a0, g, h) to the public information opening means 101.

Next, the group management unit 1 generates opening information. The unit 1 randomly selects x from a multiplicative group of orders p' and q' to calculate expression (1).

$$y = g^x \bmod n \qquad \text{expression (1)}$$

The group management unit 1 respectively outputs x to the opening information storage section 106 and y to the public information opening means 101. Also, the opening information created by the unit 1 is notified, and is kept secret from the member status response unit 4.

After the initialization and the key creation, to subscribe to the group, the signature unit 2 executes registration processing by communicating with the group management unit 1. As a result of the registration processing, the signature unit 2 acquires a group secret key xi and a member registration certificate (Ai, ei) satisfying expression (2)

$$a^{xi}a0 = A_i^{ei} \qquad\qquad \text{expression } (2)$$

The group subscribing means 201 of the signature unit 2 randomly selects tilde si from an interval from 0 to $2\lambda^2$ and tilde ri from an interval from 0 to $n^2$ respectively. Then, the subscribing means 201 calculates expression (3).

$$C_1 = g^{\tilde{xi}}h^{\tilde{r}} \qquad\qquad \text{expression } (3)$$

Also, the group subscribing means 201 creates proof data indicating that the tilde xi and tilde ri have been appropriately created. In addition, the means 201 selects random numbers t1 and t2 satisfying expression (4) and calculates expression (5).

$$t_1 \in [0, 2^{\lambda_2}], t_2 \in [0, n^2] \qquad\qquad \text{expression } (4)$$

$$
\begin{aligned}
c_1 &= H(g \parallel h \parallel g^{t_1} h^{t_2}) \\
s_1 &= t_1 - c_1 \tilde{x}_i \qquad\qquad \text{expression } (5)\\
s_2 &= t_2 - c_1 \tilde{r}
\end{aligned}
$$

Thereafter, the group subscribing means 201 transmits (C1, c1, s1, s2) and digital signature of the signature unit 2 for (C1, c1, s1, s2), to the group management unit 1.

When C1, c1, s1, and s2 are received, the member registering means 103 of the unit 1 confirms the digital signature using the public key certificate of the signature unit 2 and then confirms whether expression (6) is satisfied.

$$c_1 = H(g \parallel h \parallel C_1^{c_1} g^{s_1} h^{s_2}) \qquad\qquad \text{expression } (6)$$

When it is confirmed that the expression (6) is satisfied, the member registering means 103 randomly selects αi and βi satisfying the condition of expression (7) and sends them to the signature unit 2.

$$\alpha_i, \beta_i \in [0, 2^{\lambda_2}] \qquad\qquad \text{expression } (7)$$

When αi and βi are received, the group subscribing means 201 calculates expression (8).

$$x_i = 2^{\lambda_1} + (\alpha_i \tilde{x}_i + \beta_i \bmod 2^{\lambda_2}) \qquad \text{expression (8)}$$

In this connection, xi thus calculated is a group signature key. Therefore, it is considered that the group management unit 1 and the signature unit 2 have randomly created the group signature key. However, the management unit 1 cannot calculate the group signature key. Next, the group subscribing means 201 calculates expression (9).
$$C_2 = a^{xi} \bmod n \qquad \text{expression (9)}$$

Moreover, the group subscribing means 201 creates proof data indicating that xi has been appropriately created. Also, the means 201 selects random numbers t3, t4, and t5 satisfying the condition of expression (10) and calculates expression (11)
$$t_3 \in \pm\{0,1\}^{\varepsilon(\lambda_2 + k)}, \quad t_4 \in \pm\{0,1\}^{\varepsilon(\lambda_2 + k)}$$
$$t_5 \in \pm\{0,1\}^{\varepsilon(2lp + \lambda_2 + k)} \qquad \text{expression (10)}$$

$$c_2 = H(g \parallel h \parallel a \parallel C_1 \parallel C_2 \parallel \alpha i \parallel \beta i \parallel a^{t_3} \parallel g^{t_3}(g^{2^{\lambda_2}})^{t_4} h^{t_5})$$
$$s_3 = t_3 - c_2(x_i - 2^{\lambda_1})$$
$$s_4 = t_4 - c_2((\alpha i \tilde{x} i + \beta i - xi + 2^{\lambda_1})/2^{\lambda_2})$$
$$s_5 = t_5 - c \alpha i \tilde{r} \qquad \text{expression (11)}$$

The group subscribing means 201 then sends (C2,c2,s3,s4,s5) and digital signature of the signature unit 2 for (C2,c2,s3,s4,s5), to the group management unit 1.
When C2, c2, s3, s4, and s5 are received, the member registering means 103 of the unit 1 determines whether expression (12) holds.
$$c_2 = H(g \parallel h \parallel a \parallel C_1 \parallel C_2 \parallel \alpha i \parallel \beta i \parallel (C_2/a^{2^{\lambda_1}})^{c_2} a^{s_3} \parallel$$
$$(c_1^{\alpha i} g^{\beta i})^{c_2} g^{s_3}(g^{2^{\lambda_2}})^{s_4} h^{s_5})$$

$$\text{expression (12)}$$

When it is confirmed that expression (12) holds, the member registering means 103 randomly selects a prime number ei satisfying the condition of expression (13) and calculates expression (14).
$$ei \in [2^{\gamma_1} - 2^{\gamma_2}, 2^{\gamma_1} + 2^{\gamma_2}] \qquad \text{expression (13)}$$

$$A_i = (C_2 a_0)^{1/ei} \bmod n \qquad \text{expression (14)}$$

Incidentally, the value obtained using expression (4) cannot be calculated without knowing p' and q'. The member registering means 103 transmits the obtained (Ai,ei) as a member registration certificate to the signature unit 2.

When (Ai,ei) is received, the group subscribing means 201 of the signature unit 2 determines whether expression (2) holds to confirm whether the member registration certificate is appropriately created. If it is determined that the certificate is appropriately created, the subscribing means 201 makes the registration certificate storage section 202 store the certificate (Ai,ei). Moreover, the means 201 makes the group signature key storage section 203 store xi as a group signature key.

The member registering means 103 of the group management unit 1 makes the member information storage section 104 store the certificate (Ai,ei) corresponding to the signature unit 2, (C1,C2,c1,c2,s1,s2,s3,s4,s5), and the digital signature of the signature unit 2 attached to each thereof. Furthermore, the management unit 1 notifies the member information acquired according to the above procedure to the member status response unit 4.

If a signature unit 2 having subscribed to the group is deleted from the group, the invalid member notifying means 105 of the management unit 1 notifies (transmits) the public key certificate corresponding to the signature unit 2 of the member who leaves the group to the response unit 4. The invalid member receiving means 401 of the response unit 4 receives the public key certificate and adds the certificate to the member revocation list stored in the member revocation list storage section 402.

The group signature creating means 206 of the signature unit 2 having acquired the member registration certificate and the group signature key creates group signature data. First, the random number generator 205 generates a random number "w" including 2lp bits and outputs the random number w to the group signature creating means 206. When the random number w is received, the creating means 206 calculates, according to the random number, the member registration certificate (Ai,ei), and the public information opened by the public information opening means 101, the conversion data of (Ai,ei) by use of expression (15).

$$T_1 = A_i y^w \bmod n, \quad T_2 = g^w \bmod n, \quad T_3 = g^{ei} h^w \bmod n \qquad \text{expression (15)}$$

Next, the creating means 206 creates data indicating that the conversion data is appropriately created. The random number generator 205 generates a random number r1 including $\varepsilon(\gamma2 + k)$ bits, a random number r2 including $\varepsilon(\lambda2 + k)$ bits, a random number r3 including $\varepsilon(\gamma1 + 2lp + k + 1)$ bits, and a random number r4 including $\varepsilon(2lp + k)$ bits and delivers the random numbers to the group signature creating means 206. When the random numbers are received, the creating means 206 calculates expression (16).

$$d_1 = T_1^{r_1} /(a^{r_2} y^{r_3}) \bmod n, \; d_2 = T_2^{r_1} / g^{r_3} \bmod n, \; d_3 = g^{r_4} \bmod n,$$

$$d_4 = g^{r_1} h^{r_4} \bmod n \qquad \text{expression (16)}$$

Next, the group signature creating means 206 calculates expression (17) using the message m inputted from the message input means 204. Moreover, the means 206 calculates expression (18).

$$c = H(g \| h \| y \| a_0 \| a \| T_1 \| T_2 \| T_3 \| d_1 \| d_2 \| d_3 \| d_4 \| m)$$

$$\text{expression (17)}$$

$$s_1 = r_1 - c(e_i - 2^{\gamma_1}),\ s_2 = r_2 - c(x_i - 2^{\lambda_1}),\ s_3 = r_3 - ce_iw,\ s_4 = r_4 - cw$$

$$\text{expression (18)}$$

Thereafter, the group signature creating means 206 outputs the message m and (c,s1,s2,s3,s4,T1,T2,T3) as the group signature data. Incidentally, also in this operation, the creating means 206 may calculates and outputs c" of expression (19) in place of c.

$$c'' = H(g \parallel h \parallel y \parallel a_0 \parallel a \parallel T1 \parallel T2 \parallel T3 \parallel d1 \parallel d2 \parallel d3 \parallel d4 \parallel H(m))$$

$$\text{expression (19)}$$

When the message m and the group signature data (c,s1,s2,s3,s4,T1,T2,T3) created by the signature unit 2 are received, the verification unit 3 verifies validity of the group signature data as below. In FIG. 5, the group signature verifying means 301 of the verification unit 3 determines whether the received group signature satisfies a verification expression (step S101). In the implementation, the verifying means 301 calculates expression (20) according to the message m, the group signature data (c,s1,s2,s3,s4,T1,T2,T3), and the public information opened by the public information opening means 101.

$$c' = H(g \parallel h \parallel y \parallel a_0 \parallel a \parallel T1 \parallel T2 \parallel T3 \parallel a_0^c \parallel$$

$$T_1^{s_1 - cs^{\gamma_1}} / (a^{s_2 - c2^{\lambda_1}} y^{s_3}) \bmod n \parallel T_2^{s_1 - c2^{\gamma_1}} / g^{s_3} \bmod n \parallel$$

$$T_2^c g^{s_4} \bmod n \parallel T_3^c g^{s_1 - c2^{\gamma_1}} h^{s_4} \bmod n \parallel m)$$

$$\text{expression (20)}$$

Only in a case in which the conditions that c' = c, s1 is $\varepsilon(\gamma 2 + k)+1$ bits, s2 is $\varepsilon(\lambda 2 + k)+1$ bits, s3 is $\varepsilon(\gamma 1 + 2lp + k + 1)+1$ bits, and s4 is $\varepsilon(2lp + k)+1$ bits are satisfied, the group signature verifying means 301 sends the message m and the group signature data (c,s1,s2,s3,s4,T1,T2,T3) to the member status response unit 4 (step S102). If the conditions are not satisfied, the verifying means 301 determines that the group signature data is not appropriate and produces "rejection".

Additionally, if c" is produced in place of c in the signature creation, the verifying means 301 determines whether expression (21) holds.

$$c''' = H(g \parallel h \parallel y \parallel a_0 \parallel a \parallel T1 \parallel T2 \parallel T3 \parallel a_0^{c''} T_1^{s_1 - c''s^{\gamma_1}} /$$

$$(a^{s_2 - c''2^{\lambda_1}} y^{s_3}) \bmod n \parallel T_2^{s_1 - c''2^{\gamma_1}} / g^{s_3} \bmod n \parallel T_2^{c''} g^{s_4} \bmod n \parallel$$

$$T_3^{c''} g^{s_1 - c''2^{\gamma_1}} h^{s_4} \bmod n \parallel m)$$

$$\text{expression (21)}$$

If expression (21) holds, the verifying means 301 transmits the hash value H(m) of the message and the group signature data (c",s1,s2,s3,s4,T1,T2,T3) to the member status response unit 4.

In this regard, the procedure in which the group management unit 1 and the signature unit 2 create the member registration certificate and the group signature key, the procedure in which the signature unit 2 creates the group signature data, and the procedure in which the verification unit 3 verifies the group signature data which are described above are described in non-patent document 2.

When the message and the group signature data (c,s1,s2,s3,s4,T1,T2,T3) are received, the signature opening means 404 of the member status response unit 4 confirms the verification expression for the group signature data indicated by expression (20). The opening means 404 then confirms that the received group signature data is appropriate group signature data for the received message (step S103).

If the group signature data is not appropriate, the opening means 404 determines that the member status is "unknown" and sends response data indicating "unknown" to the verification unit 3 (step S104). If it is determined that the group signature data is appropriate, the opening means 404 calculates, by use of the opening information x stored in the opening information storage section 403, signer identifying information A' according to expression (22) (step S105).

$$A' = T_1 / T_2^x \bmod n \qquad \text{expression (22)}$$

Furthermore, the signature opening means 404 outputs the obtained signer identifying information A' to the signer identifying means 406. When the information A' is received, the means 406 makes a search through the member information stored in the member information storage section 405 to identify a member registration certificate having Ai satisfying A' = Ai. Also, the opening means 404 identifies a signature unit 2 according to the digital signature stored with a correspondence established between the signature and the identified member registration certificate and then delivers the public key certificate of the signature unit 2 as ID information to the member status judging means 407 (step S106).

The judging means 407 receives the public key certificate as the ID information and makes a search through the member revocation list to determine whether the public key certificate exists in the member revocation list stored in the member revocation list storage section 404 (step S107). If the certificate does not exist in the revocation list, the judging means 407 determines that the member status is "valid" and sends response data indicating "valid" to the verification unit 3 (step S108). If the certificate exists in the revocation list, the judging means 407 determines that the member status is "invalid" and sends response data indicating "invalid" to the verification unit 3 (step S109).

When the response data is received from the response unit 4, the verification result output means 302 of the verification unit 3 determines "acceptance" according to the group signature if the response data is "valid" and determines "rejection" if the response data is "invalid". The output means 302 then delivers the verification result (steps S110 and S111).

Moreover, the group management unit 1 receives the group signature data (c,s1,s2,s3,s4,T1,T2,T3) and identifies the signature unit 2 having created the data. The signature opening means 107 calculates, by use of the opening information x stored in the opening information storage section 106, the signer identifying information A' according to expression (22) and feeds the information A' to the signer identifying means 108. Next, the identifying means 108 makes a search through the member information stored in the storage section 104 to retrieve Ai matching A'. When the matching Ai is detected, the identifying means 108 identifies the signature unit which is the owner of Ai according to the digital signature attached to the member information containing Ai.

Second exemplary implementation

Next, description will be given of the second exemplary implementation. In this connection, the implementation corresponds to the second embodiment. Also, the initialization, the key creation processing, and the group subscribing processing executed by the group management unit 1 and the signature unit 2 are similar to those of the first exemplary implementation.

To delete a signature unit 2 as a member of a group from the group, the invalid member notification means 105A of the unit 1 notifies (transmits) the member registration certificate (Ai,ei) corresponding to the signature unit of the member who leaves the group to the member status response unit 4. The invalid member receiving means 401A of the response unit 4 receives the member registration certificate (Ai,ei) and adds the certificate to the member revocation list stored in the member revocation list storage section 402A.

Additionally, the group signature creating processing is similar to that of the first exemplary implementation.

The verification unit 3 receives the message and the group signature data (c,s1,s2,s3,s4,T1,T2,T3). Then, the group signature verifying means 301 of the verification unit 3 confirms, as in the first implementation, whether the data is appropriate (step S101 shown in FIG. 8). If it is confirmed that the data is appropriate, the verifying means 301 sends the message and the group signature data (c,s1,s2,s3,s4,T1,T2,T3) to the member status response unit 4.

Incidentally, as in the first implementation, the procedure to create the member registration certificate and the group signature key, the procedure to create the group signature data, and the procedure to verify the group signature data are described in non-patent document 2.

When the message and the group signature data (c,s1,s2,s3,s4,T1,T2,T3) are received, the signature opening means 404A of the member status response unit 4 confirms the verification expression for the group signature data indicated by expression (20). The opening means 404A then confirms that the received group signature data is appropriate group signature data for the received message (step S103).

If the group signature data is not appropriate, the opening means 404A determines that the member status is "unknown" and sends response data indicating "unknown" to the verification unit 3 (step S104). If it is determined that the group signature data is appropriate, the opening means 404A calculates, by use of the opening information x stored in the opening information storage section 403, signer identifying information A' according to expression (22) (step S105). Moreover, the opening means 404A delivers the obtained information A' to the member status judging means 407A.

When the signer identifying information A' is received, the judging means 407A determines whether Ai satisfying the condition of A' = Ai exists in the member revocation list stored in the member revocation list storage section 402A (step S206). If it is determined that such Ai exists in the list, the judging means 407A determines that the member status is "invalid" (step S108); and if it is not determined that such Ai exists in the list, the judging means 407A determines that the member status is "valid" (step S109). Thereafter, the judging means 407A transmits response data indicating "invalid" or "valid" to the verification unit 3.

When the response data is received(step S110), the verification result output means 302 of the verification unit 3 executes processing similar to that of the first implementation to produce a verification result (step S111). Also, the signer identifying processing executed by the group management unit 1 is similar to that of the first implementation.

Third exemplary implementation

Next, description will be given of the third exemplary implementation. Incidentally, the implementation corresponds to the third embodiment. Furthermore, the initialization, the key creation processing, and the group subscribing processing, and member revoking processing executed by the group management unit 1 and the signature unit 2 are similar to the processing of the first implementation.

Also, the group signature creating processing is executed in a way similar to that of the first implementation, that is, the group signature creating means 206 of the signature unit 2 produces the message and the group signature data (c,s1,s2,s3,s4,T1,T2,T3).

The verification unit 3 receives the message m and the group signature data (c,s1,s2,s3,s4,T1,T2,T3) and confirms validity of the data as in the first implementation (step S101 shown in FIG. 9). If it is confirmed that the data is appropriate, the verifying means 301 sends (T1,T2) to the member status response unit 4 (step S302).

Incidentally, as in the first implementation, the procedure to create the member registration certificate and the group signature key, the procedure to create the group signature data, and the procedure to verify the group signature data are described in non-patent document 2.

When (T1,T2) is received, the signature opening means 404 of the member status response unit 4 calculates A' by use of the opening information x stored in the opening information storage section 403 as in the first implementation and outputs the obtained A' as signer identifying information to the signer identifying means 406.

When the signer identifying information is received, the member status judging means 407 executes processing similar to that of the first implementation and sends response data. Additionally, when the response data is received, the verification result output means 302 of the verification unit 3 executes processing similar to that of the first implementation to produce a verification result. Also, the signer identifying processing executed by the group management unit 1 is similar to that of the first implementation

Fourth exemplary implementation

Next, description will be given of the fourth exemplary implementation. Incidentally, the implementation corresponds to the fourth embodiment. Furthermore, in the implementation, the initialization, the key creation processing, and the group subscribing processing, member revoking processing, and group signature creating processing executed by the group management unit 1 and the signature unit 2 are similar to the processing of the third implementation.

The verification unit 3 receives the message m and the group signature data (c,s1,s2,s3,s4,T1,T2,T3) and confirms validity of the data as in the first implementation (step S101 shown in FIG. 11). If it is confirmed that the data is appropriate, the verifying means 301 sends (T1,T2) of the data to the member status response unit 4 (step S302).

In this connection, as in the first implementation, the procedure to create the member registration certificate and the group signature key, the procedure to create the group signature data, and the procedure to verify the group signature data are described in non-patent document 2.

When (T1,T2) is received, the signature opening means 404A of the member status response unit 4 calculates A' by use of the opening information x as in the first implementation and outputs the obtained A' as signer identifying information to the member status judging means 407A.

When the information A' is received, the judging means 407A makes a search through the member revocation list to determine whether A' satisfying the condition of A' = Ai exists in the member revocation list stored in the member revocation storage section 402A (step S404). If not found (A' satisfying the condition does not exist), the judging means 407A determines that the member status is "unknown" and then sends response data representing "unknown" to the verification unit 3 (step S405). If found (A' satisfying the condition exists), the judging means 407A determines that the member status is "valid" or "invalid" according to the status of Ai stored in the member revocation list and then sends response data representing "valid" or "invalid" to the verification unit 3 (steps S407 and S408).

When the response data is received, the verification result output means 302 of the verification unit 3 produces a verification result by executing processing similar to that of the third implementation. Also, the signer identifying processing executed by the group management unit 1 is similar to that of the first implementation.

Fifth exemplary implementation

Next, description will be given of the fifth exemplary implementation. Incidentally, the implementation corresponds to the fifth embodiment. Furthermore, the initialization, the key creation processing, the group subscribing processing, and member revoking processing executed by the group management unit 1 and the signature unit 2 are similar to the processings of the second implementation.

The random number generator 205 of the signature unit 2 generates a random number w as in the first implementation. Furthermore, the group signature creating means 206 of the signature unit 2 calculates expressions (15) and (16) as in the first implementation. Also, the creating means 206 calculates expression (23).

$$c_1 = H(g \parallel h \parallel y \parallel a_0 \parallel a \parallel T_1 \parallel T_2 \parallel T_3 \parallel d_1 \parallel d_2 \parallel d_3 \parallel d_4)$$

$$\text{expression (23)}$$

Additionally, the group signature creating means 206 calculates expression (24).

$$s_1 = r_1 - c_1(e_i - 2^{\gamma_1}), \quad s_2 = r_2 - c_1(x_i - 2^{\gamma_1}), \quad s_3 = r_3 - c_1 e_i w, \quad s_4 = r_4 - c_1 w$$

$$\text{expression (24)}$$

Next, the random number generator 205 additionally generates a random number r5 including $\varepsilon(\gamma_2 + k)$ bits, a random number r6 including $\varepsilon(\lambda_2 + k)$ bits, a random number r7 including $\varepsilon(\gamma_1 + 2lp + k + 1)$ bits, and a random number r8 including $\varepsilon(2lp + k)$ bits. The group signature creating means 206 calculates expression (25) using the random numbers r5 to r8.

$$d_5 = T_1^{r_5} / (a^{r_6} y^{r_7}) \bmod n, \quad d_6 = T_2^{r_5} / g^{r_7} \bmod n, \quad d_7 = g^{r_8} \bmod n, \quad d_8 = g^{r_5} h^{r_8} \bmod n$$

$$\text{expression (25)}$$

Furthermore, the creating means 206 calculates expressions (26) and (27) for the message m inputted from the message input means 204.

[Expression 25]

$$c_2 = H(g \parallel h \parallel y \parallel a_0 \parallel a \parallel T_1 \parallel T_2 \parallel T_3 \parallel d_5 \parallel d_6 \parallel d_7 \parallel d_8 \parallel m)$$

expression (26)

[Expression 26]

$$s_5 = r_5 - c_2(e_i - 2^{\gamma_1}), \; s_6 = r_6 - c_2(x_i - 2^{\lambda_1}), \; s_7 = r_7 - c_2 e_i w, \; s_8 = r_8 - c_2 w$$

expression (27)

Thereafter, the group signature creating means 206 outputs the message m and (c1,c2,s1,s2,s3,s4,s5,s6,s7,s8,T1,T2,T3) as the group signature data.

When the message m and the group signature data (c1,c2,s1,s2,s3,s4,s5,s6,s7,s8,T1,T2,T3) are received, the verification unit 3 verifies validity of the group signature data. The group signature verifying means 301 of the verification unit 3 determines whether the conditions of expressions (28) to (30) are satisfied according to the message m, the group signature data (c1,c2,s1,s2,s3,s4,s5,s6,s7,s8,T1,T2,T3), and the public information opened by the public information opening means 101.

$$c_1 = H(g \parallel h \parallel y \parallel a0 \parallel T1 \parallel T2 \parallel T3 \parallel a_0^{c_1} T_1^{s_1 - c_1 s^{\gamma_1}} /(a^{s_2 - c_1 2^{\lambda_1}} y^{s_3}) \bmod n \parallel$$
$$T_2^{s_1 - c_1 2^{\gamma_1}} / g^{s_3} \bmod n \parallel T_2^{c_1} g^{s_4} \bmod n \parallel T_3^{c_1} g^{s_1 - c_1 2^{\gamma_1}} h^{s_4} \bmod n)$$

expression (28)

$$c_2 = H(g \parallel h \parallel y \parallel a0 \parallel T1 \parallel T2 \parallel T3 \parallel a_0^{c_2} T_4^{s_5 - c_2 2^{\gamma_1}} /(a^{s_6 - c_2 2^{\lambda_1}} y^{s_7}) \bmod n \parallel$$
$$T_5^{s_5 - c_2 2^{\gamma_1}} / g^{s_7} \bmod n \parallel T_5^{c_2} g^{s_8} \bmod n \parallel T_6^{c_2} g^{s_5 - c_1 2^{\gamma_1}} h^{s_8} \bmod n \parallel m)$$

expression (29)

$$s_1 \in \pm\{0,1\}^{\varepsilon(\gamma_2 + k)+1}, s_2 \in \pm\{0,1\}^{\varepsilon(\lambda_2 + k)+1},$$
$$s_3 \in \pm\{0,1\}^{\varepsilon(\lambda_1 + 2lp + k+1)+1}, s_4 \in \pm\{0,1\}^{\varepsilon(2lp + k)+1},$$
$$s_5 \in \pm\{0,1\}^{\varepsilon(\gamma_2 + k)+1}, s_6 \in \pm\{0,1\}^{\varepsilon(\lambda_2 + k)+1},$$
$$s_7 \in \pm\{0,1\}^{\varepsilon(\lambda_1 + 2lp + k+1)+1}, s_8 \in \pm\{0,1\}^{\varepsilon(2lp + k)+1}$$

expression (30)

If the conditions of expressions (28), (29), and (30) are not satisfied, the verification unit 3 determines "rejection" according to the group signature data. If the conditions of expressions (28), (29), and (30) are satisfied, the verification unit 3 transmits (c1,s1,s2,s3,s4,T1,T2,T3) of the group signature data to the member status response unit 4.

When (c1,s1,s2,s3,s4,T1,T2,T3) is received, the signature opening means 404 of the response unit 4 confirms whether expressions (28) and (31) hold.

$$s_1 \in \pm\{0,1\}^{\varepsilon(\gamma_2+k)+1}, s_2 \in \pm\{0,1\}^{\varepsilon(\lambda_2+k)+1},$$
$$s_3 \in \pm\{0,1\}^{\varepsilon(\lambda_1+2lp+k+1)+1}, s_4 \in \pm\{0,1\}^{\varepsilon(2lp+k)+1} \qquad \text{expression (31)}$$

If expressions (28) and (31) do not hold, the opening means 404 determines that the member status is "unknown" and sends response data indicating "unknown" to the verification unit 3. If expressions (28) and (31) hold, the opening means 404 calculates signer identifying information Ai by use of the opening information x as in the first implementation.

When the signer identifying information is received, the judging means 407 executes processing similar to that of the first or second implementation and sends response data. Moreover, when the response data is received, the verification result output means 302 of the verification unit 3 executes processing similar to that of the first or second implementation to produce a verification result. Also, the signer identifying processing executed by the group management unit 1 is similar to that of the first implementation.

Sixth exemplary implementation

Next, description will be given of the sixth exemplary implementation. Incidentally, the implementation corresponds to the sixth embodiment. Furthermore, in the implementation, the initialization executed by the group management unit 1 and the signature unit 2 is similar to that of the first or second implementation.

In the key creating processing, the group management unit 1 generates opening information x and public information y as in the first implementation. The member status response unit 4 randomly selects u from a multiplicative group of orders p' and q' to calculate expression (32).

$$z = g^u \bmod n \qquad \text{expression (32)}$$

The response unit 4 makes the opening information storage section 403 store u and outputs z as a public key of the response unit 4 to public information opening means 101. Incidentally, the group subscribing processing and the member revoking processing are similar to the processing of the first or second implementation.

The random number generator 205 of the signature unit 2 generates a random number t including 2lp bits. Moreover, the group signature creating means 206 calculates expression (33) using the public key z of the response unit 4.

$$T_1 = A_i z^t \bmod n, T_2 = g^t \bmod n, T_3 = g^{e_i} h^t \bmod n \qquad \text{expression (33)}$$

Moreover, the random number generator 205 creates a random number w including 21p bits. The group signature creating means 206 calculates expression (34) by use of a public key y of the group management unit 1 as in the case of the public key z.

$$T_4 = A_i y^w \bmod n, T_5 = g^w \bmod n, T_6 = g^{e_i} h^w \bmod n \qquad \text{expression (34)}$$

Additionally, the group signature creating means 206 generates proof data indicating that T1 and T2 are appropriate conversion data of the member registration certificate. First, the random number generator 205 generates a random number r1 including $\varepsilon(\gamma2 + k)$ bits, a random number r2 including $\varepsilon(\lambda2 + k)$ bits, a random number r3 including $\varepsilon(\gamma1 + 2lp + k + 1)$ bits, and a random number r4 including $\varepsilon(2lp + k)$ bits. Also, the group signature creating means 206 calculates expression (35) and calculates expression (36).

$$d_1 = T_1^{r_1} /(a^{r_2} y^{r_3}) \bmod n, \; d_2 = T_2^{r_1} / g^{r_3} \bmod n, \; d_3 = g^{r_4} \bmod n, \; d_4 = g^{r_1} h^{r_4} \bmod n$$

$$\text{expression (35)}$$

$$c_1 = H(g \| h \| y \| z \| a_0 \| a \| T_1 \| T_2 \| T_3 \| d_1 \| d_2 \| d_3 \| d_4)$$

$$\text{expression (36)}$$

Furthermore, the creating means 206 calculates expression 37.

$$s_1 = r_1 - c_1(e_i - 2^{\gamma1}), \; s_2 = r_2 - c_1(x_i - 2^{\lambda1}), \; s_3 = r_3 - c_1 e_i t, \; s_4 = r_4 - c_1 t$$

$$\text{expression (37)}$$

Thereafter, the group signature creating means 206 creates data indicating that T4 and T5 are appropriate conversion data items of the member registration certificate and (T1,T2) and (T4,T5) are obtained by converting one and the same member registration certificate. The random number generator 205 generates a random number r5 including $\varepsilon(\gamma2 + k)$ bits, a random number r6 including $\varepsilon(\lambda2 + k)$ bits, a random number r7 including $\varepsilon(\gamma1 + 21p + k + 1)$ bits, a random number r8 including $\varepsilon(2lp + k)$ bits, and a random number r9 including $\varepsilon(2lp + k)$ bits. Also, the group signature creating means 206 calculates expression (38).

$$d_5 = T_4^{r_5} /(a^{r_6} y^{r_7}) \bmod n, \; d_6 = T_5^{r_5} / g^{r_7} \bmod n, \; d_7 = g^{r_8} \bmod n, \; d_8 = g^{r_5} h^{r_8} \bmod n,$$

$$d_9 = g^{r_9} \bmod n, \; d_{10} = y^{r_9} z^{-r_8} \bmod n, \; d_{11} = g^{r_9 - r_8} \bmod n, \; d_{12} = h^{r_9 - r_8} \bmod n$$

$$\text{expression (38)}$$

Next, the creating means 206 calculates expression (39) and expression (40) using the message m.

$$c_2 = H(g \| h \| y \| z \| a_0 \| a \| T_1 \| T_2 \| T_3 \| T_4 \| T_5 \| T_6 \|$$
$$d_5 \| d_6 \| d_7 \| d_8 \| d_9 \| d_{10} \| d_{11} \| d_{12} \| m)$$

$$\text{expression (39)}$$

$$s_5 = r_5 - c_2(e_i - 2^{\gamma 1}), \quad s_6 = r_6 - c_2(x_i - 2^{\lambda_1}), \quad s_7 = r_7 - c_2 e_i t,$$

$$s_8 = r_8 - c_2 t, \quad s_9 = r_9 - c_2 r$$

$$\text{expression } (40)$$

Thereafter, the group signature creating means 206 outputs the message m and (c1,c2,s1,s2,s3,s4,s5,s6,s7,s8,s9,T1,T2,T3,T4,T5,T6) as the group signature data.

The verification unit 3 receives the message m and the group signature data (c1,c2,s1,s2,s3,s4,s5,s6,s7,s8,s9,T1,T2,T3,T4,T5,T6) and verifies validity of the group signature data. The group signature verifying means 301 of the verification unit 3 confirms whether expressions (41) and (42) are satisfied according to the message m, the group signature data (c1,c2,s1,s2,s3,s4,s5,s6,s7,s8,s9,T1,T2,T3,T4,T5,T6), and the public information opened by the public information opening means 101.

$$c_2 = H(g \parallel h \parallel y \parallel a_0 \parallel T1 \parallel T2 \parallel T3 \parallel T5 \parallel T6 \parallel a_0^{c_2} T_4^{s_5 - c_2 2^{\gamma 1}} /$$

$$(a^{s_6 - c_2 2^{\lambda 1}} z^{s_7}) \bmod n \parallel T_5^{s_5 - c_2 2^{\gamma 1}} / g^{s_7} \bmod n \parallel T_5^{c_2} / g^{s_8} \bmod n \parallel$$

$$T_6^{c_2} g^{s_8 - c_2 2^{\gamma 1}} h^{s_8} \bmod n \parallel T_2^{c_2} g^{s_9} \parallel (T_4 / T_1)^{c_2} y^{s_9} z^{-s_8} \bmod n \parallel$$

$$(T_5 / T_2)^{c_2} g^{s_9 - s_8} \bmod n \parallel (T_6 / T_3)^{c_2} h^{s_9 - s_8} \bmod n \parallel m)$$

$$\text{expression } (41)$$

$$s_5 \in \pm\{0,1\}^{\varepsilon(\gamma 2 + k) + 1}, s_6 \in \pm\{0,1\}^{\varepsilon(\lambda_2 + k) + 1},$$

$$s_7 \in \pm\{0,1\}^{\varepsilon(\lambda_1 + 2lp + k + 1) + 1}, s_8 \in \pm\{0,1\}^{\varepsilon(2lp + k) + 1} \qquad \text{expression } (42)$$

If expressions (41) and (42) are not satisfied, the group signature verifying means 301 determines that the group signature data is to be "rejected" and produces a verification result. If expressions (41) and (42) are satisfied, the group signature verifying means 301 sends (c1,s1,s2,s3,s4,T1,T2,T3) of the group signature data to the member status response unit 4.

When (c1,s1,s2,s3,s4,T1,T2,T3) is received, the signature opening means 404 of the member status response unit 4 confirms whether expressions (43) and (44) hold.

$$c_1 = H(g \parallel h \parallel y \parallel z \parallel a_0 \parallel T_1 \parallel T_2 \parallel T_3 \parallel a_0^{c_1} T_1^{s_1 - c_1 2^{\gamma 1}} / (a^{s_2 - c_1 2^{\lambda 1}} z^{s_3}) \bmod n \parallel$$

$$T_2^{s_1 - c_1 2^{\gamma 1}} / g^{s_3} \bmod n \parallel T_2^{c_1} g^{s_4} \bmod n \parallel T_3^{c_1} g^{s_1 - c_1 2^{\gamma 1}} h^{s_4} \bmod n)$$

$$\text{expression } (43)$$

$$s_1 \in \pm\{0,1\}^{\varepsilon(\gamma_2+k)+1}, s_2 \in \pm\{0,1\}^{\varepsilon(\lambda_2+k)+1},$$
$$s_3 \in \pm\{0,1\}^{\varepsilon(\lambda_1+2lp+k+1)+1}, s_4 \in \pm\{0,1\}^{\varepsilon(2lp+k)+1} \qquad \text{expression (44)}$$

If expressions (43) and (44) do not hold, the signature opening means 404 determines that the member status is "unknown" and sends response data indicating "unknown" to the verification unit 3. If it is determined that expressions (43) and (44) hold, the opening means 404 generates signer identifying information Ai by use of the opening information x as in the first implementation.

When the signer identifying information is received, the member status judging means 407 executes processing similar to that of the first or second implementation and then sends response data. Moreover, when the response data is received, the verification result output means 302 of the verification unit 3 executes processing similar to that of the first or second implementation to produce a verification result. Also, the signer identifying processing executed by the group management unit 1 is similar to that of the first implementation.

Seventh exemplary implementation

Next, description will be given of the seventh exemplary implementation. In this regard, the implementation corresponds to the seventh embodiment. Furthermore, the initialization executed by the group management unit 1 and the signature unit 2 is similar to that of the first implementation.

In the key creating processing, the group management unit 1 selects as in the first implementation prime numbers p' and q' and calculates p = 2p' + 1 and q = 2q' + 1 to obtain n = pq. Additionally, the management unit 1 randomly selects a, a0, b, g, and h from a group of quadratic residues of n. Moreover, the unit 1 outputs (p',q') to the member registering information storage section 102 and (n,a,a0,b,g,h) to the public information opening means 101 of the management unit 1. The unit 1 generates opening information x and public information y. The unit 1 then outputs x to the opening information storage section 106 and y to the public information opening means 101.

After the initialization and the key creation, the group management unit 1 registers the signature unit 2 as a member of the group.

The signature unit 2 executes processing similar to that of the first implementation. The group subscribing means 201B of the signature unit 2 acquires the group signature key $x'_i$ and shares C2 of expression (45) with the member registering means 301B of the group management unit 1.

$$C_2 = a^{x'i} \bmod n \qquad \text{expression (45)}$$

The member registering means 103B randomly selects prime numbers ei and xi satisfying the conditions of expressions (46) and (47) and then calculates expression (48).

$$e_i \in [2^{\gamma_1} - 2^{\gamma_2}, 2^{\gamma_1} + 2^{\lambda_2}] \qquad \text{expression (46)}$$

$$x_i \in [2^{\gamma_1} - 2^{\gamma_2}, 2^{\gamma_1} + 2^{\lambda_2}] \qquad \text{expression (47)}$$

$$A_i = (C_2 a^{xi} a_0)^{1/ei} \bmod n \qquad \text{expression (48)}$$

Incidentally, the value obtained using expression (48) cannot be calculated without knowing p' and q'. The member registering means 103B transmits the obtained (Ai,ei) as a member registration certificate to the signature unit 2. Additionally, the means 103B sends the obtained xi as member trace information to the signature unit 2.

When (Ai,ei) and xi are received, the group subscribing means 201B of the signature unit 2 makes a check to determine whether or not expression (49) holds to confirm whether the member registration certificate is appropriately created.

$$a^{xi}b^{x'i}a_0 = A_i^{ei} \qquad \text{expression (49)}$$

If it is confirmed that expression (49) holds, the subscribing means 201B respectively makes the registration certificate storage 202 store the member registration certificate (Ai,ei), the group signature key storage section 202 store x'i as a group signature key, and the member trace information storage section 207 store xi.

The member registering means 103B of the group management unit 1 outputs the certificate (Ai,ei) corresponding to the signature unit 2, the member trace information xi, the contents of communication, and the digital signature of the signature unit 2 attached to each thereof to the member information storage section 104B.

To delete a signature unit 2 of a user as a member of the group from the group, the invalid member notification means 105B of the group management unit 1 reads from the member information storage section 104B the member trace information xi corresponded to the signature unit 2 to be deleted, and sends the obtained information to the member status response unit 4. The invalid member receiving means 401B of the response unit 4 receives xi and makes the member revocation list storage section 402B store the received xi.

The group signature creating means 206B of the signature unit 2 having subscribed to the group creates group signature data for the message generates group signature data. First, the random number generator 205 generates a random number w including $2l_p$ bits and outputs the random number w to the group signature creating means 206B. When the random number w is received, the creating means 206B calculates, according to the random number w, the member registration certificate (Ai,ei), and the public information opened by the public information opening means 101, the conversion data T1, T2, and T3 of (Ai,ei) by use of expression (15).

Furthermore, the random number generator 205 additionally generates a random number k including $2l_p$ bits. the creating means 206B calculates the conversion data items T4 and T5 of the member trace information xi using expression (50)

$$T_4 = g^{xik}, T_5 = g^k \qquad \text{expression (50)}$$

Next, the creating means 206B creates data indicating that these conversion data items are appropriately created. The random number generator 205 generates a random number r1 including $\varepsilon(\gamma_2 + k)$ bits, a random number r2 including $\varepsilon(\lambda_2 + k)$ bits, a random number r3 including $\varepsilon(\lambda_2 + k)$ bits, a random number r4 including $\varepsilon(\gamma_l + 2l_p + k + 1)$ bits, and a random number r5 including $\varepsilon(2l_p + k)$ bits, and then delivers the random numbers to the group signature creating means 206B. When the random numbers are received, the creating means 206B calculates expression (51).

$$d_1 = T_1^{t_1} / a^{t_1}b^{t_3}y^{t_4} \bmod n, \quad d_2 = T_2^{t_1} / g^{t_4} \bmod n, \quad d_3 = g^{t_5} \bmod n,$$
$$d_4 = g^{t_1}h^{t_5} \bmod n, \quad d_5 = T_5^{t_2} \bmod n$$

$$\text{expression (51)}$$

In addition, the creating means 206B calculates expressions (52) and (53) using the message m inputted from the message input means 204.

$$c = H(g \| h \| y \| a \| b \| T_1 \| T_2 \| T_3 \| T_4 \| T_5 \| d_1 \| d_2 \| d_3 \| d_4 \| d_5 \| m)$$

expression (52)

$$s_1 = r_1 - c(e_i - 2^{\gamma 1}), \quad s_2 = r_2 - c(x_i - 2^{\lambda 1}), \quad s_3 = r_3 - c(x'_i - 2^{\lambda_1}),$$
$$s_4 = r_4 - ce_i w, \quad s_5 = r_5 - cw$$

expression (53)

Thereafter, the group signature creating means 206B outputs the message m and (c, s1,s2,s3,s4,s5,T1,T2,T3,T4,T5) as the group signature data.

When the message m and the group signature data (c,s1,s2,s3,s4,s5,T1,T2,T3,T4,T5) are received, the verification unit 3 verifies validity of the group signature data as below. In FIG. 15, the group signature verifying means 301B of the verification unit 3 determines whether the received group signature data satisfies a predetermined verification expression (step S101). The verifying means 301B determines, according to the message m, the group signature data (c,s1,s2,s3,s4,s5,T1,T2,T3,T4,T5) and the public information opened by the public information opening means 101, whether expression (54) is satisfied and s1 is $\varepsilon(\gamma 2 + k) + 1$ bits, s2 is $\varepsilon(\lambda 2 + k) + 1$ bits, s3 is $\varepsilon(\lambda 2 + k) + 1$, s4 is $\varepsilon(\gamma 1 + 21p + k + 1) + 1$ bits, and s5 is $\varepsilon(2lp + k) + 1$ bits.

$$c = H(g \| h \| y \| a \| b \| T_1 \| T_2 \| T_3 \| T_4 \| T_5 \| a_0^c T_1^{s_1 - c2^{\gamma 1}} /$$
$$(a^{s_2 - c2^{\lambda_1}} b^{s_3 - c2^{\lambda_1}} y^{s_4}) \| T_2^{s_1 - c2^{\gamma 1}} g^{s_4} \| T_2^c g^{s_5} \| T_3^c g^{s_1 - c2^{\gamma 1}} h^{s_5} \|$$
$$T_4^c T_5^{s_2 - c2^{\lambda 1}} \| m)$$

[Expression 54]

If the verification expression is not satisfied, the verifying means 301B determines that the group signature data is not appropriate and produces "rejection". If the verification expression is not satisfied, the verifying means 301B transmits the message m and the group signature data (c,s1,s2,s3,s4,s5,T1,T2,T3,T4,T5) to the member status response unit 4 (step S102).

In this regard, the procedure in which the group management unit 1 and the signature unit 2 create the member registration certificate and the group signature key, the procedure in which the signature unit 2 creates the group signature data, and the procedure in which the verification unit 3 verifies the group signature data which are described above are described in non-patent document 2.

When the message and the group signature data (c,s1,s2,s3,s4,s5,T1,T2,T3,T4,T5) are received, the member status judging means 407B of the response unit 4 confirms validity of the group signature data (step S103). If it is determined that the data is not appropriate, the means 407B determines that the member status is "unknown" and then sends response data representing "unknown" to the verification unit 3 (step 104).

If the data is appropriate, the means 407B executes processing as below according to the member trace information xi stored in the member revocation list storage section 402B and (T4,T5) contained in the group signature data.

First, the member status judging means 407B reads the member trace information xi from the list storage section 402B (step S505). If the member trace information does not exist therein, the member status judge means 407B determines that the member status is "valid" (step S507). Thereafter, the means 407B sends response data indicating "valid" to the verification unit 3 and terminates the processing.

If the information is present, the judge means 407B determines whether expression (55) holds for the obtained information xi and (T4,T5; steps S508 and S509).

$$T_4 = T_5^{x_i}$$

expression (55)

If expression (55) holds, the judge means 407B determines that the member status is "invalid" and then sends response data indicating "invalid" to the verification unit 3 (step S510). If expression (55) does not hold, the means 407B returns to step S505 to read the next member trace information from the list storage section 402B. The means 407B then repeatedly executes the processing beginning at step S505. If expression (55) does not hold for any member trace information xi, the means 407B regards the member status as "valid".

When the response data is received from the member status response unit 4, the verification result output means 302 of the verification unit 3 determines "acceptance" according to the response data if the response data is "valid" and determines "rejection" according to the response data if the response data is other than "valid". The output means 302 then produces a verification result "acceptance" or "rejection" (steps S110 and S111). In this connection, the signer identifying processing executed by the group management unit 1 is similar to that of the first implementation.

Eighth exemplary implementation

Next, description will be given of the eighth exemplary implementation. In this regard, this implementation corresponds to the eighth embodiment. Furthermore, the initialization, the key creation processing, the group subscribing processing, the member revoking processing, and the group signature creating processing executed by the group management unit 1 and the signature unit 2 are similar to the processing of the seventh implementation.

When the message m and the group signature data (c,s1,s2,s3,s4,s5,T1,T2,T3,T4,T5) are received, the verification unit 3 verifies validity of the group signature data. In FIG. 17, the group signature verifying means 301B of the verification unit 3 determines whether the received group signature data satisfies a predetermined verification expression (step S101). The verifying means 301B determines, according to the message m, the group signature data (c, s1,s2,s3,s4,s5,T1,T2,T3,T4,T5) and the public information opened by the public information opening means 101, whether expression (54) is satisfied and s1 is $\varepsilon(\gamma 2 + k) + 1$ bits, s2 is $\varepsilon(\lambda 2 + k) + 1$ bits, s3 is $\varepsilon(\lambda 2 + k) + 1$, s4 is $\varepsilon(\gamma 1 + 21p + k + 1) + 1$ bits, and s5 is $\varepsilon(2lp + k) + 1$ bits.

If the verification expression is not satisfied, the group signature verifying means 301B determines that the group signature data is not appropriate and produces "rejection". If the verification expression is satisfied, the verifying means 301B transmits the message m and (T4,T5) to the member status response unit 4 (step S602).

In this regard, the procedure in which the group management unit 1 and the signature unit 2 create the member registration certificate and the group signature key, the procedure in which the signature unit 2 creates the group signature data, and the procedure in which the verification unit 3 verifies the group signature data which are described above are described in non-patent document 2.

When (T4,T5) is received, the member status judging means 407B of the response unit 4 reads the member trace information xi from the list storage section 402B (step S505). If it is determined that the member trace information xi exists therein, the judging means 407B continues processing, and then determines whether expression (55) holds for the next obtained xi and (T4,T5; step S508 and 509).

If expression (55) does not hold, the member status judging means 407B returns to step S505 to read the next member trace information from the list storage section 402B. If expression (55) holds, the judging means 407B checks the member status stored with a correspondence established between the member status and xi (step S610). The judging means 407B then sends response data indicating "invalid" to the verification unit 3 according to the member status (steps S611 and S612). If there does not exists any xi to be read in step S506, the judging means 407B determines that the member status is "unknown" and sends response data representing "unknown" to the verification unit 3 (step S104).

When the response data is received from the response unit 4, the verification result output means 302 of the verification unit 3 determines "acceptance" according to the group signature if the response data is "valid" and determines "rejection" if the response data is other than "valid". The output means 302 then delivers the verification result of "acceptance" or "rejection" (steps S110 and S111). Incidentally, the signer identifying processing executed by the group management unit 1 is similar to that of the first implementation.

Ninth exemplary implementation

Next, description will be given of the ninth exemplary implementation. In this regard, the implementation corresponds to one of the first to eighth embodiment. FIG. 18 is a block diagram showing an example of a configuration of a group signature system. As shown in FIG. 18, the group signature system includes a group management server 1A, a user terminal 2A, an authentication terminal 3A, and a member status response server 4A. Moreover, as shown in FIG. 18, the a group management server 1A, the user terminal 2A, the authentication terminal 3A, and the member status response server 4A are connected via a communication network 100 such as the internet to each other.

The group management server 1A is a server operated by a company (to be referred to as a group managing company hereinbelow) to manage a group. The management server 1A corresponds to the group management unit 1 shown in one of the first to eighth embodiment. Incidentally, although one group management server 1A is shown in FIG. 18, the group signature system may include a plurality of group management servers 1A.

The user terminal 2A is an information processing terminal such as a personal computer and a terminal employed by the user as a member of the group. The user terminal 2A corresponds to the signature unit 2 shown in one of the first to eighth embodiment. Incidentally, although one user terminal 2A is shown in FIG. 18, the group signature system includes a plurality of user terminals 2A. Also, the user terminal 2A may be a portable terminal, for example, a portable telephone or a PDA.

The authentication terminal 3A is an information processing terminal such as a personal computer and a terminal operated by a service company or a public organization providing various services via the communication network 100 to users. For example, the authentication terminal 3A is a terminal operated by a library and lends books in response to a request from the user terminal 2A. The authentication terminal 3A corresponds to the verification unit 3 shown in one of the first to eighth embodiment. Incidentally, although one authentication terminal 3A is shown in FIG. 18, the group signature system may include a plurality of authentication terminals 3A.

The member status response server 4A is a server operated by a company to manage the status of each member of the group in response to a request from the group managing company. The member status response server 4A corresponds to the member status response unit 4 shown in one of the first to eighth embodiment.

When a message is inputted according to a user operation, the user terminal 2A creates group signature data for the message. The terminal 2A then transmits the message and the group signature data via the communication network 100 to the authentication terminal 3A. For example, the terminal 2A sends the group signature data and a book lending request as a message to the authentication terminal 3A of the library.

After authenticating the received group signature data, the authentication terminal 3A sends a judge request for the member status of the user via the network 100 to the member status response server 4A by use of the method shown in one of the first to eighth embodiment. For example, the authentication terminal 3A sends the message as the judge request and the group signature data to the response server 4A. Additionally, for example, the authentication terminal 3A sends conversion data contained in the group signature data as the judge request to the response server 4A.

When the judge request for the member status is received, the response server 4A determines the current member status of the user of the user terminal 2A by employing the judging method shown in one of the first to eighth embodiment. The response server 4A then sends response data containing the determined member status via the communication network 100 to the authentication terminal 3A.

The authentication terminal 3A determines, according to the received response data, whether the message is to be accepted or rejected and produces a verification result of "acceptance" or "rejection". For example, if the member status is "valid", the authentication terminal 3A produces a verification result indicating that the lending of books is allowed. Moreover, for example, if the member status is "invalid", the authentication terminal 3A produces a verification result indicating that the lending of books is not allowed.

INDUSTRIAL APPLICABILITY

The present embodiments are applicable to the use of a group signature system for confirming a qualification of a member of a group while anonymity is kept. Also, it is possible to easily execute the revoking processing of a user who has lost the qualification of a group member, and hence the processing at member qualification revocation can be efficiently conducted.

BRIEF DESCRIPTION OF DRAWINGS

[FIG. 1] Block diagram showing an example of a configuration of a group signature system according to the present invention.
[FIG. 2] Block diagram showing an example of a detailed configuration of the group signature system shown in FIG. 1.
[FIG. 3] Explanatory diagram showing an example of information stored in the member information storage 104.
[FIG. 4] Explanatory diagram showing an example of information stored in the member revocation list storage 402.

[FIG. 5] Flowchart showing an example of processing in which the group signature system judges integrity of the signature attached to the message to determine whether or not the signature is associated with a revoked member.

[FIG. 6] Block diagram showing another configuration example of the group signature system.

[FIG. 7] Explanatory diagram showing an example of information stored in the member revocation list storage 402A.

[FIG. 8] Flowchart showing another example of processing in which the group signature system judges integrity of the signature attached to the message to determine whether or not the signature is associated with a revoked member.

[FIG. 9] Flowchart showing still another example of processing in which the group signature system judges integrity of the signature attached to the message to determine whether or not the signature is associated with a revoked member.

[FIG. 10] Explanatory diagram showing another example of information stored in the member revocation list storage 402A.

[FIG. 11] Flowchart showing further another example of processing in which the group signature system judges integrity of the signature attached to the message to determine whether or not the signature is associated with a revoked member.

[FIG. 12] Block diagram showing still another configuration example of the group signature system.

[FIG. 13] Explanatory diagram showing an example of information stored in the member information storage 104B.

[FIG. 14] Explanatory diagram showing an example of information stored in the member revocation list storage 402B.

[FIG. 15] Flowchart showing still another example of processing in which the group signature system judges integrity of the signature attached to the message to determine whether or not the signature is associated with a revoked member.

[FIG. 16] Explanatory diagram showing another example of information stored in the member revocation list storage 402B.

[FIG. 17] Flowchart showing further another example of processing in which the group signature system judges integrity of the signature attached to the message to determine whether or not the signature is associated with a revoked member.

[FIG. 18] Block diagram showing an example of a specific configuration of a group signature system.

DESCRIPTION OF REFERENCE NUMERALS

| | |
|---|---|
| 1 | Group management unit |
| 2 | Signature unit |
| 3 | Verification unit |
| 4 | Member status response unit |
| 101 | Public information opening means |
| 102 | Member registering information storage |
| 103 | Member registering means |
| 104 | Member information storage |
| 105 | Invalid member notifying means |
| 106 | Opening information storage |
| 107 | Signature opening means |
| 108 | Signer identifying means |
| 201 | Group subscribing means |
| 202 | Member registration certificate storage |
| 203 | Group signature key storage |
| 204 | Message input means |
| 205 | Random number generator |
| 206 | Group signature creating means |
| 207 | Group trace information storage |
| 301 | Group signature verifying means |
| 302 | Verification result output means |
| 401 | Invalid member receiving means |
| 402 | Member revocation list storage |
| 403 | Opening information storage |
| 404 | Signature opening means |
| 405 | Member information storage |
| 406 | Signer identifying means |

407    Member status judging means

**Claims**

1.  A group signature system for creating signature data for a message and for authenticating whether the signature data has been created by a device of one of members of a group, the system comprising
    a member status judging device for judging, in response to a request, a member status indicating whether a user of the device having created the signature data is qualified as a valid member of the group at a present point of time.

2.  The group signature system in accordance with claim 1, comprising:

    a group management unit for managing the group by executing member registration processing to register a new member to the group and member revocation processing to revoke qualification as a member of the group member;
    a signature unit for creating, for the message, group signature data, the group signature data as signature data indicating that the message has been created by a device of one of the members of the group; and
    an authentication unit for receiving the message and the group signature data from the signature unit and for authenticating the group signature data thus received.

3.  The group signature system in accordance with claim 2, wherein:

    the authentication unit transmits, if the authentication unit determines that the group signature data has been created by a signature unit of one of the members of the group, a judge request of a member status to a member status judge unit; and
    the member status judge unit judges, at reception of the judge request of a member status from the authentication unit, a member status of the user of the signature unit having created the group signature data, and transmits a judge result of the member status to the authentication unit.

4.  The group signature system in accordance with claim 2 or 3, wherein:

    the group management unit
    issues, to the signature unit of the user who becomes a new member of the group, a member registration certificate indicating that the user is a member of the group,
    stores, as member information, the member registration certificate and ID information corresponding to the signature unit, and
    transmits, to the member status judge unit, ID information of a signature unit of an invalid member as a user whose qualification as a member of the group has been revoked;
    the signature unit
    creates, at subscription of a user to the group, a group signature key as a encryption key to create group signature data, and
    creates group signature data according to a message, a random number, the member registration certificate issued from the group management unit, and the group signature key;
    the authentication unit
    receives the message and the group signature data from the signature unit and
    transmits the message and the group signature data to the member status judge unit to thereby inquire of the member status judge unit, whether the user of the signature unit having created the group signature data has been qualified as a valid member of the group at a present point of time; and
    the member status judge unit
    stores a list of ID information corresponding to the signature unit of the invalid member as a member revocation list which is a list of invalid members,
    receives the message and the group signature data from the authentication unit,
    authenticates the group signature data,
    identifies, by use of opening information as an encryption key to open the group signature data, the ID information of the signature unit having created the group signature data,
    judges, according to the member revocation list and the ID information thus identified, the member status of the user of the signature unit having created the group signature data, and
    transmits the judge result of the member status to the authentication unit.

**5.** The group signature system in accordance with claim 4, wherein:

the group management unit transmits the member registration certificate corresponding to the signature unit of the invalid member to the member status judge unit; and
the member status judge unit
stores a list of member registration certificates corresponding to the signature units of the invalid members as a member revocation list,
receives the message and the group signature data from the authentication unit;
authenticates the group signature data, creates signer identifying information as information capable of identifying which one of the users possesses the signature unit having created the group signature data,
judges, according to the member revocation list and the signer identifying information thus created, the member status of the user of the signature unit having created the group signature data, and
transmits the judge result of the member status to the authentication unit.

**6.** The group signature system in accordance with claim 4 or 5, wherein:

the signature unit creates group signature data by use of a hash value of the message; and
the authentication unit
conducts authentication of the group signature data using the hash value of the message, and
transmits, if the authentication unit determines that the group signature data has been created by a device of one of the members of the group, the hash value of the message and the group signature data to the member status judge unit.

**7.** The group signature system in accordance with claim 4, wherein:

the signature unit
creates a group signature key at subscription of the new user to the group, and
creates, according to the message, the random number, the member registration certificate issued from the group management unit, and the group signature key , group signature data including conversion data as data by use of which the group management unit or the member status judge unit can restore the member registration certificate through a predetermined conversion;
the authentication unit
receives the message and the group signature data from the signature unit and
transmits the conversion data included in the group signature data to the member status judge unit to thereby inquire, of the member status judge unit, whether the user of the signature unit having created the group signature data has been qualified as a valid member of the group at a present point of time; and
the member status judge unit
stores a list of ID information corresponding to the signature unit of the invalid member as a member revocation list,
restores, if the member status judge unit receives the conversion data from the authentication unit, the member registration certificate according to the conversion data, and then identifies the ID information of the signature unit,
judges whether the member revocation list includes the ID information,
determines, if the member status judge unit determines that the member revocation list includes the ID information, that the member status of the user of the signature unit having created the group signature data is invalid at a present point of time,
determines, if the member status judge unit determines that the member revocation list does not include the ID information, that the member status of the user of the signature unit having created the group signature data is valid at a present point of time, and
transmits the judge result of the member status to the authentication unit.

**8.** The group signature system in accordance with claim 2 or 3, wherein:

the group management unit
issues, to a signature unit of the user who becomes a new member of the group, a member registration certificate indicating that the user is a member of the group,
stores, as member information, the member registration certificate and ID information corresponding to the signature unit, and
transmits, to the member status judge unit, a member registration certificate corresponding to a signature unit of a valid member of the group and information indicating that the member status is a valid status, and transmits, to the member status judge unit, a member registration certificate corresponding to a signature unit of an invalid member as a user whose qualification as a member of the group has been revoked and information indicating that the member status is an invalid status;

the signature unit

creates, at subscription of the user to the group, a group signature key as a encryption key to create group signature data, and

creates, according to the message, the random number, the member registration certificate issued from the group management unit, and the group signature key , group signature data including conversion data as data by use of which the group management unit or the member status judge unit can restore the member registration certificate through a predetermined conversion;

the authentication unit

receives the message and the group signature data from the signature unit and

transmits the conversion data included in the group signature data to the member status judge unit to thereby inquire, of the member status judge unit, whether the user of the signature unit having created the group signature data has been qualified as a valid member of the group at a present point of time; and

the member status judge unit

stores a list of pairs each including a member registration certificate and status information indicating that the member status is a valid status or an invalid status with a correspondence established therebetween, as a member revocation list which is a list of invalid members,

receives the conversion data from the authentication unit and then restores the member registration certificate according to the conversion data,

judges, according to status information included in the member revocation list corresponding to the member registration certificate thus restored, the member status of the user of the signature unit having created the group signature data, and

transmits the judge result of the member status to the authentication unit.

9. The group signature system in accordance with claim 4, wherein:

the signature unit

creates a group signature key at subscription of the user to the group, and

creates, according to the message, the random number, the member registration certificate issued from the group management unit, and the group signature key, group signature data including conversion data as data by use of which the group management unit or the member status judge unit can restore the member registration certificate through a predetermined conversion and proof data indicating that the conversion data has been created by the signature unit;

the authentication unit

receives the message and the group signature data from the signature unit and

transmits the conversion data and the proof data included in the group signature data to the member status judge unit to thereby inquire, of the member status judge unit, whether the user of the signature unit having created the group signature data has been qualified as a valid member of the group at a present point of time; and

the member status judge unit

receives the conversion data and the proof data from the authentication unit,

authenticates the proof data and then restores the member registration certificate according to the conversion data,

identifies ID information corresponding to the member registration certificate thus restored,

judges the member status of the user of the signature unit having created the group signature data according to the member revocation list and the ID information thus identified, and

transmits the judge result of the member status to the authentication unit.

10. The group signature system in accordance with claim 9, wherein:

the member status judge unit

receives the conversion data and the proof data from the authentication unit,

authenticates the proof data and then restores the member registration certificate according to the conversion data,

judges the member status of the user of the signature unit having created the group signature data according to the member revocation list and the member registration certificate thus restored, and

45

transmits the judge result of the member status to the authentication unit.

**11.** The group signature system in accordance with claim 4, wherein:

the signature unit
creates a group signature key at subscription of the user to the group, and
creates, according to the message, the random number, the member registration certificate issued from the group management unit, and the group signature key, group signature data including first conversion data as data by use of which the group management unit can restore the member registration certificate through a predetermined conversion, second conversion data as data by use of which the member status judge unit can restore the member registration certificate through a predetermined conversion, first proof data indicating that the second conversion data has been created by the signature unit, and second proof data indicating that the first conversion data and the second conversion data have been created by converting one and the same member registration certificate;
the authentication unit
receives the message and the group signature data from the signature unit and
transmits the second conversion data and the first proof data included in the group signature data to the member status judge unit to thereby inquire, of the member status judge unit, whether the user of the signature unit having created the group signature data has been qualified as a valid member of the group at a present point of time; and
the member status judge unit
receives the second conversion data and the first proof data from the authentication unit,
authenticates the first proof data and then restores the member registration certificate according to the second conversion data,
identifies an ID information corresponding to the member registration certificate thus restored,
judges the member status of the user of the signature unit having created the group signature data according to the member revocation list and the ID information thus identified, and
transmits the judge result of the member status to the authentication unit.

**12.** The group signature system in accordance with claim 11, wherein:

the member status judge unit
receives the second conversion data and the first proof data from the authentication unit,
authenticates the first proof data and then restores the member registration certificate according to the second conversion data,
judges the member status of the user of the signature unit having created the group signature data according to the member revocation list and the member registration certificate thus restored, and
transmits the judge result of the member status to the authentication unit.

**13.** The group signature system in accordance with claim 2 or 3, wherein:

the group management unit
issues, to a signature unit of the user who becomes a new member of the group, a member registration certificate indicating that the user is a member of the group and signer identifying information as information capable of confirming that the group signature data has been created by the signature unit of the user,
stores, as member information, the member registration certificate, the signer confirming information, and ID information corresponding to the signature unit, and
transmits, to the member status judge unit, the signer confirming information corresponding to a signature unit of an invalid member as a user whose qualification as a member of the group has been revoked; and
the signature unit
creates, at subscription of the user to the group, a group signature key as a encryption key to create group signature data, and
creates, according to the message, the random number, the member registration certificate and the signer confirming information issued from the group management unit, and the group signature key, group signature data including conversion data as data capable of restoring the signer confirming information through a predetermined conversion;
the authentication unit
receives the message and the group signature data from the signature unit and

transmits the message and the group signature data to the member status judge unit to thereby inquire, of the member status judge unit, whether the user of the signature unit having created the group signature data has been qualified as a valid member of the group at a present point of time; and
the member status judge unit
stores a list of the signer confirming information corresponding to the signature unit of the invalid member, as a member revocation list which is a list of invalid members,
receives the message and the group signature data from the authentication unit,
authenticates the group signature data,
judges, according to the member revocation list, the member status of the user of the signature unit having created the group signature data, and
transmits the judge result of the member status to the authentication unit.

**14.** The group signature system in accordance with claim 13, wherein:

the group management unit
issues a member registration certificate and signer confirming information to a signature unit of the user who becomes a new member of the group,
stores, as member information, the member registration certificate, the signer confirming information, and ID information corresponding to the signature unit, and
transmits, to the member status judge unit, the signer confirming information corresponding to the signature unit of the valid member of the group and information indicating that the member status is a valid status, and transmits, to the member status judge unit, the signer confirming information corresponding to the signature unit of the invalid member as a user whose qualification as a member of the group has been revoked and information indicating that the member status is an invalid status;
the authentication unit
receives the message and the group signature data from the signature unit and
transmits the conversion data included in the group signature data to the member status judge unit to thereby inquire, of the member status judge unit, whether the user of the signature unit having created the group signature data has been qualified as a valid member of the group at a present point of time; and
the member status judge unit
stores a list of signer confirming information corresponding to the invalid member as a member revocation list, receives the conversion data from the authentication unit,
judges the member status of the user of the signature unit having created the group signature data according to the member revocation list, and
transmits the judge result of the member status to the authentication unit.

**15.** The group signature system in accordance with one of claims 2 to 14, wherein the group management unit comprises signature unit identifying means for identifying the signature unit having created the group signature data.

**16.** A group signature system for creating signature data for a message and for authenticating whether the signature data has been created by a device of one of members of a group, the system comprising:

a signature terminal for creating, for the message, group signature data as signature data indicating that the message has been created by a terminal of one of the members of the group;
an authentication terminal for receiving the group signature data via a communication network from the signature terminal and authenticating the group signature data thus received, and
a member status judging server for judging a member status indicating whether a user of the signature terminal having created the group signature data is qualified as a valid member of the group at a present point of time, wherein:

the authentication terminal transmits, if the authentication terminal determines that the group signature data has been created by a signature terminal of one of the members of the group, a judge request of the member status via the communication network to the member status judging server; and
the member status judging server judges, if the judge request of a member status is received from the authentication terminal, the member status of the user of the signature terminal having created the group signature data.

**17.** A member status judge unit for judging a member status indicating whether a user of a device having created group signature data as signature data indicating that a message has been created by a device of one of members of a group has a qualification as a valid member of the group at a present point of time, comprising:

revocation list storage means for storing a member revocation list as a list of invalid members each of which is a user whose qualification as a member of the group has been revoked;

judge request receiving means for receiving the judge request of the member status via a communication network from an authentication unit which authenticates the group signature data;

status judging means for judging, at reception of the judge request by the judge request receiving means, the member status of the user of the device having created the group signature data according to the member revocation list stored in the revocation list storage means; and

judge result transmitting means for transmitting a judge result of the member status judged by the status judging means via a communication network to the authentication unit.

18. The member status judge unit in accordance with claim 17, wherein:

the revocation list storage means stores as a member revocation list a list of ID information corresponding to a device of an invalid member;

the judge request receiving means receives, as the judge request of the member status, the message and the group signature data; and

the status judging means

identifies the ID information of the device having the group signature data by use of the message and the group signature data received by the judge request receiving means and opening information as an encryption key to open the group signature data and

judges the member status of the user of the device having created the group signature data according to the member revocation list stored in the revocation list storage means and the ID information thus identified.

19. The member status judge unit in accordance with claim 17, wherein:

the revocation list storage means stores as a member revocation list a list wherein a member registration certificate which corresponds to the device of an invalid member and which indicates that the user is a member of the group and status information indicating that the member status is a valid status or an invalid status are stored with a correspondence established therebetween;

the judge request receiving means receives from the authentication unit, as the judge request of the member status, conversion data as data capable of restoring the member registration certificate through a predetermined conversion; and

the status judging means

creates a member registration certificate according to the conversion data received by the judge request receiving means, and

judges the member status of the user of the device having created the group signature data according to status information corresponding to the member registration certificate thus created, the status information being selected from the status information included in the member revocation list stored in the revocation list storage means.

20. The member status judge unit in accordance with claim 17, wherein:

the revocation list storage means stores as a member revocation list a list of signer confirming information which corresponds to the device of an invalid member and which is information capable of confirming that the group signature data has been created by the device of a particular user;

the judge request receiving means receives, from the authentication unit, the message and the group signature data as the judge request of the member status; and

the status judging means judges the member status of the user of the device having created the group signature data according to the message and the group signature data received by the judge request receiving means and the signer confirming information included in the revocation member list stored in the revocation list storage means.

21. A group signature method of creating signature data for a message and authenticating whether the signature data has been created by a device of one of members of a group, comprising:

creating, by a signature unit, for creating signature data, group signature data as signature data indicating that the message has been created by a device of one of the members of the group;

transmitting, by the signature unit, the group signature data thus created via a communication network to an authentication unit which authenticates the signature data;

authenticating, by the authentication unit, the group signature data received from the signature unit;

transmitting by the authentication unit, if the authentication unit determines that the group signature data has been created by a signature unit of one of the members of the group, a judge request of the member status via a communication network to a member status judging server which judges a member status indicating whether the user of the signature unit having created the group signature data has a qualification as a valid member of the group at a present point of time; and

judging by member status judging server, if the member status judging server receives the judge request of the member status from the authentication unit, the member status of the user of the signature unit having created the group signature data.

**22.** The group signature method in accordance with claim 21, further comprising:

storing, by a member status judge unit, a list of ID information corresponding to a device of an invalid member as a member revocation list which is a list of invalid members as a user whose qualification as a member of the group has been revoked;

transmitting, by the signature unit, the message and the group signature data via a communication network to the authentication unit;

transmitting, by the authentication unit, if the authentication unit determines that the group signature data has been created by a signature unit of one of members of the group, the message and the group signature data as the judge request of the member status via a communication network to the member status judge unit;

identifying, by the member status judge unit, ID information of the signature unit having created the group signature data, by use of the message and the group signature data received from the authentication unit and opening information as an encryption key to open the group signature data; and

judging by the member status judge unit the member status of the user of the signature unit having created the group signature data, according to the member revocation list thus stored and the ID information thus identified.

**23.** The group signature method in accordance with claim 21, further comprising:

storing, by the member status judge unit, a list of a member registration certificate which corresponds to a device of an invalid member and which indicates that the user is a member of the group and status information indicating that the member status is a valid status or an invalid status with a correspondence established therebetween, the list being a member revocation list which is a list of invalid members as users whose qualification as a member of the group has been revoked;

transmitting, by the authentication unit, if the authentication unit determines that the group signature data has been created by a signature unit of one of members of the group, conversion data as data capable of restoring the member registration certificate through a predetermined conversion via a communication network to the member status judge unit, as the judge request of the member status;

creating, by the member status judge unit, a member registration certificate according to the conversion data received from the authentication unit; and

judging, by the member status judge unit, the member status of the user of the signature unit having created the group signature data according to status information corresponding to the member registration certificate thus created, the status information being selected from the status information included in the member revocation list thus stored.

**24.** The group signature method in accordance with claim 21, further comprising:

storing, by the member status judge unit, as a member revocation list a list of signer confirming information which corresponds to the device of an invalid member and which is information capable of confirming that the group signature data has been created by the device of a particular user, the member revocation list being a list of invalid members as users whose qualification as a member of the group has been revoked;

transmitting, by the signature unit, the message and the group signature data via a communication network to the authentication unit;

transmitting, by the authentication unit, if the authentication unit determines that the group signature data has been created by a signature unit of one of members of the group, the message and the group signature data as the judge request of the member status via a communication network to the member status judge unit; and judging, by the member status judge unit, the member status of the user of the signature unit having created the group signature data according to the message and the group signature data received from the authentication unit and the signer confirming information included in the invalid member list thus stored.

25. A computer program product for judging a member status indicating whether a user of a device having created group signature data as signature data indicating that a message has been created by a device of one of members of a group has a qualification as a valid member of the group at a present point of time, the program causing a computer, comprising revocation list storage means for storing a member revocation list as a list of invalid members each of which is a user whose qualification as a member of the group has been revoked, to execute;
receiving a judge request of the member status via a communication network from an authentication unit which authenticates the group signature data;
judging, if the judge request is received from the authentication unit, the member status of the user of the device having created the group signature data according to the member revocation list stored in the revocation list storage means; and
transmitting the judge result of the member status thus judged via a communication network to the authentication unit.

26. The computer program product in accordance with claim 25,
the program causing a computer, comprising revocation list storage means for storing as a member revocation list a list of ID information corresponding to devices of invalid members, to execute;
receiving from the authentication unit, the message and the group signature data as a judge request of the member status;
identifying the ID information of the device having created the group signature data by use of the message and the group signature data received from the authentication unit and opening information as an encryption key to open the group signature data; and
judging the member status of the user of the device having created the group signature data according to the member revocation list stored in the revocation list storage means and the ID information thus identified.

27. The computer program product in accordance with claim 25,
the program causing a computer, comprising revocation list storage means for storing as a member revocation list a list wherein a member registration certificate which corresponds to the device of an invalid member and which indicates that the user is a member of the group and status information indicating that the member status is a valid status or an invalid status are stored with a correspondence established therebetween, to execute;
receiving from the authentication unit, as the judge request of the member status, conversion data which is data capable of restoring the member registration certificate through a predetermined conversion;
creating a member registration certificate according to the conversion data received from the authentication unit; and
judging the member status of the user of the device having created the group signature data according to status information corresponding to the member registration certificate thus created, the status information being selected from the status information included in the member revocation list stored in the revocation list storage means.

28. The computer program product in accordance with claim 25,
the program causing a computer, comprising the revocation list storage means for storing as a member revocation list a list of signer confirming information which corresponds to the device of an invalid member and which is information capable of confirming that the group signature data has been created by the device of a particular user, to execute;
receiving, from the authentication unit, the message and the group signature data as the judge request of the member status; and
judging the member status of the user of the device having created the group signature data according to the message and the group signature data received from the authentication unit and the signer confirming information included in the revocation member list stored in the revocation list storage means.

EP 1 786 139 A1

# F I G. 1

GROUP MANAGEMENT UNIT — 1

MEMBER REGISTRATION CERTIFICATE →

SIGNATURE UNIT — 2

MEMBER REVOCATION LIST ↓

MESSAGE / GROUP SIGNATURE DATA ↓

MEMBER STATUS RESPONSE UNIT — 4

MEMBER STATUS INQUIRY ←

MEMBER STATUS RESPONSE →

VERIFICATION UNIT — 3

# F I G. 2

EP 1 786 139 A1

EP 1 786 139 A1

# F I G. 3

~104

MEMBER INFORMATION STORAGE

| MEMBER REGISTRATION CERTIFICATE 1 | ID INFORMATION OF SIGNATURE UNIT 1 |
|---|---|
| MEMBER REGISTRATION CERTIFICATE 2 | ID INFORMATION OF SIGNATURE UNIT 2 |
| ⋮ | ⋮ |
| MEMBER REGISTRATION CERTIFICATE n | ID INFORMATION OF SIGNATURE UNIT n |

# F I G. 4

~402

MEMBER REVOCATION LIST STORAGE

| ID INFORMATION $i_1$ |
|---|
| ID INFORMATION $i_2$ |
| ⋮ |
| ID INFORMATION $i_k$ |

53

# F I G. 5

PUBLIC INFORMATION ⟋4

MESSAGE / GROUP SIGNATURE DATA/ PUBLIC INFORMATION ⟋3

**MEMBER STATUS RESPONSE UNIT**

⟋404

SIGNATURE OPENING MEANS

YES ⟋S103
SIGNATURE INTEGRITY ?

S105
NO S104

⟋403
OPENING INFORMATION STORAGE

CREATE SIGNER IDENTIFYING INFORMATION

UNKNOWN

406 SIGNER IDENTIFYING INFORMATION

SIGNER IDENTIFYING MEANS

⟋405
MEMBER INFORMATION STORAGE

IDENTIFY SIGNER ID ⟋S106

ID INFORMATION

⟋402
MEMBER REVOCATION LIST STORAGE

ID INFORMATION PRESENT IN MEMBER REVOCATION LIST ? ⟋S107

S109
NO
YES

VALID S108 INVALID

407⟋

MEMBER STATUS JUDGING MEANS

**VERIFICATION UNIT**

⟋301
SIGNATURE INTEGRITY ? NO

YES ⟋S102

MESSAGE / GROUP SIGNATURE DATA

TRANSMIT DATA

GROUP SIGNATURE VERIFYING MEANS

⟋302
MEMBER STATUS
VERIFICATION RESULT OUTPUT MEANS

RECEIVE MEMBER STATUS ⟋S110

⟋S111
MEMBER STATUS VALID ? NO

YES

ACCEPTANCE

REJECTION

EP 1 786 139 A1

F I G. 6

MESSAGE / GROUP SIGNATURE DATA

**SIGNATURE UNIT** 2

- 201 GROUP SUBSCRIBING MEANS
- 202 MEMBER REGISTRATION CERTIFICATE STORAGE
- 203 GROUP SIGNATURE KEY STORAGE
- 206 GROUP SIGNATURE GENERATING MEANS
- 204 MESSAGE INPUT MEANS
- 205 RANDOM NUMBER GENERATOR

**GROUP MANAGEMENT UNIT** 1

- 101 PUBLIC INFORMATION DISCLOSING MEANS
- 102 MEMBER REGISTRATION INFORMATION STORAGE
- 103 MEMBER REGISTRATION MEANS
- 104 MEMBER INFORMATION STORAGE
- 105A REVOKED MEMBER NOTIFYING MEANS
- 106 OPENING INFORMATION STORAGE
- 107 SIGNATURE OPENING MEANS
- 108 SIGNER IDENTIFYING MEANS

MESSAGE / GROUP SIGNATURE DATA

SIGNATURE UNIT

**VERIFICATION UNIT** 3

- 301 GROUP SIGNATURE VERIFYING MEANS
- 302 VERIFICATION RESULT OUTPUT MEANS

VERIFICATION
ACCEPTANCE   REJECTION

**MEMBER STATUS RESPONSE UNIT** 4

- 401A REVOKED MEMBER RECEIVING MEANS
- 402A MEMBER REVOCATION LIST STORAGE
- 403 OPENING INFORMATION STORAGE
- 404A SIGNATURE OPENING MEANS
- 407A MEMBER STATUS JUDGING MEANS

MESSAGE / GROUP SIGNATURE DATA

55

# F I G. 7

$\sim$ 402A

MEMBER REVOCATION LIST STORAGE

| MEMBER REGISTRATION CERTIFICATE $i_1$ |
|---|
| MEMBER REGISTRATION CERTIFICATE $i_2$ |
| $\vdots$ |
| MEMBER REGISTRATION CERTIFICATE $i_k$ |

# FIG. 8

EP 1 786 139 A1

# F I G. 9

MESSAGE / GROUP SIGNATURE DATA/
PUBLIC INFORMATION

PUBLIC INFORMATION

**MEMBER STATUS RESPONSE UNIT**

404

SIGNATURE
OPENING MEANS

403
OPENING
INFORMATION
STORAGE

CREATE SIGNER
IDENTIFYING
INFORMATION — S303

SIGNER IDENTIFYING
MEANS

405
MEMBER
INFORMATION
STORAGE

S304 — IDENTIFY
SIGNER ID ?
YES        NO

S305

406 — TRANSMIT SIGNER ID    UNKNOWN

S306

ID INFORMATION

402
MEMBER
REVOCATION
LIST STORAGE

S107
ID
INFORMATION PRESENT IN
MEMBER REVOCATION LIST
?
NO        YES

S109        S108

VALID        INVALID

407 —

MEMBER STATUS JUDGING MEANS

**VERIFICATION UNIT**

301

S101
SIGNATURE
INTEGRITY ?        NO

YES        S302

CONVERSION DATA        TRANSMIT DATA

GROUP SIGNATURE VERIFYING MEANS

302

MEMBER
STATUS        VERIFICATION RESULT OUTPUT MEANS

RECEIVE MEMBER
STATUS — S110

S111
MEMBER STATUS
VALID ?        NO

YES

ACCEPTANCE        REJECTION

EP 1 786 139 A1

58

# F I G. 10

~402A

| MEMBER REVOCATION LIST STORAGE | |
|---|---|
| MEMBER REGISTRATION CERTIFICATE 1 | "INVALID" |
| MEMBER REGISTRATION CERTIFICATE 2 | " VALID" |
| ⋮ | ⋮ |
| MEMBER REGISTRATION CERTIFICATE n | "INVALID" |

# F I G. 11

EP 1 786 139 A1

# F I G. 12

EP 1 786 139 A1

**GROUP MANAGEMENT UNIT**

101
PUBLIC INFORMATION DISCLOSING MEANS

102
MEMBER REGISTRATION INFORMATION STORAGE

106
OPENING INFORMATION STORAGE

103B
MEMBER REGISTRATION MEANS

107
SIGNATURE OPENING MEANS

104B
MEMBER INFORMATION STORAGE

108
SIGNER IDENTIFYING MEANS

105B
REVOKED MEMBER NOTIFYING MEANS

MESSAGE / GROUP SIGNATURE DATA

SIGNATURE UNIT

1

**SIGNATURE UNIT**

201B
GROUP SUBSCRIBING MEANS

202
MEMBER REGISTRATION CERTIFICATE STORAGE

MEMBER TRACE INFORMATION STORAGE

203
GROUP SIGNATURE KEY STORAGE

204
MESSAGE INPUT MEANS

206B
GROUP SIGNATURE GENERATING MEANS

205
RANDOM NUMBER GENERATOR

2

MESSAGE / GROUP SIGNATURE DATA

**MEMBER STATUS RESPONSE UNIT**

4

REVOKED MEMBER RECEIVING MEANS
401B

MEMBER REVOCATION LIST STORAGE
402B

MEMBER STATUS JUDGING MEANS
407B

**VERIFICATION UNIT**

GROUP SIGNATURE VERIFYING MEANS
301B

VERIFICATION RESULT OUTPUT MEANS
302

3

MESSAGE / GROUP SIGNATURE DATA

ACCEPTANCE      REJECTION

EP 1 786 139 A1

F I G. 13

~104B

MEMBER INFORMATION STORAGE

| MEMBER REGISTRATION CERTIFICATE 1 | MEMBER TRACE INFORMATION 1 | ID INFORMATION OF SIGNATURE UNIT 1 |
|---|---|---|
| MEMBER REGISTRATION CERTIFICATE 2 | MEMBER TRACE INFORMATION 2 | ID INFORMATION OF SIGNATURE UNIT 2 |
| ⋮ | ⋮ | ⋮ |
| MEMBER REGISTRATION CERTIFICATE n | MEMBER TRACE INFORMATION n | ID INFORMATION OF SIGNATURE UNIT n |

F I G. 14

~402B

MEMBER REVOCATION LIST STORAGE

| MEMBER TRACE INFORMATION $i_1$ |
|---|
| MEMBER TRACE INFORMATION $i_2$ |
| ⋮ |
| MEMBER TRACE INFORMATION $i_k$ |

# F I G. 15

PUBLIC INFORMATION 4

MESSAGE / GROUP SIGNATURE DATA/
PUBLIC INFORMATION 3

MEMBER STATUS RESPONSE UNIT

VERIFICATION UNIT

MEMBER STATUS JUDGING MEANS 407B

S103
SIGNATURE INTEGRITY ?
YES
NO

S505

402B
MEMBER REVOCATION LIST STORAGE

READ MEMBER TRACE INFORMATION

UNKNOWN
S104

301B
S101
SIGNATURE INTEGRITY ?
NO
YES S102

MESSAGE / GROUP SIGNATURE DATA

TRANSMIT DATA

GROUP SIGNATURE VERIFYING MEANS

S506
MEMBER TRACE INFORMATION PRESENT ?
NO
YES

S508
CONVERT MEMBER TRACE INFORMATION

302
MEMBER STATUS
VERIFICATION RESULT OUTPUT MEANS

RECEIVE MEMBER STATUS S110

S509
NO
EXCHANGE DATA MATCHING ?
YES S510

S507

S111
MEMBER STATUS VALID ?
NO
YES

INVALID

VALID

ACCEPTANCE

REJECTION

EP 1 786 139 A1

63

# F I G. 16

~402B

| MEMBER REVOCATION LIST STORAGE | |
|---|---|
| MEMBER TRACE INFORMATION 1 | "INVALID" |
| MEMBER TRACE INFORMATION 2 | " VALID" |
| ⋮ | ⋮ |
| MEMBER TRACE INFORMATION n | "INVALID" |

# F I G. 17

EP 1 786 139 A1

MESSAGE / GROUP SIGNATURE DATA/
PUBLIC INFORMATION

MEMBER STATUS RESPONSE UNIT

VERIFICATION UNIT

MEMBER STATUS JUDGING MEANS — 407B

301B

MEMBER
REVOCATION
LIST STORAGE — 402B

READ MEMBER TRACE INFORMATION — S505

SIGNATURE INTEGRITY ? — S101   NO

MEMBER TRACE INFORMATION PRESENT ? — S506   NO

YES — S508

YES — S602

CONVERSION DATA

TRANSMIT DATA — S602

CONVERT MEMBER TRACE INFORMATION

UNKNOWN

S509   S613

GROUP SIGNATURE VERIFYING MEANS

EXCHANGE DATA MATCHING ? — NO

MEMBER STATUS

VERIFICATION RESULT OUTPUT MEANS — 302

YES

RECEIVE MEMBER STATUS — S110

MEMBER TRACE INFORMATION STATUS VALID ? — S610   YES

MEMBER STATUS VALID ? — S111   NO

NO — S612

S611

YES

INVALID

VALID

ACCEPTANCE

REJECTION

EP 1 786 139 A1

# F I G. 18

```
GROUP
MANAGEMENT    ~1A
SERVER

USER TERMINAL
(GROUP MEMBER)   ~2A

              NETWORK   ~100

MEMBER STATUS
RESPONSE      ~4A
SERVER

AUTHENTICATION
TERMINAL       ~3A
```

66

## INTERNATIONAL SEARCH REPORT

| | International application No. |
|---|---|
| | PCT/JP2005/014783 |

**A. CLASSIFICATION OF SUBJECT MATTER**
*H04L9/32*(2006.01)

According to International Patent Classification (IPC) or to both national classification and IPC

**B. FIELDS SEARCHED**

Minimum documentation searched (classification system followed by classification symbols)
*H04L9/32*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
JST-plus, Group Signature

**C. DOCUMENTS CONSIDERED TO BE RELEVANT**

| Category* | Citation of document, with indication, where appropriate, of the relevant passages | Relevant to claim No. |
|---|---|---|
| X <br> Y | "Access Ken no Mukoka ga Yoi na Access Seigyo o Jitsugen suru Group Shomei", Computer Security Symposium '98 Ronbunshu, 29 October, 1998 (29.10.98), pages 135 to 140, particularly, 1 Introduction, 2 Proposed group signature scheme | 1,2,15 <br> 3-14,16-28 |
| Y | "[e-Japan] Shakai o Sasaeru Denshi Shomeisho, Security Kakuho ni '1-mai 4-yaku' Yuko/Muko o Sokuza ni Check", Nikkei Communications, 05 March, 2001 (05.03.01), No.337, pages 106 to 113, particularly, pages 109 to 111 | 3-14,16-28 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 December, 2005 (06.12.05) | 20 December, 2005 (20.12.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Efficient Group Signature Schemes for Large Groups. **J. CAMENISCH ; M. STADLER.** In Advances in Cryptology CRYPTO '97. Springer-Verlag, 1997, vol. 1294, 410-424
- A Practical and Provable Secure Coalition-Resistant Group Signature Scheme. **G. ATENIESE ; J. CAMENISCH ; M. JOYE ; G. TSUDIK.** In Advances in Cryptology - CRYPTO 2000. Springer-Verlag, 2000, vol. 1880, 255-270

- Dynamic Accumulators and Application to Efficient Revocation of Anonymous Credentials. **J. CAMENISCH ; A. LYSYANSKAYA.** In Advances in Cryptology - CRYPTO 2002. Springer-Verlag, 2002, vol. 2442, 61-76